(19) Europäisches Patentamt
European Patent Office
Office européen des brevets

(11) EP 4 723 738 A1

(12) EUROPEAN PATENT APPLICATION
published in accordance with Art. 153(4) EPC

(43) Date of publication:
08.04.2026 Bulletin 2026/15

(51) International Patent Classification (IPC):
H04W 36/08 (2009.01)     H04W 36/00 (2009.01)
H04W 84/04 (2009.01)

(21) Application number: 24807448.6

(22) Date of filing: 10.05.2024

(52) Cooperative Patent Classification (CPC):
H04W 36/00; H04W 36/08; H04W 84/04

(86) International application number:
PCT/KR2024/006319

(87) International publication number:
WO 2024/237573 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.05.2023 KR 20230061839

(71) Applicant: Samsung Electronics Co., Ltd.
Suwon-si, Gyeonggi-do 16677 (KR)

(72) Inventors:
• PARK, Sungjin
  Suwon-si, Gyeonggi-do 16677 (KR)
• KIM, Youngbum
  Suwon-si, Gyeonggi-do 16677 (KR)
• RYU, Hyunsuk
  Suwon-si, Gyeonggi-do 16677 (KR)
• PARK, Kyoungmin
  Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) METHOD AND APPARATUS FOR PERFORMING HANDOVER IN SATELLITE COMMUNICATION SYSTEM

(57) The present disclosure relates to a 5G or 6G communication system for supporting a higher data transmission rate. A method for a terminal in a wireless communication system, according to an embodiment of the present invention, comprises the steps of: receiving, from a source base station, a radio resource control (RRC) message indicating a random access channel (RACH)-less handover; identifying a resource for transmission of a physical uplink shared channel (PUSCH); and in the resource for transmission of the PUSCH, transmitting the PUSCH to a target base station, wherein if the resource for transmission of the PUSCH is allocated on the basis of a physical downlink control channel (PDCCH), the RRC message may include information indicating a first SS/PBCH block quasi co-located with a demodulation reference signal (DMRS) antenna port associated with the PDCCH.

FIG. 1

EP 4 723 738 A1

**Description**

**[Technical Field]**

The disclosure relates to a communication system, and more particularly, to a method for performing a handover in a satellite communication system.

**[Background Art]**

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for largecapacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multiantenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to optimize non-public networks.

In the late 2010s and 2020s, the drastic reduction in satellite launch costs has resulted in an increase in providers trying to provide communication services through satellites. Accordingly, satellite networks have emerged as next-generation network systems that complement existing terrestrial networks. Satellite networks do not provide a user experience comparable to that of a terrestrial network, but has the advantage of being able to provide communication services in areas where it is difficult to establish a terrestrial network or in a disaster situation, and has secured economic feasibility due to the recent rapid decrease in satellite launch costs as explained above. Furthermore, several companies and 3GPP standards organizations are also promoting direct communication between smartphones and satellites.

**[Disclosure of Invention]**

**[Technical Problem]**

The disclosure is to provide an apparatus and a method capable of effectively providing services in a wireless communication system such as a satellite communication system.

**[Solution to Problem]**

A method of a terminal in a wireless communication system, according to an embodiment of the disclosure, may include receiving, from a source base station, a radio resource control (RRC) message indicating a random access channel (RACH)-less handover, identifying a resource for transmission of a physical uplink shared channel (PUSCH), and transmitting the PUSCH to a target base station through the resource for transmission of the PUSCH, wherein in case that the resource for transmission of the PUSCH is allocated based on a physical downlink control channel (PDCCH), the RRC message may include information indicating a first SS/PBCH block that is quasi co-located (QCL) with a demodulation reference signal (DMRS) antenna port associated with the PDCCH.

According to an embodiment, in case that the resource for transmission of the PUSCH is allocated based on a PDCCH, a downlink path loss value related to PUSCH transmission power may be identified, based on a reference signal associated with the first SS/PBCH block.

According to an embodiment, in case that the resource for the PUSCH transmission is allocated based on the RRC message, the RRC message may include information indicating a second SS/PBCH block associated with the resource for the PUSCH transmission.

According to an embodiment, in case that the resource for transmission of the PUSCH is allocated based on the RRC message, a downlink path loss value related to PUSCH transmission power may be identified, based on a reference signal associated with the second SS/PBCH block.

A method of a source base station in a wireless communication system according to an embodiment of the disclosure may include transmitting a handover request message to a target base station, receiving a handover request acceptance message from the target base station, and transmitting a radio resource control (RRC) message indicating a random access channel (RACH)-less handover to a UE, wherein, when a resource for physical uplink shared channel (PUSCH) transmission of the UE is allocated based on a physical downlink control channel (PDCCH), the RRC message may include information indicating a first SS/PBCH block that is quasi co-located (QCL) with a demodulation reference signal (DMRS) antenna port associated with the PDCCH.

A method of a target base station in a wireless communication system according to an embodiment of the disclosure may include receiving a handover request message from a source base station, and transmitting, to the source base station, a handover request acceptance message associated with a radio resource control (RRC) message indicating a random access channel (RACH)-less handover, wherein when a resource for a physical uplink shared channel (PUSCH) transmission of the UE is allocated based on a physical downlink control channel (PDCCH), the RRC message may include information indicating a first SS/PBCH block that is quasi co-located (QCL) with a demodulation reference signal (DMRS) antenna port associated with the PDCCH.

A UE of a wireless communication system according to an embodiment of the disclosure may include a transceiver and a controller configured to receive, from a source base station, an radio resource control (RRC) message indicating a random access channel (RACH)-less handover, identify a resource for physical uplink shared channel (PUSCH) transmission, and transmit the PUSCH to a target base station through the resource for PUSCH transmission, wherein, when the resource for PUSCH transmission is allocated based on a physical downlink control channel (PDCCH), the RRC message may include information indicating a first SS/PBCH block that is quasi co-located (QCL) with a demodulation reference signal (DMRS) antenna port associated with the PDCCH.

A source base station of a wireless communication system according to an embodiment of the disclosure may include a transceiver and a controller configured to transmit a handover request message to a target base station, receive a handover request acceptance message from the target base station, and transmit a radio resource control (RRC) message indicating a random access channel (RACH)-less handover to a UE, wherein, when a resource for physical uplink shared channel (PUSCH) transmission of the UE is allocated based on a physical downlink control channel (PDCCH), the RRC message may include information indicating a first SS/PBCH block that is quasi co-located (QCL) with a demodulation reference signal (DMRS) antenna port associated with the PDCCH.

A target base station of a wireless communication system according to an embodiment of the disclosure may include a transceiver and a controller configured to receive a handover request message from a source base station, and transmit, to the source base station, a handover request acceptance message associated with a radio resource control (RRC) message indicating a random access channel (RACH)-less handover, wherein when a resource for a physical uplink shared channel (PUSCH) transmission of the UE is allocated based on a physical downlink control channel (PDCCH), the RRC message may include information indicating a first SS/PBCH block that is quasi co-located (QCL) with a demodulation reference signal (DMRS) antenna port associated with the PDCCH.

**[Advantageous Effects of Invention]**

According to an embodiment of the disclosure, services can be effectively provided in a wireless communication system such as a satellite communication system.

**[Brief Description of Drawings]**

FIG. 1 illustrates a basic structure of a time-frequency domain, which is a radio resource domain used to transmit downlink or uplink data or control channels, in an NR system according to an embodiment of the disclosure.

FIG. 2 is a diagram illustrating that a synchronization signal (SS) and a physical broadcast channel (PBCH) in an NR system are mapped to frequency and time domains according to an embodiment of the disclosure.

FIG. 3 is a diagram illustrating symbols in which an SS/PBCH block may be transmitted according to subcarrier spacings according to an embodiment of the disclosure.

FIG. 4 illustrates an example of a control resource set (CORESET) used to transmit a downlink control channel in a 5G wireless communication system according to an embodiment of the disclosure.

FIG. 5 is a diagram schematically illustrating an example of a message transferred from a MAC layer to a physical layer in a downlink in a communication system according to an embodiment of the disclosure.

FIG. 6 is a diagram schematically illustrating an example of a message transferred from a MAC layer to a physical layer in an uplink in a communication system according to an embodiment of the disclosure.

FIG. 7 is a diagram illustrating an example of a process in which one transport block (TB) is divided into multiple code blocks (CBs) and a CRC is added according to an embodiment of the disclosure.

FIG. 8 is a diagram illustrating a user equipment (UE) processing time according to a timing advance when a UE receives a first signal and transmits a second signal in response thereto, in the 5G or NR system according to an embodiment of the disclosure.

FIG. 9 is a diagram illustrating an example of scheduling multiple pieces of data (e.g., TBs) according to slots and transmitting the data, receiving a HARQ-ACK feedback with respect to the data, and performing retransmission according to the feedback, in a 5G system according to an embodiment of the disclosure.

FIG. 10 is a diagram illustrating an example of a communication system using a satellite according to an embodiment of the disclosure.

FIG. 11 is a diagram illustrating a revolution period of a communication satellite around the earth according to an altitude or height of the satellite according to an embodiment of the disclosure.

FIG. 12 is a diagram illustrating a concept of satellite-UE direct communication according to an embodiment of the disclosure.

FIG. 13 is a diagram illustrating a utilization scenario of satellite-UE direct communication according to an embodiment of the disclosure.

FIG. 14 is a diagram illustrating an example of calculating an expected data transfer rate (or throughput) in an uplink when a low earth orbit (LEO) satellite at an altitude of 1200 km and a UE on the ground perform direct communication according to an embodiment of the disclosure.

FIG. 15 is a diagram illustrating an example of calculating an expected data transfer rate (or throughput) in an uplink when an GEO satellite at an altitude of 35,786 km and a UE on the ground perform direct communication according to an embodiment of the disclosure.

FIG. 16 is a diagram illustrating a path loss value according to a path loss model between a UE and a satellite, and a path loss according to a path loss model between the UE and a terrestrial network communication base station according to an embodiment of the disclosure.

FIG. 17 is a diagram illustrating equations and results for calculating an amount of Doppler shift experienced by a signal which is transmitted from a satellite is received by a user of a UE on the ground according to an altitude and a location of the satellite, and a location of the user of the UE on the ground according to an embodiment of the disclosure.

FIG. 18 is a diagram illustrating a satellite speed calculated at a satellite altitude according to an embodiment of the disclosure.

FIG. 19 is a diagram illustrating Doppler shift experienced by different UEs in one beam transmitted by a satellite to the ground according to an embodiment of the disclosure.

FIG. 20 is a diagram illustrating a difference in Doppler shift which occurs within one beam according to a location of a satellite determined by an elevation angle according to an embodiment of the disclosure.

FIG. 21 is a diagram illustrating a delay time from a UE to a satellite and a round trip delay time among the UE, the satellite, and a base station according to a location of the satellite determined according to an elevation angle according to an embodiment of the disclosure.

FIG. 22 is a diagram illustrating a maximum difference value of a round trip delay time which varies according to a location of a user within one beam according to an embodiment of the disclosure.

FIG. 23 is a diagram illustrating an example of an information structure (MAC payload) of an RAR according to an embodiment of the disclosure.

FIG. 24 is a diagram illustrating an example of a relationship between a PRACH preamble configuration resource and an RAR reception time point in an LTE system according to an embodiment of the disclosure.

FIG. 25 is a diagram illustrating an example of a relationship between a PRACH preamble configuration resource and an RAR reception time point in a 5G NR system according to an embodiment of the disclosure.

FIG. 26 is a diagram illustrating an example of downlink frame timing and uplink frame timing of a UE according to an embodiment of the disclosure.

FIG. 27 is a diagram illustrating an example of continuous movement of a satellite with respect to a UE located on the ground or on the earth as the satellite revolves around the earth along a satellite orbit according to an embodiment of the disclosure.

FIG. 28 is a diagram illustrating an example of a structure of a satellite according to an embodiment of the disclosure.

FIG. 29 is a diagram illustrating an example of a process in which a UE determines an $N_{TA}$ from an initial access according to an embodiment of the disclosure.

FIG. 30 is a diagram illustrating an example of a process in which a UE determines an $N_{TA}$, $N_{TA,UE\text{-}specific}$, $N_{TA,common}$ from an initial access according to an embodiment of the disclosure.

FIG. 31 is a diagram schematically illustrating another example of an operation process of a UE in a communication system according to an embodiment of the disclosure.

FIG. 32 is a diagram schematically illustrating still another example of an operation process of the UE in a communication system according to an embodiment of the disclosure.

FIG. 33 is a diagram illustrating an example of an operation of a base station for TA value reporting of a UE according to an embodiment of the disclosure.

FIG. 34 is a diagram illustrating an example of an operation of a UE for TA value reporting of the UE according to an embodiment of the disclosure.

FIG. 35 is a diagram illustrating an example of a difference in a radio propagation delay time in a terrestrial network and a satellite network according to an embodiment of the disclosure.

FIG. 36 is a flowchart for a UE to perform satellite network access according to an embodiment. FIG. 37 is a diagram illustrating a handover procedure of a UE according to an embodiment.

FIG. 38 is a diagram illustrating a handover procedure of a UE according to an embodiment.

FIG. 39 is a block diagram illustrating an internal structure of a UE according to an embodiment of the disclosure.

FIG. 40 is a block diagram illustrating the internal structure of a satellite according to an embodiment of the disclosure.

FIG. 41 is a block diagram illustrating an internal structure of a base station according to an embodiment of the disclosure.

**[Mode for the Invention]**

New radio (NR) access technology, which refers to new 5G communication, is designed to enable free multiplexing of various services in time and frequency resources, and accordingly, waveforms/numerologies, reference signals, and the like may be dynamically or freely allocated according to needs of the corresponding services. In order to provide an optimal service to a terminal in communication, it is important to provide optimized data transmission through measurements of a channel quality and an interference amount, and accordingly it is essential to accurately measure a channel state. However, unlike the 4G communication in which channel and interference characteristics do not greatly vary according to frequency resources, a 5G channel has channel and interference characteristics greatly varying according to services, and thus there is a need to support subsets in terms of frequency resource group (FRG) that enable separate measurements of channel and interference characteristics. Service types supported in the NR system may be categorized into enhanced mobile broadband (eMBB), massive machine type communications (mMTC), and ultra-reliable and low-latency communications (URLLC). The eMBB may be considered a service that targets high-speed transmission of highcapacity data, the mMTC may be considered a service that targets minimized power consumption for a terminal and access of multiple terminals, and the URLLC may be considered as a service that targets high reliability and low latency. Different requirements may be applied depending on the type of service applied to a terminal.

As described above, a plurality of services may be provided to a user in a communication system, and in order to provide such a plurality of services to a user, a method for providing each service within the same time period according to the characteristics and an apparatus using the same are required.

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is evolving from the initial voice-based service to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services. As 5th generation wireless communication systems, 5G or new radio (NR) communication standards are also under discussion.

As a typical example of the broadband wireless communication system, the NR system employs an orthogonal frequency division multiplexing (OFDM) scheme in a downlink (DL) and an uplink (UL). However, more specifically, the NR system employs a cyclicprefix OFDM (CP-OFDM) scheme in a downlink (DL) and employs two schemes, that is, CP-OFDM and discrete Fourier transform spreading OFDM (DFT-S-OFDM) schemes in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

The NR system employs a hybrid automatic repeat request (HARQ) scheme in which, when decoding is unsuccessful at the initial transmission, the corresponding data is retransmitted in a physical layer. In the HARQ scheme, when a receiver fails to accurately decode data, the receiver transmits information (negative acknowledgement: NACK) informing a transmitter of the unsuccessful decoding and thus the transmitter may retransmit the corresponding data in the physical layer. The receiver may increase data reception performance by combining the data retransmitted by the transmitter with the data the decoding of which has previously failed. Also, when the receiver accurately decodes data, the receiver transmits information (acknowledgement: ACK) informing the transmitter of the successful decoding and thus the transmitter may transmit new data.

According to an embodiment of the disclosure, in case that a UE tries to connect to a base station through a satellite, there may be a large delay time for radio waves to arrive due to long distances of hundreds of kilometers, thousands of kilometers or more between the UE and the satellite, and the satellite and the base station on the ground. The delay time between the UE, the satellite, and the base station is much larger than the situation in which the UE and the base station directly communicate in a terrestrial network. In addition, the delay time between the UE, the satellite, and the base station changes with time since the satellite is continuously moving.

Therefore, the disclosure provides a method and an apparatus, wherein in case that a UE transmits or receives a signal to or from a base station through a satellite, a base station indicates a time offset to the UE so as to correct a time-varying delay time caused by a long distance to a satellite and according to movement of the satellite, and the UE corrects the delay time, based on the time offset. Furthermore, the disclosure provides the method and the apparatus, wherein the UE may calculate a portion of the time offset, based on locations of the UE and the satellite and time information, apply same, and report same to the base station.

That is, according to an embodiment of the disclosure, when the UE transmits/receives a signal to/from the base station through the satellite, correction for a time offset may be necessary due to a long distance between the UE and the satellite. Accordingly, the disclosure provides a method and an apparatus in which a base station indicates time offset information to a UE, the UE calculates and applies a part of the timing advance, the UE reports the timing advance information to the base station, and the UE corrects the time offset by using the information indicated by the base station.

As described above, by using the disclosure, a UE may access a base station through a satellite, the base station may indicate a time offset to the UE, and the UE may calculate and correct the time offset, thereby effectively exchanging a signal between the base station and the UE.

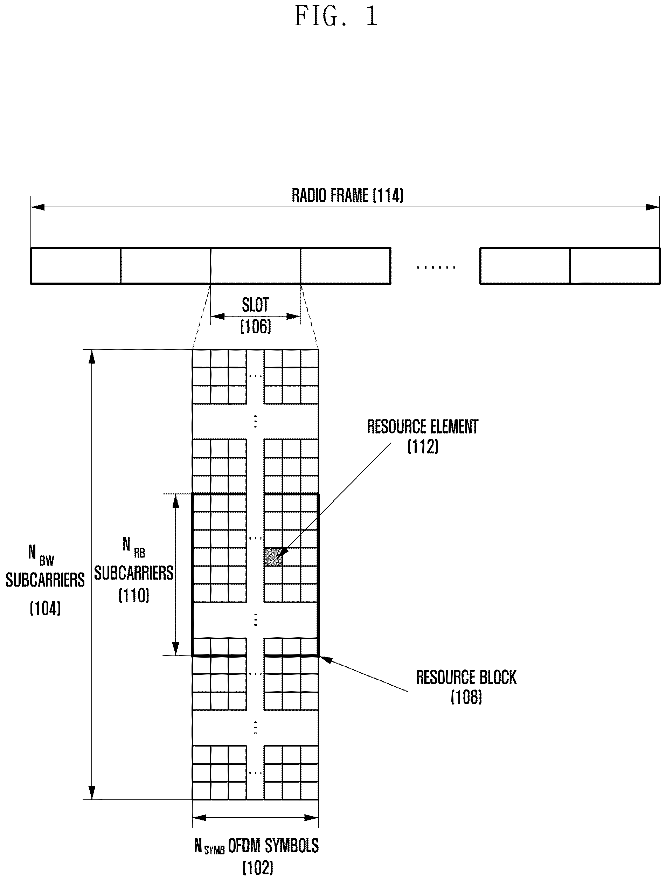

FIG. 1 illustrates a basic structure of a time-frequency domain, which is a radio resource domain used to transmit downlink or uplink data or control channels, in an NR system according to an embodiment of the disclosure.

A minimum transmission unit in the time domain is an OFDM symbol, and $N_{symb}$ OFDM symbols 102 constitute one slot 106. The length of a subframe may be defined as 1.0ms, and a radio frame 114 may be defined as 10ms. The smallest unit of transmission in the frequency domain is a subcarrier, and a total of $N_{BW}$ subcarriers 104 may constitute the entire system transmission bandwidth. One frame may be defined as 10ms. One subframe may be defined as 1ms, and thus one frame may include a total of ten subframes. One slot 202 or 203 may be defined as 14 OFDM symbols (that is, the number of symbols per one slot $N_{symb}^{slot}=14$). One subframe may include one or multiple slots, and the number of slots per one subframe may vary depending on configuration values $\mu$ for the subcarrier spacing. For example, in the case of $\mu=0$, one subframe may include one slot, and in the case of $\mu=1$, one subframe may include two slots. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Before a radio resource control (RRC) connection, an initial bandwidth part (BWP) for initial access may be configured for a UE by a base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1)) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The MIB may include information as in Table 2 below. Obviously, the example given below is not limiting.

[Table 2]

```
-- ASN1START
-- TAG-MIB-START


MIB ::=                              SEQUENCE {
systemFrameNumber                     BIT STRING (SIZE (6)),
subCarrierSpacingCommon                 ENUMERATED   {scs15or60,
scs30or120},
ssb-SubcarrierOffset                  INTEGER (0..15),
dmrs-TypeA-Position                   ENUMERATED {pos2, pos3},
pdcch-ConfigSIB1                       PDCCH-ConfigSIB1,
cellBarred                            ENUMERATED {barred, notBarred},
intraFreqReselection                  ENUMERATED {allowed, notAllowed},
spare                                 BIT STRING (SIZE (1))
}
-- TAG-MIB-STOP
-- ASN1STOP
```

An MIB field is described as follows.

- cellBarred

Value barred means that the cell is barred, as defined in TS 38.304.

- dmrs-TypeA-Position

Position of (first) DM-RS for downlink (see TS 38.211, clause 7.4.1.1.2) and uplink (see TS 38.211, clause 6.4.1.1.3).

- intraFreqReselection

Controls cell selection/reselection to intra-frequency cells when the highest ranked cell is barred, or treated as barred by the UE, as specified in TS 38.304.

- pdcch-ConfigSIB1

Determines a common ControlResourceSet (CORESET), a common search space and necessary PDCCH parameters. If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 (see TS 38.213, clause 13).

- ssb-SubcarrierOffset

Corresponds to kSSB (see TS 38.213), which is the frequency domain offset between SSB and the overall resource block grid in number of subcarriers (See TS 38.211, clause 7.4.3.1).
The value range of this field may be extended by an additional most significant bit encoded within PBCH as specified in TS 38.213.
This field may indicate that this cell does not provide SIB1 and that there is hence no CORESET#0 configured in MIB (see TS 38.213, clause 13). In this case, the field pdcch-ConfigSIB1 may indicate the frequency positions where the UE may (not) find a SS/PBCH with a control resource set and search space for SIB1 (see TS 38.213, clause 13).

- subCarrierSpacingCommon

Subcarrier spacing for SIB1, Msg.2/4 for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz.

- systemFrameNumber

The 6 most significant bits (MSB) of the 10-bit System Frame Number (SFN). The 4 LSB of the SFN are conveyed in the PBCH transport block as part of channel coding (i.e. outside the MIB encoding), as defined in clause 7.1 in TS 38.212.
In connection with the bandwidth part configuring method, UEs, before being RRC-connected, may receive configuration information regarding the initial bandwidth part through an MIB in the initial access step. To be more specific, a UE may have a control resource set configured for a downlink control channel which may be used to transmit downlink control information (DCI) for scheduling an SIB from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.
If a UE has one or more bandwidth parts configured therefor, the base station may indicate, to the UE, to change the bandwidth parts by using a bandwidth part indicator field inside DCI.
The basic unit of resources in the time-frequency domain is a resource element (RE) 112, which may be represented by an OFDM symbol index and a subcarrier index. A resource block (RB) or a physical resource block (PRB) may be defined by $N_{RB}$ consecutive subcarriers 110 in the frequency domain. In general, a minimum transmission unit of data may be in units of RBs. Generally, in the NR system, $N_{symb} = 14$, $N_{RB} = 12$, and $N_{BW}$ is proportional to the bandwidth of a system transmission band. The data rate may be increased in proportion to the number of RBs scheduled for a UE.

In the NR system, in the case of an FDD system that operates by dividing a downlink and an uplink according to frequency, a downlink transmission bandwidth and an uplink transmission bandwidth may be different from each other. A channel bandwidth indicates an RF bandwidth corresponding to a system transmission bandwidth. Tables 3 and 4 respectively show a part of the correspondence between a system transmission bandwidth, a subcarrier spacing, and a channel bandwidth defined in the NR system in a frequency range (frequency range 1 (FR 1)) lower than 6 GHz and a frequency range (FR 2) higher than 6 GHz. For example, in the NR system having a channel bandwidth of 100 MHz with a subcarrier spacing of 30 kHz, a transmission bandwidth includes 273 RBs. In the description below, N/A may be a bandwidth-subcarrier combination that is not supported by the NR system.

[Table 3]

| SCS (kHz) | 5MHz | 10MHz | 15MHz | 20 MHz | 25 MHz | 30 MHz | 40 MHz | 50MHz | 60 MHz | 80 MHz | 90 MHz | 100 MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

[Table 4]

| Channel bandwidth | Subcarrier spacing | 50MHz | 100MHz | 200MHz | 400MHz |
|---|---|---|---|---|---|
| $BW_{Channel}$ [MHz] | | | | | |
| Transmission bandwidth configuration NRB | 60 kHz | 66 | 132 | 264 | N/A |
| | 120 kHz | 32 | 66 | 132 | 264 |

FR1 and FR2, which are frequency ranges in the NR system, may be separately defined as Table 5 below.

[Table 5]

| Frequency range designation | Corresponding frequency range |
|---|---|
| FR1 | 450 MHz - 7125 MHz |
| FR2 | 24250 MHz - 52600 MHz |

Of course, the ranges of FR1 and FR2 described above may be changed and applied differently. For example, the frequency range of FR1 may be changed from 450 MHz up to 6000 MHz to be applied.

Next, synchronization signal (SS)/PBCH blocks in 5G will be described.

An SS/PBCH block may refer to a physical layer channel block including a primary SS (PSS), a secondary SS (SSS), and a PBCH. Details thereof are as follows.

- PSS: A signal which becomes a reference signal for downlink time/frequency synchronization, and may provide some partial information of a cell ID.
- SSS: A reference for downlink time/frequency synchronization, and may provide the remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: may include a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and from this, control resource set #0 (which may correspond to a control resource set having a control resource set index of 0) may be configured for the UE. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. Through this procedure, the base station may know which block the UE has selected from respective SS/PBCH blocks, and the fact that control resource set #0 associated therewith is monitored.

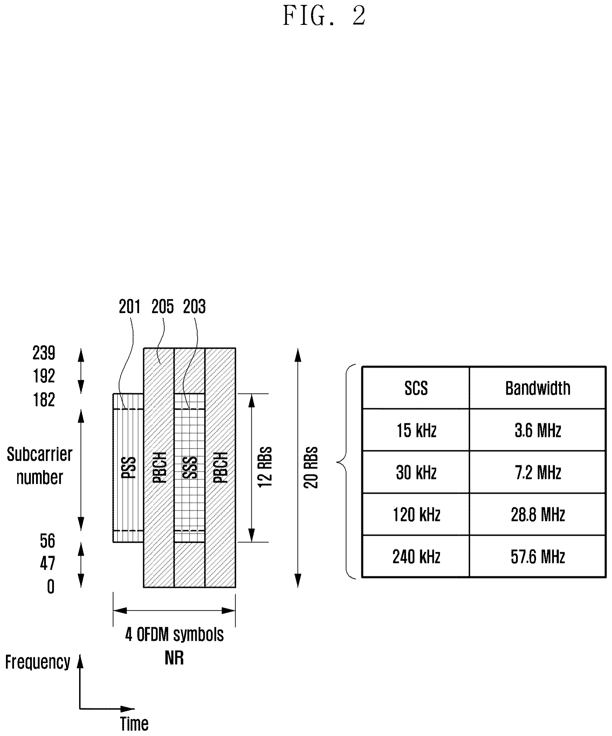

FIG. 2 is a diagram illustrating that a synchronization signal (SS) and a physical broadcast channel (PBCH) in an NR system are mapped to frequency and time domains according to an embodiment of the disclosure.

A primary synchronization signal (PSS) 201, a secondary synchronization signal (SSS) 203, and a PBCH are mapped over 4 OFDM symbols, and the PSS and SSS are mapped to 12 RBs, and the PBCH is mapped to 20 RBs. A table in FIG. 2 shows how a frequency band of 20 RBs is changed according to subcarrier spacing (SCS). The resource region in which the PSS, SSS, and PBCH are transmitted may be referred to as an SS/PBCH block. In addition, the SS/PBCH block may be referred to as a synchronization signal block (SSB).

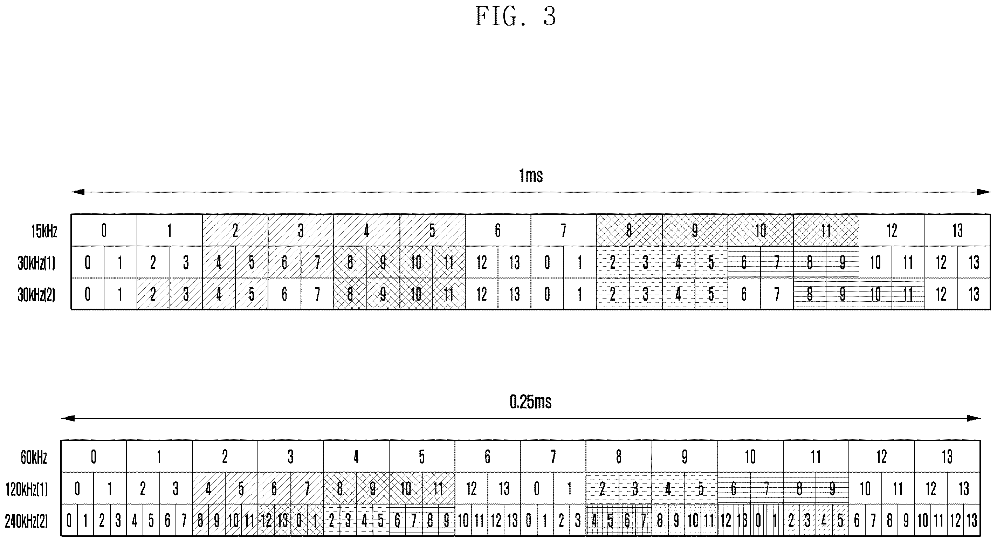

FIG. 3 is a diagram illustrating symbols in which an SS/PBCH block may be transmitted according to subcarrier spacings according to an embodiment of the disclosure.

Referring to FIG. 3, the subcarrier spacing may be configured to 15 kHz, 30 kHz, 120 kHz, 240 kHz, or the like, and the position of the symbol in which the SS/PBCH block (or SSB) may be positioned may be determined according to each subcarrier spacing. FIG. 3 illustrates the position of the symbol in which the SSB may be transmitted according to the subcarrier spacing in the symbols within 1 ms, and the SSB does not have to be always transmitted in marked areas of FIG. 3. The position in which the SSB is transmitted may be configured in the UE through system information or dedicated signaling.

Hereinafter, a downlink control channel in a 5G communication system will be described in more detail with reference to the accompanying drawings.

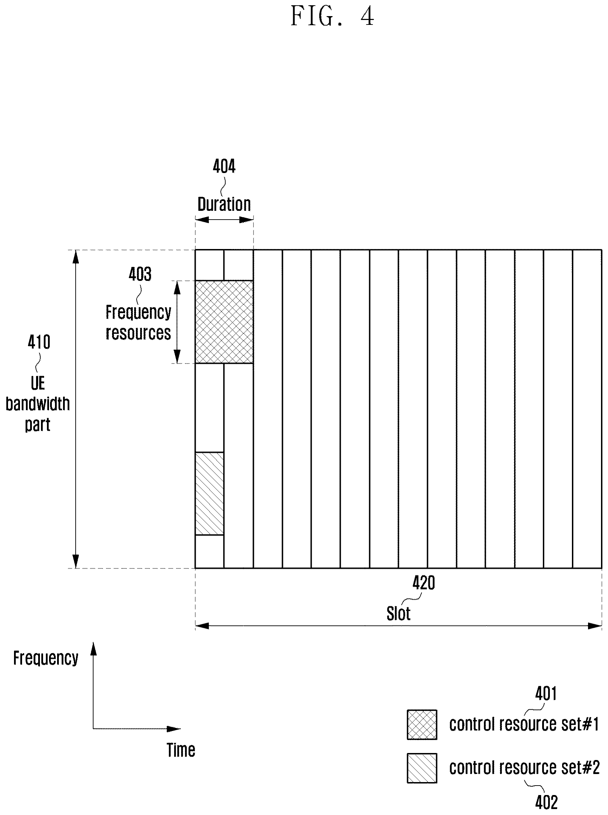

FIG. 4 illustrates an example of a control resource set (CORESET) used to transmit a downlink control channel in a 5G wireless communication system.

FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 403 within the entire UE bandwidth part 410 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in the 5G system described above may be configured for a UE by a base station through higher layer signaling (e.g., system information, master information block (MIB), radio resource control (RRC) signaling). The description that a control resource set is configured for a UE may mean that information such as a control resource set identity, the control resource set's frequency location, and the control resource set's symbol duration is provided. For example, the higher layer signaling may include information in Table 6 below. Obviously, the examples given below are not limiting.

[Table 6]

| |
|---|
| ControlResourceSet ::=                          SEQUENCE {<br><br>    -- Corresponds to L1 parameter 'CORESET-ID'<br><br><br>    controlResourceSetId                 ControlResourceSetId,<br>    (control resource set identity))<br>    frequencyDomainResources             BIT STRING (SIZE (45)), |

```
        (frequency domain resource assignment information)
        duration                              INTEGER
         (1..maxCoReSetDuration),
        (time domain resource assignment information )
        cce-REG-MappingType                   CHOICE {
        (CCE-to-REG mapping scheme)
          interleaved                         SEQUENCE {

            reg-BundleSize                     ENUMERATED   {n2,  n3,
        n6},
            (REG bundle size)

            precoderGranularity               ENUMERATED
        {sameAsREG-bundle, allContiguousRBs},

            interleaverSize                   ENUMERATED   {n2,  n3,
        n6}
            (interleaver size)

            shiftIndex
            INTEGER(0..maxNrofPhysicalResourceBlocks-1)  OPTIONAL
            (interleaver shift)
            },
          nonInterleaved                      NULL
        },
        tci-StatesPDCCH                       SEQUENCE(SIZE
          (1..maxNrofTCI-StatesPDCCH)) OF TCI-StateId
            OPTIONAL,
        (QCL configuration information)
        tci-PresentInDCI                      ENUMERATED {enabled}
                OPTIONAL,   -- Need S
}
```

In Table 5, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field. In addition, there are various DCI formats, and whether the DCI is DCI for power control or DCI for notifying of a slot format indicator (SFI) may be indicated according to each format.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE. The PDCCH may be transmitted while being mapped to a control resource set (CORESET) configured for the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI). Obviously, the examples given above are not limiting.

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example. Obviously, the examples given below are not limiting.

[Table 7]

- Identifier for DCI formats - [1] bit

- Frequency domain resource assignment $-\lceil \lceil \log_2 (N_{\mathrm{RB}}^{\mathrm{UL,BWP}} (N_{\mathrm{RB}}^{\mathrm{UL,BWP}} + 1)/2) \rceil \rceil$ bits

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example. Obviously, the examples given below are not limiting.

[Table 8]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

    * For resource allocation type 0, $\lceil N_{\mathrm{RB}}^{\mathrm{UL,BWP}} / P \rceil$ bits

(continued)

* For resource allocation type 1, $\lceil \log_2(N_{RB}^{UL,BWP}(N_{RB}^{UL,BWP}+1)/2) \rceil$ bits

- Time domain resource assignment -1, 2, 3, or 4 bits
- Virtual resource block (VRB)-to-physical resource block (PRB) mapping - 0 or 1 bit, only for resource allocation type 1.
    * 0 bit if only resource allocation type 0 is configured;
    * 1 bit otherwise.
- Frequency hopping flag - 0 or 1 bit, only for resource allocation type 1.
    * 0 bit if only resource allocation type 0 is configured;
    * 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits
    * 1 bit for semi-static HARQ-ACK codebook;
    * 2 bits for dynamic HARQ-ACK codebook with single HARQ-ACK codebook.
- 2nd downlink assignment index - 0 or 2 bits
    * 2 bits for dynamic HARQ-ACK codebook with two HARQ-ACK sub-codebooks;
    * 0 bit otherwise.
- TPC command for scheduled PUSCH - 2 bits

- SRS resource indicator $\left\lceil \log_2\left( \sum_{k=1}^{L_{max}} \binom{N_{SRS}}{k} \right) \right\rceil$ or $\lceil \log_2(N_{SRS}) \rceil$ bits

    * $\left\lceil \log_2\left( \sum_{k=1}^{L_{max}} \binom{N_{SRS}}{k} \right) \right\rceil$ bits for non-codebook based PUSCH transmission;

    * $\lceil \log_2(N_{SRS}) \rceil$ bits for codebook based PUSCH transmission.
- Precoding information and number of layers - up to 6 bits

- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example. Obviously, the examples given below are not limiting.

[Table 9]

- Identifier for DCI formats - [1] bit

- Frequency domain resource assignment - $\lceil \lceil \log_2(N_{RB}^{DL,BWP}(N_{RB}^{DL,BWP}+1)/2) \rceil \rceil$ bits

- Time domain resource assignment - X bits
- VRB-to-PRB mapping - 1 bit.
- Modulation and coding scheme - 5 bits

(continued)

| |
|---|
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Physical uplink control channel (PUCCH) resource indicator - 3 bits |
| - PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example. Obviously, the examples given below are not limiting.

[Table 10]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
|       * For resource allocation type 0, $\left\lceil N_{\mathrm{RB}}^{\mathrm{DL,BWP}} / P \right\rceil$ bits |
|       * For resource allocation type 1, $\left\lceil \log_2 ( N_{\mathrm{RB}}^{\mathrm{DL,BWP}} ( N_{\mathrm{RB}}^{\mathrm{DL,BWP}} + 1 ) / 2 ) \right\rceil$ bits |
| - Time domain resource assignment -1, 2, 3, or 4 bits |
| - VRB-to-PRB mapping - 0 or 1 bit, only for resource allocation type 1. |
|       * 0 bit if only resource allocation type 0 is configured; |
|       * 1 bit otherwise. |
| - Physical resource block (PRB) bundling size indicator - 0 or 1 bit |
| - Rate matching indicator - 0, 1, or 2 bits |
| - Zero power (ZP) channel state information (CSI)-reference signal (RS) trigger 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
|        - DMRS sequence initialization - 1 bit |

For example, each piece of control information included in DCI format 1_1 that is scheduling control information (DL grant) for downlink data may include the following information. Of course, the disclosure is not limited to the following examples.

- Carrier indicator: indicates which carrier the data scheduled by DCI is transmitted on - 0 or 3 bits
- Identifier for DCI formats: indicates the DCI format, and, specifically, an indicator for identifying whether the corresponding DCI is for downlink or uplink. - [1] bits
- Bandwidth part indicator: indicates a change in bandwidth part, if any - 0, 1 or 2 bits
- Frequency domain resource assignment: Resource allocation information indicating frequency domain resource allocation. The resource expressed varies depending on whether the resource allocation type is 0 or 1.
- Time domain resource assignment: Resource allocation information indicating time domain resource allocation. This may indicate one configuration of a predefined PDSCH time domain resource allocation list or higher layer signaling -1, 2, 3, or 4 bits
- VRB-to-PRB mapping: indicates a mapping relationship between the virtual resource block (VRB) and the physical resource block (PRB) - 0 or 1 bit
- PRB bundling size indicator: indicates the size of physical resource block bundling assuming that the same precoding is applied - 0 or 1 bit
- Rate matching indicator: indicates which rate match group is applied among the rate match groups configured via a higher layer applied to PDSCH - 0, 1, or 2 bits
- ZP CSI-RS trigger: triggers the zero power channel state information reference signal - 0, 1, or 2 bits
- Transport block (TB)-related configuration information: indicates modulation and coding scheme (MCS), new data indicator (NDI), and redundancy version (RV) for one or two TBs.
- Modulation and coding scheme (MCS): indicates the coding rate and modulation scheme used for data transmission. That is, this may indicate the coding rate value that may indicate TBS and channel coding information along with information for whether it is QPSK, 16QAM, 64QAM, or 256QAM.
- New data indicator: indicates whether HARQ initial transmission or retransmission.
- Redundancy version: indicates the redundancy version of HARQ.
- HARQ process number: indicates HARQ process number applied to PDSCH-4 bits
- Downlink assignment index: An index for generating a dynamic HARQ-ACK codebook when reporting HARQ-ACK for PDSCH - 0 or 2 or 4 bits
- TPC command for scheduled PUCCH: Power control information applied to PUCCH for HARQ-ACK report for PDSCH - 2 bits
- PUCCH resource indicator: Information indicating the resource of PUCCH for HARQ-ACK report for PDSCH-3 bits
- PDSCH-to-HARQ_feedback timing indicator: Configuration information for the slot in which PUCCH for HARQ-ACK report for PDSCH is transmitted - 3 bits
- Antenna ports: Information indicating the antenna port of the PDSCH DMRS and the DMRS CDM group in which the PDSCH is not transmitted - 4, 5 or 6 bits
- Transmission configuration indication: Information indicating beam-related information for PDSCH - 0 or 3 bits
- SRS request: Information requesting SRS transmission - 2 bits
- CBG transmission information: Information indicating which code block group (CBG) of data is transmitted through PDSCH when code block group-based retransmission is configured - 0, 2, 4, 6, or 8 bits
- CBG flushing out information: Information indicating whether the code block group previously received by the terminal may be used for HARQ combining - 0 or 1 bit
- DMRS sequence initialization: indicates DMRS sequence initialization parameter - 1 bit

Hereinafter, a time domain resource allocation method regarding a data channel in the 5G communication system will be described.

Downlink data may be transmitted on a PDSCH which is a physical channel for transmission of downlink data. Uplink data may be transmitted on a PUSCH which is a physical channel for transmission of uplink data. The PDSCH may be transmitted after the control channel transmission interval. and scheduling information thereof, such as a specific mapping position in the frequency domain and a modulation scheme. may be determined based on DCI transmitted though the PDCCH.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. The time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 11 or Table 12 below may be notified from the base station to the UE. Obviously, the examples given below are not limiting.

[Table 11]

| PDSCH-TimeDomainResourceAllocationList information element |
|---|
| PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE {<br><br>    k0 INTEGER(0..32) OPTIONAL, -- Need S<br>    (PDCCH-to-PDSCH timing, slot unit)<br><br>mappingType ENUMERATED {typeA, typeB},<br><br>    (PDSCH mapping type)<br><br>startSymbolAndLength INTEGER (0..127)<br><br>(start symbol and length of PDSCH)<br><br>} |

[Table 12]

| PUSCH-TimeDomainResourceAllocation information element |
|---|

| |
|---|
| PUSCH-TimeDomainResourceAllocationList ::= SEQUENCE (SIZE(1..maxNrofUL-Allocations)) OF PUSCH-TimeDomainResourceAllocation<br><br>PUSCH-TimeDomainResourceAllocation ::= SEQUENCE {<br><br>    k2 INTEGER(0..32) OPTIONAL, -- Need S<br>    (PDCCH-to-PUSCH timing, slot unit)<br><br>    mappingType ENUMERATED {typeA, typeB},<br><br>    (PUSCH mapping type)<br><br>    startSymbolAndLength INTEGER (0..127)<br><br>    (start symbol and length of PUSCH)<br><br>} |

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

According to an embodiment, time domain resource assignment may be transferred by information for a slot in which PDSCH/PUSCH is transmitted and the number L of symbols in which PDSCH/PUSCH is mapped with the start symbol position S in the slot. Here, S may be a relative position from the start of the slot, L may be the number of contiguous symbols, and S and L may be determined from a start and length indicator value (SLIV) defined as in Equation 1 below.

$$[\text{Equation 1}]$$
$$\text{if } (L\text{-}1) \le 7 \text{ then}$$
$$\text{SLIV} = 14 \cdot (L\text{-}1) + S$$
$$\text{else}$$
$$\text{SLIV} = 14 \cdot (14\text{-}L+1) + (14\text{-}1\text{-}S)$$

where $0 < L \le 14\text{-}S$

In the NR system, type A and type B are defined as PDSCH mapping types. In PDSCH mapping type A, the first symbol among DMRS symbols is located in the second or third OFDM symbol of the slot. In PDSCH mapping type B, the first symbol among DMRS symbols of the first OFDM symbol in the time domain resource allocated by PUSCH transmission is located.

The base station notifies the UE of the modulation scheme applied to the PDSCH to be transmitted and a size (e.g., a transport block size (TBS)) of data to be transmitted, through the modulation coding scheme (MCS) among the control information constituting the DCI. According to an embodiment of the disclosure, the MCS may be configured by 5 bits or more or less than 5 bits. The TBS may correspond to the size of data (transport block, TB) that the base station wishes to transmit before channel coding for error correction is applied to the data.

In the disclosure, a transport block (TB) may include a medium access control (MAC) header, a MAC control element, one or more MAC service data units (SDUs), and padding bits. Alternatively, the TB may indicate a MAC protocol data unit (PDU) or a unit of data to be delivered from a MAC layer to a physical layer.

Modulation schemes supported by the NR system are quadrature phase shift keying (QPSK), 16 quadrature amplitude modulation (QAM), 64QAM, and 256 QAM, and each modulation order ($Q_m$) may correspond to 2, 4, 6, and 8. In other words, QPSK, 16QAM, 64QAM, and 256QAM may transmit 2 bits per symbol, 4 bits per symbol, 6 bits per symbol, and 8 bits per symbol, respectively.

In order to describe a method and an apparatus proposed in an embodiment of the disclosure, the term "physical channel" and the term "signal" in an NR system may be used. However, the content of the disclosure may be applied to a wireless communication system other than the NR system.

In the disclosure, a "downlink (DL)" refers to a radio link via which a base station transmits a signal to a terminal, and an "uplink (UL)" refers to a radio link via which a terminal transmits a signal to a base station.

As used herein, the conventional terms "physical channels" and "signal" may be interchangeably used with the terms "data" and "control signal". For example, a PDSCH is a physical channel over which data is transmitted, but the PDSCH may be referred to as "data" in the disclosure.

As used herein, higher signaling is a method for transferring signals from a base station to a UE by using a downlink data channel of a physical layer, or from the UE to the base station by using an uplink data channel of the physical layer, and may also be referred to as "RRC signaling" or "MAC control element (MAC CE)".

According to an embodiment of the disclosure, a timing advance (TA) may be transmitted through a MAC control element (CE), for example, a timing advance command MAC CE, an absolute timing advance command MAC CE, or the like.

Meanwhile, a message transmitted from the MAC layer to a physical layer, for example, a MAC PDU may include one or more MAC subPDUs. Each MAC subPDU may include one of the followings. Of course, the disclosure is not limited to the following examples.

- Only MAC subheader (including padding)
- MAC subheader and MAC SDU
- MAC subheader and MAC CE
- MAC subheader and padding

The MAC SDUs may have variable sizes, and each MAC subheader may correspond to the MAC SDU, MAC CE, or padding.

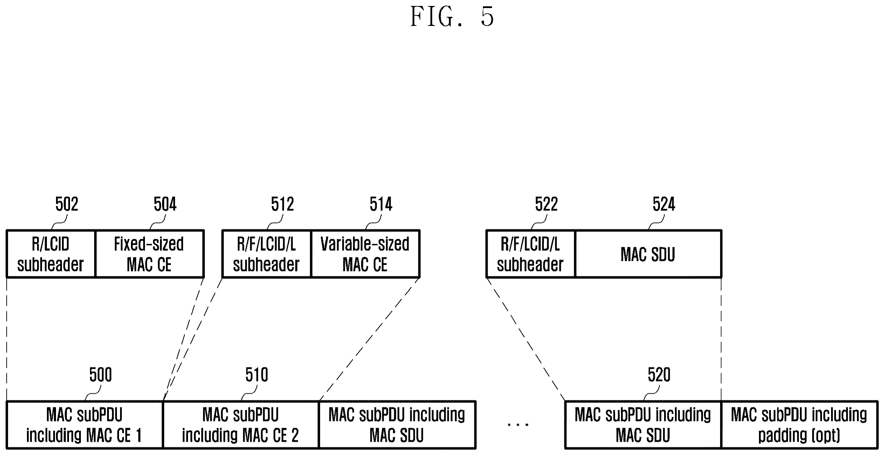

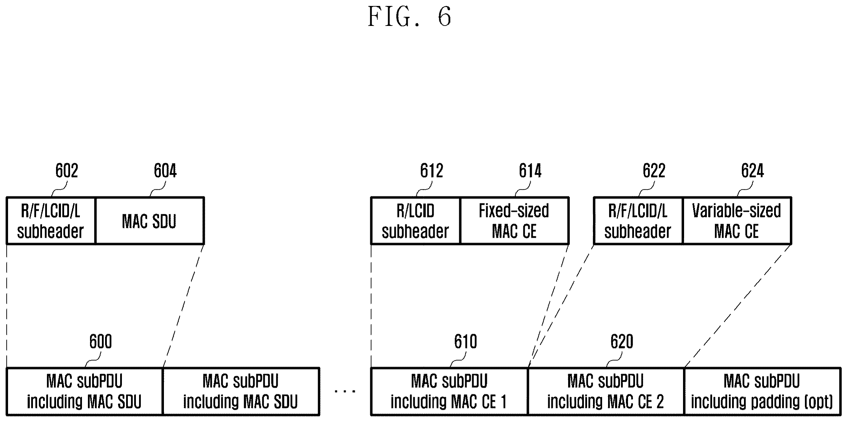

A message from the MAC layer to the physical layer, for example, a MAC PDU, may be configured as in FIG. 5 and FIG. 6 for the downlink and the uplink, respectively.

First, an example of a message transferred from a MAC layer to a physical layer on a downlink in a communication system according to various embodiments of the disclosure will be described with reference to FIG. 5.

FIG. 5 is a diagram schematically illustrating an example of a message transferred from a MAC layer to a physical layer in a downlink in a communication system according to an embodiment of the disclosure.

Referring to FIG. 5, an example of a message transferred from the MAC layer to the physical layer in the downlink may correspond to a downlink MAC PDU (DL MAC PDU). In FIG. 5, the MAC sub-PDU 500 including MAC CE 1 may include an R/LCID subheader 502 and a fixed-sized MAC CE 504, and the MAC sub-PDU 510 including MAC CE 2 may include an R/F/LCID/L subheader 512 and a variable-sized MAC CE 514. Furthermore, a MAC sub PDU 520 including a MAC SDU may include an R/F/LCID/L sub header 522 and a MAC SDU 524.

In FIG. 5, the LCID represents a logical channel ID field, the LCID indicates an instance of a corresponding MAC SDU, a type of a corresponding MAC CE, or padding, and a description thereof will be given in Table 13 and Table 14 below. Here, Table 13 below indicates LCID values with respect to DL-SCH, and Table 14 indicates LCID values with respect to UL-SCH.

[Table 13]

| Codepoint/Index | LCID values |
|---|---|
| 0 | CCCH |
| 1–32 | Identity of the logical channel |
| 33 | Extended logical channel ID field (two-octet eLCID field) |
| 34 | Extended logical channel ID field (one-octet eLCID field) |
| 35–46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

[Table 14]

| Codepoint | Index | LCID values |
|---|---|---|
| 0 to 244 | 64 to 308 | Reserved |
| 245 | 309 | Serving Cell Set based SRS Spatial Relation Indication |
| 246 | 310 | PUSCH Pathloss Reference RS Update |
| 247 | 311 | SRS Pathloss Reference RS Update |
| 248 | 312 | Enhanced SP/AP SRS Spatial Relation Indication |
| 249 | 313 | Enhanced PUCCH Spatial Relation Activation/Deactivation |
| 250 | 314 | Enhanced TCI States Activation/Deactivation for UE-specific PDSCH |
| 251 | 315 | Duplication RLC Activation/Deactivation |
| 252 | 316 | Absolute Timing Advance Command |
| 253 | 317 | SP Positioning SRS Activation/Deactivation |
| 254 | 318 | Provided Guard Symbols |
| 255 | 319 | Timing Delta |

Each MAC sub-header has one LCID field, and the size of the LCID field is 6 bits. In case that the LCID field is configured to be "34", for example, one additional octet exists in the MAC subheader including an eLCID field and the one octet follows the octet including the LCID field. In case that the LCID field is configured to be "33", for example, two additional octets exist in the MAC subheader including an eLCID field and the two octets follows the the octet including the LCID field.

The eLCID indicates an extended logical channel ID field, and indicates a logical channel instance of the corresponding MAC SDU or a type of the corresponding MAC CE. The eLCID field has a size of 8 bits or 16 bits.

Here, L denotes a length field and the length field indicates a length of a corresponding MAC SDU or variable-sized MAC CE. One length field exists for each MAC subheader excluding subheaders corresponding to MAC SDUs including the fixed-sized MAC CEs, padding, or UL common control channel (CCCH). The size of the length field is indicated by an F field.

Furthermore, F represents a format field and indicates a size of a length field. One F field exists for each MAC subheader excluding MAC SDUs including fixed-sized MAC CEs, padding, and UL CCCH. The F field has a size of 1 bit, a value of 0 indicates 8 bits of the length field as one example, and a value of 1 indicates 16 bits of the length field as another example.

In addition, R is a reserved bit and is configured to be "0", for example.

As shown in FIG. 5, MAC CEs, e.g., MAC CE 1 and MAC CE 2 are arranged together, and a MAC subPDU (subPDUs) including a MAC CE (CEs) is arranged before a MAC subPDU including a MAC SDU and a MAC subPDU including padding. Here, the padding may have a size of 0.

Next, an example of a message transferred from a MAC layer to a physical layer on an uplink in a communication system according to various embodiments of the disclosure will be described with reference to FIG. 6.

FIG. 6 is a diagram schematically illustrating an example of a message transferred from a MAC layer to a physical layer in an uplink in a communication system according to an embodiment of the disclosure.

Referring to FIG. 6, an example of a message transferred from the MAC layer to the physical layer on the uplink may correspond to an uplink MAC PDU (UL MAC PDU). In FIG. 6, a MAC sub-PDU 610 including MAC CE 1 includes an R/LCID subheader 612 and a fixed-size MAC CE 614, and a MAC sub-PDU 620 including MAC CE 2 includes an R/F/LCID/L sub-header 622 and a variable-size MAC CE 624. Furthermore, a MAC sub PDU 600 including a MAC SDU may include an R/F/LCID/L sub header 602 and a MAC SDU 604.

As shown in FIG. 6, MAC CEs, for example, MAC CE 1 and MAC CE 2 are arranged together, and the MAC sub PDU(s) including the MAC CE(s) are arranged after the MAC sub PDU including the MAC SDU and before the MAC sub PDU including padding. Here, the padding may have a size of 0.

In FIGS. 5 and 6, the LCID included in the MAC layer, that is, the logical channel ID or the extended logical channel ID may indicate a type of the MAC CE or the MAC SDU to be transmitted. Mapping between an index of the LCID and a type of the MAC SDU or the MAC CE may be as shown in, for example, Table 13 below, and an index of the eLCID and the type of the MAC SDU or the MAC CE may be as shown in, for example, Table 14 below. In various embodiments of the disclosure, the LCID may indicate an instance of a logical channel of the MAC SDU, a type of the MAC CE, or padding information of a downlink shared channel (DL-SCH) and an uplink shared channel (UL-SCH). One LCID may be mapped to one MAC subheader, and the LCID may be implemented by, for example, 6 bits.

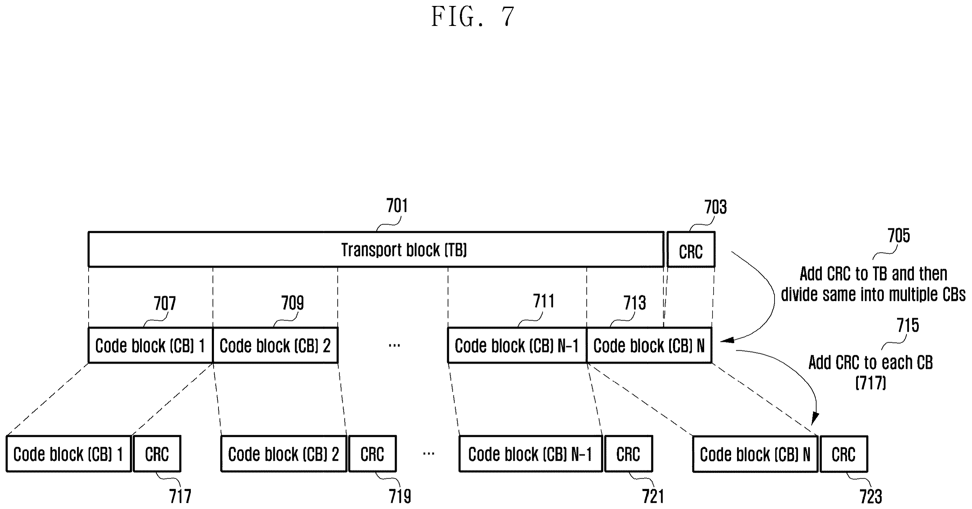

FIG. 7 is a diagram illustrating an example of a process in which one transport block (TB) is divided into multiple code blocks (CBs) and a CRC is added according to an embodiment of the disclosure.

Referring to FIG. 7, a CRC 703 may be added to the head or tail of one transport block (TB) 701 which is to be transmitted in an uplink or downlink. The CRC 703 may have 16 bits, 25 bits, or a pre-fixed number of bits, or a variable number of bits depending on, channel context, and be used to determine whether channel coding succeeds. The CRC 703-added TB 701 may be divided into multiple code blocks (CBs) 707, 709, 711, and 713 (705). According to an embodiment of the disclosure, the maximum sizes of the code blocks may be previously determined before division and, in this case, the last code block 713 may be smaller than the other code blocks 707, 709, and 711. However, the disclosure is not limited thereto, and according to another example, 0, a random value, or 1 may be inserted into the last code block 713, so that the last code block 713 and the other code blocks 707, 709, and 711 may have the same length.

CRCs 717, 719, 721, and 723 may be added to the code blocks 707, 709, 711, and 713, respectively (715). The CRC may have 16 bits, 24 bits, or a pre-fixed number of bits, and be used to determine whether channel coding succeeds.

The TB 701 and a cyclic generator polynomial may be used to generate the CRC 703, and the cyclic generator polynomial may be defined in various ways. For example, assuming a cyclic generator polynomial gCRC24A(D) = $D^{24}$ + $D^{23}$ + $D^{18}$ + $D^{17}$ + $D^{14}$ + $D^{11}$ + $D^{10}$ + $D^{7}$ + $D^{6}$ + $D^{5}$ + $D^{4}$ + $D^{3}$ + $D$ + 1 for 24-bit CRC and L=24, CRC $p_0$, $p_1$, $p_2$, $p_3$, ..., $p_{L-1}$ for TB data $a_0$, $a_1$, $a_2$, $a_3$, ..., $a_{A-1}$ may be determined to be values that make the remainder 0 when $a_0 D^{A+23}$ + $a_1 D^{A+22}$ + ... + $a_{A-1} D^{24}$ + $p_0 D^{23}$ + $p_1 D^{22}$ + ... + $p_{22} D^1$ + $p_{23}$ is divided by gCRC24A(D). In the above-described example, it is assumed that the CRC length L is 24 as an example, but the CRC length L may be determined to have a different value, e.g., 12, 16, 24, 32, 40, 48, or 64.

After the CRC is added to the TB through the process, TB+CRC may be segmented into N CBs 707, 709, 711, and 713. CRCs 717, 719, 721, and 723 may be added to the segmented CBs 707, 709, 711, and 713, respectively (715). The CRCs added to the CBs may have different lengths from that when the CRC added to the TB is generated, or another cyclic generator polynomial may be used to generate the CRC. Furthermore, the CRC 703 added to the TB and the CRCs 717, 719, 721, and 723 added to the codeblocks may be omitted depending on the type of channel code to be applied to the codeblocks. For example, in case that a low density parity check (LDPC) code, not turbo code, is applied to the codeblocks, the CRCs 717, 719, 721, and 723 to be added to the codeblocks may be omitted.

However, even when the LDPC is applied, the CRCs 717, 719, 721, and 723 may be added to the codeblocks. Further, when a polar code is used, the CRCs may also be added or omitted.

As described with reference to FIG. 7, the maximum length of one codeblock is determined depending on the type of channel coding applied to the TB to be transmitted, and depending on the maximum length of the codeblock, the TB and the CRC added to the TB may be segmented into codeblocks.

In legacy LTE systems, CB CRCs are added to the segmented CBs, and the data bits of the CBs and the CRCs are encoded with channel code, so that coded bits are determined, and the number of bits to be rate-matched is determined as previously agreed on coded bits.

In the NR system, the TB size (TBS) may be calculated via the following steps.

Step 1: The number $N'_{RE}$ of REs allocated to PDSCH mapping in one PRB within the allocated resource is calculated. $N'_{RE}$ may be calculated as $$N'_{RE} = N_{sc}^{RB} \cdot N_{symb}^{sh} - N_{DMRS}^{PRB} - N_{oh}^{PRB}$$. Here, $N_{sc}^{RB}$ is 12, and $N_{symb}^{sh}$ may indicate the number of OFDM symbols allocated to the PDSCH. Here, $N_{DMRS}^{PRB}$ is the number of REs occupied by a DMRS of the same code division multiplexing (CDM) group in one physical resource block (PRB). $N_{oh}^{PRB}$ is the number of REs occupied by the overhead in one PRB configured by higher signaling, and may be configured to one of 0, 6, 12, and 18. Thereafter, the total number $N_{RE}$ of REs allocated to the PDSCH may be calculated. $N_{RE}$, is calculated as min(156, $N'_{RE}$)·$n_{PRB}$ and $n_{PRB}$ indicates the number of PRBs allocated to the UE.

Step 2: The number $N_{info}$ of temporary information bits may be calculated as $N_{RE}$ * R * $Q_m$ * v. Here, R is the code rate, $Q_m$ is the modulation order, and information for this value may be transmitted using the MCS bit field of DCI and a pre-agreed table. Here, v is the number of allocated layers. If $N_{info} \leq 3824$, a TBS may be calculated through step 3 below. Otherwise, the TBS may be calculated through step 4.

Step 3: Through equations of $N'_{info} = \max\left(24, 2^n \cdot \left\lfloor \dfrac{N_{info}}{2} \right\rfloor\right)$ and

$n = \max(3, \lfloor \log_2(N_{info}) \rfloor - 6)$, N'$_{info}$ may be calculated. The TBS may be determined to be a value closest to N'$_{info}$ among values not smaller than N'$_{info}$ in Table 15 below.

[Table 15]

| Index | TBS | Index | TBS | Index | TBS | Index | TBS |
|-------|-----|-------|-----|-------|-----|-------|-----|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Step 4: Through equations of $N'_{info} = \max\left(3840, 2^n \times round\left(\dfrac{N_{info} - 24}{2}\right)\right)$ and

$n = \lfloor \log_2(N_{info} - 24) \rfloor - 5$, N'$_{info}$ may be calculated. The TBS may be determined by N'$_{info}$ value and [pseudo-code 1] below. In the following, C corresponds to the number of code blocks included in one TB.

[Start of Pseudo-code 1]

if $R \leq 1/4$

$$TBS = 8 * C * \left\lceil \frac{N_{info}' + 24}{8 * C} \right\rceil - 24, \text{ where } C = \left\lceil \frac{N_{info}' + 24}{3816} \right\rceil$$

else

if $N_{info}' > 8424$

$$TBS = 8 * C * \left\lceil \frac{N_{info}' + 24}{8 * C} \right\rceil - 24, \text{ where } C = \left\lceil \frac{N_{info}' + 24}{8424} \right\rceil$$

else

$$TBS = 8 * \left\lceil \frac{N_{info}' + 24}{8} \right\rceil - 24$$

end if

end if

[End of Pseudo-code 1]

When one CB is input to the LDPC encoder in the NR system, it may be output, with parity bits added. In this case, the amount of parity bits may vary depending on an LDCP base graph. A method for sending all parity bits generated by LDPC coding with respect to a specific input may be referred to as full buffer rate matching (FBRM), and a method of limiting the number of transmittable parity bits may be referred to as limited buffer rate matching (LBRM). In case that resources are allocated for data transmission, an output of the LDPC encoder is made to a circular buffer, and bits of the buffer are repeatedly transmitted as many times as the number of the allocated resources, and a length of the circular buffer may be called $N_{cb}$.

Assuming that the number of all of the parity bits generated by LDPC coding is N, $N_{cb}=N$ in the FBRM method. In the LBRM method, $N_{cb}$ may be min(N,$N_{ref}$), $N_{ref}$ may be given by $\left\lfloor \dfrac{TBS_{LBRM}}{C \cdot R_{LBRM}} \right\rfloor$, and $R_{LBRM}$ may be determined to be 2/3. To obtain $TBS_{LBRM}$, the above-described method for acquiring TBS is used, assuming the maximum number of layers and maximum modulation order supported by the UE in the cell, and the maximum modulation order $Q_m$ is assumed to be 8, if an MCS table supporting 256QAM is used for at least one BWP in the cell, or otherwise, 6 (64QAM). The code rate is assumed to be the maximum code rate, that is, 948/1024 and $N_{RE}$ is assumed to be 156·$n_{PRB}$, and $n_{PRB}$ is assumed to be $n_{PRB,LBRM}$ to be calculated. Here, $n_{PRB,LBRM}$ may be given in Table 16 below.

[Table 16]

| Maximum number of PRBs across all configured BWPs of a carrier | $n_{PRB,LBRM}$ |
|---|---|
| Less than 33 | 32 |
| 33 to 66 | 66 |
| 67 to 107 | 107 |
| 108 to 135 | 135 |
| 136 to 162 | 162 |
| 163 to 217 | 217 |
| Larger than 217 | 273 |

The maximum data rate supported by the UE in the NR system may be determined through Equation 2 below.

[Equation 2]

$$data\ rate\ (in\ Mpbs) = 10^{-6} \sum_{j=1}^{J} (v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)}))$$

In Equation 2, J may indicate the number of carriers bound by carrier aggregation, Rmax = 948/1024, $v_{Layers}^{(j)}$ may indicate the maximum number of layers, $Q_m^{(j)}$ may indicate a maximum modulation order, $f^{(j)}$ may indicate a scaling index, and $\mu$ may indicate a subcarrier spacing. In this case, $f^{(j)}$ may be one of 1, 0.8, 0.75, and 0.4 which may be reported by the UE, and $\mu$ may be given by Table 17 below.

[Table 17]

| $\mu$ | $\Delta f = 2^{\mu} \cdot 15[kHz]$ | Cyclic prefix |
|-------|------------------------------------|---------------|
| 0 | 15 | Normal |
| 1 | 30 | Normal |
| 2 | 60 | Normal, Extended |
| 3 | 120 | Normal |
| 4 | 240 | Normal |

$T_s^{\mu}$ is an average OFDM symbol length, $T_s^{\mu}$ may be calculated based on $\frac{10^{-3}}{14 \cdot 2^{\mu}}$, and $N_{PRB}^{BW(j),\mu}$ is the maximum number of RBs in BW(j). Here, $OH^{(j)}$ is an overhead value, may be given as 0.14 in a downlink of FR1 (a band equal to or lower than 6 GHz) and given as 0.18 in an uplink thereof, and may be given as 0.08 in a downlink of FR2 (a band over 6 GHz) and given as 0.10 in an uplink thereof. Through Equation 2, the maximum data rate in a downlink in a cell having a 100 MHz frequency bandwidth at a 30 kHz subcarrier spacing may be calculated as Table 18 below.

[Table 18]

| $f^{(j)}$ | $v_{Layers}^{(j)}$ | $Q_m^{(j)}$ | Rmax | $N_{PRB}^{BW(j),\mu}$ | $T_s^{\mu}$ | $OH^{(j)}$ | data rate |
|-----------|--------------------|-------------|------|-----------------------|-------------|------------|-----------|
| 1 | 4 | 8 | 0.92578125 | 273 | 3.57143E-0.5 | 0.14 | 2337.0 |
| 0.8 | 4 | 8 | 0.92578125 | 273 | 3.57143E-0.5 | 0.14 | 1869.6 |
| 0.75 | 4 | 8 | 0.92578125 | 273 | 3.57143E-0.5 | 0.14 | 1752.8 |
| 0.4 | 4 | 8 | 0.92578125 | 273 | 3.57143E-0.5 | 0.14 | 934.8 |

In contrast, the actual data rate that the UE may measure in actual data transmission may be a value acquired by dividing the amount of data by the data transmission time. This may be a value acquired by dividing TBS by the TTI length for 1 TB transmission or dividing the sum of TBSs by the TTI length for 2 TB transmission. By way of example, as assumed to acquire Table 15, the maximum actual data rate in the downlink in the cell having the 100 MHz frequency band in the 30 kHz subcarrier spacing may be determined as shown in Table 19 according to the number of PDSCH symbols allocated.

[Table 19]

| $N_{symb}^{sh}$ | $N_{DMRS}^{PRB}$ | $N_{RE}'$ | $N_{RE}$ | $N_{info}$ | $n$ | $N_{info}'$ | $C$ | $TBS$ | TTI length (ms) | Data rate (Mbps) |
|---|---|---|---|---|---|---|---|---|---|---|
| 3 | 8 | 28 | 7644 | 226453.5 | 12 | 225,280 | 27 | 225,480 | 0.107143 | 2,104.48 |
| 4 | 8 | 40 | 10920 | 323505.0 | 13 | 319,488 | 38 | 319,784 | 0.142857 | 2,238.49 |
| 5 | 8 | 52 | 14196 | 420556.5 | 13 | 417,792 | 50 | 417,976 | 0.178571 | 2,340.67 |
| 6 | 8 | 64 | 17472 | 517608.0 | 13 | 516,096 | 62 | 516,312 | 0.214286 | 2,409.46 |
| 7 | 8 | 76 | 20748 | 614659.5 | 14 | 622,592 | 74 | 622,760 | 0.250000 | 2,491.04 |
| 8 | 8 | 88 | 24024 | 711711.0 | 14 | 704,512 | 84 | 704,904 | 0.285714 | 2,467.16 |
| 9 | 8 | 100 | 27300 | 808762.5 | 14 | 802,816 | 96 | 803,304 | 0.321429 | 2,499.17 |
| 10 | 8 | 112 | 30576 | 905814.0 | 14 | 901,120 | 107 | 901,344 | 0.357143 | 2,523.76 |
| 11 | 8 | 124 | 33852 | 1002865.5 | 14 | 999,424 | 119 | 999,576 | 0.392857 | 2,544.38 |
| 12 | 8 | 136 | 37128 | 1099917.0 | 15 | 1,114,122 | 133 | 1,115,048 | 0.428571 | 2,601.78 |
| 13 | 8 | 148 | 40404 | 1196968.5 | 15 | 1,212,416 | 144 | 1,213,032 | 0.464286 | 2,612.68 |
| 14 | 8 | 160 | 43680 | 1294020.0 | 15 | 1,277,952 | 152 | 1,277,992 | 0.500000 | 2,555.98 |

The maximum data rate supported by the UE may be identified via Table 18, and the actual data rate following the allocated TBS may be identified via Table 16. In this case, the actual data rate may be larger than the maximum data rate depending on scheduling information.

In the wireless communication system, particularly, the 5G NR system, a data rate supportable by a terminal may be mutually agreed upon between a base station and the terminal. The data rate may be calculated using a maximum frequency band supported by the terminal, a maximum modulation order, the maximum number of layers, and the like. However, the calculated data rate may be different from a value calculated from a length of a transmission time interval (TTI) and a transport block side (TBS) of a transport block (TB) used for actual data transmission.

Thus, the UE may be allocated with a larger TBS than the value corresponding to the data rate supported by the UE and, to prevent this, a limit may be imposed on the TBS schedulable depending on the data rate supported by the UE.

Since the UE is generally far from the base station, the signal transmitted from the UE is received by the base station after a propagation delay. The propagation delay time is a value acquired by dividing the path through which a radio wave is transmitted from the UE to the base station by the speed of light, and may typically be a value acquired by dividing the distance between the UE and the base station by the speed of light. In an embodiment, if the UE is located 100 km away from the base station, a signal transmitted from the UE is received by the base station after about 0.34 msec. The signal transmitted from the base station is also received by the UE after about 0.34 msec. As described above, the arrival time of a signal transmitted from the UE to the base station may vary depending on the distance between the UE and the base station. Therefore, when multiple UEs in different locations transmit signals simultaneously, the times when the signals arrive at the base station may differ from each other. To allow the signals from several UEs to simultaneously arrive at the base station, the time of transmission of a uplink signal may be rendered to differ per UE. In 5G, NR, and LTE systems, this is called a timing advance (TA).

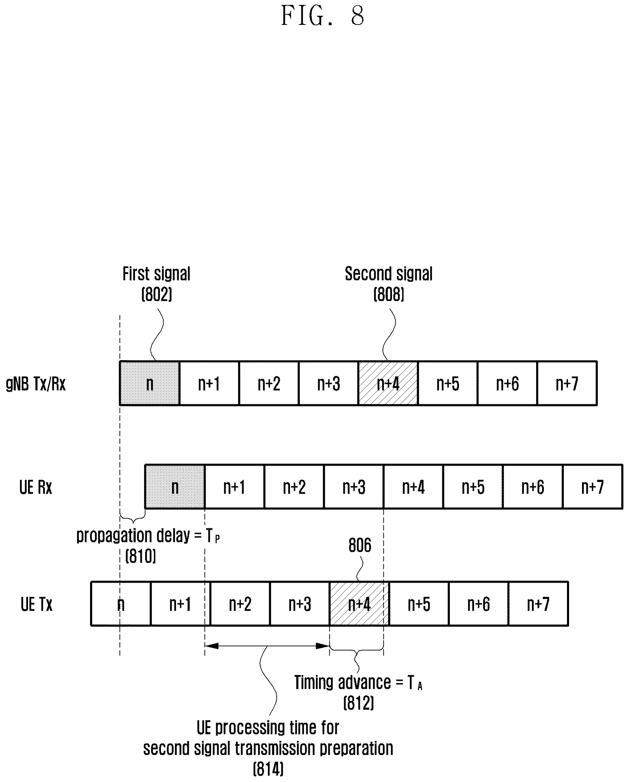

FIG. 8 is a diagram illustrating a user equipment (UE) processing time according to a timing advance when a UE receives a first signal and transmits a second signal in response thereto, in the 5G or NR system according to an embodiment of the disclosure.

In case that the base station transmits a first signal (UL grant or DL grant and DL data) to the UE at slot n 802, the UE may receive the first signal at slot n 804. In this case, the UE may receive the signal, a propagation delay ($T_p$) 810 later than the time the base station transmits the signal. According to an embodiment, in case that the UE has received the first signal at slot n 804, the UE may transmit a corresponding second signal (HARQ-ACK/NACK for uplink data or downlink data) at slot n+4 806. When the UE transmits a signal to the base station, the UE may transmit the second signal at a timing 806 which is advanced by a timing advance (TA, 812) with respect to slot n+4 according to the reference of a signal received by the UE to make the signal arrive at the base station at a specific time. Therefore, in the embodiment, the time during which the UE may prepare to transmit uplink data after receiving the uplink scheduling grant or prepare to transfer HARQ ACK or NACK after receiving downlink data may be a time corresponding to 3 slots excluding TA (814).

To determine the above-described timing, the base station may calculate an absolute value of the TA of the corresponding UE. When the terminal initially accesses the base station, the base station may calculate the absolute value of the TA by adding or subtracting variation in the subsequent TA values transferred via higher layer signaling to or from the TA first transferred to the UE in the random access stage. In the disclosure, the absolute value of the TA may be a value acquired by subtracting a start time of a nth TTI for reception by the UE from a start time of a nth TTI for transmission by the UE.

Meanwhile, one of the important references of the performance of a cellular wireless communication system is packet data delay time (latency). In LTE systems, signal transmission/reception is performed in units of subframes which have a transmission time interval (TTI) of 1 ms. The LTE system operated as described above may support UEs (e.g., short-TTI UEs) having a shorter TTI than 1 ms. Meanwhile, in 5G or NR systems, the TTI may be shorter than 1 ms. Short-TTI UEs are suitable for services, such as voice over LTE (VoLTE) services and remote control services where the delay time (latency) is important. Furthermore, the short-TTI UE becomes a means capable of realizing mission-critical Internet of things (IoT) on a cellular basis.

In the 5G or NR system, in case that the base station transmits a PDSCH including downlink data, DCI for scheduling the PDSCH indicates a K1 value which is a value corresponding to timing information for the UE to transmit HARQ-ACK information of the PDSCH. If HARQ-ACK information is not indicated to be transmitted earlier than symbol L1, including a timing advance, the HARQ-ACK information may be transmitted by the UE to the gNB. That is, the HARQ-ACK information may be transmitted from the UE to the base station at a time equal to or later than symbol L1, including a timing advance. In case that the HARQ-ACK information with the timing advance included therein is indicated to be transmitted earlier than the symbol L1, the HARQ-ACK information may not be valid HARQ-ACK information in the HARQ-ACK transmission from the UE to the base station.

The symbol L1 may be a first symbol at which cyclic prefix (CP) starts after $T_{proc,1}$ from the last time point of the PDSCH. $T_{proc,1}$ may be calculated as in Equation 3 below.

[Equation 3]

$$T_{proc,1} = (N_1 + d_{1,1})(2048 + 144) \cdot \kappa 2^{-\mu} \cdot T_c$$

In the aforementioned Equation 3, $N_1$, $d_{1,1}$, $d_{1,2}$, k, $\mu$, and $T_C$ may be defined as follows.

- In case that HARQ-ACK information is transmitted via a PUCCH (uplink control channel), $d_{1,1}=0$, and in case that HARQ-ACK information is transmitted via a PUSCH (uplink shared channel, data channel), $d_{1,1}=1$.
- In case that the UE receives a configuration of multiple activated configuration carriers or carriers, a maximum timing difference between carriers may be reflected in the second signal transmission.
- For PDSCH mapping type A, that is, in case that a first DMRS symbol position is a third or a fourth OFDM symbol in a slot, if a position index i of the last OFDM symbol is less than 7, $d_{1,2}=7-i$.
- For PDSCH mapping type B, that is, in case that the first DMRS symbol position is a first symbol of the PDSCH, $d_{1,2}=3$ if the PDSCH has a length of 4 symbols, and $d_{1,2}=3+d$ if the PDSCH has a length of 2 symbols, wherein d is the number of symbols in which the PDSCH and the PDCCH including a control signal for scheduling of the PDSCH overlap.
- $N_1$ is defined according to $\mu$ as in Table 20 below. $\mu=0$, 1, 2, and 3 refer to subcarrier spacings of 15 kHz, 30 kHz, 60 kHz, and 120 kHz, respectively.

[Table 20]

| $\mu$ | PDSCH decoding time $N_1$ [symbols] | |
|---|---|---|
| | No additional PDSCH DMRS configured | Additional PDSCH DMRS configured |
| 0 | 8 | 13 |
| 1 | 10 | 13 |
| 2 | 17 | 20 |
| 3 | 20 | 24 |

For the $N_1$ value provided in Table 20 above, a different value may be used according to UE capability.

$$T_c = 1/(\Delta f_{max} \cdot N_f) \, , \quad \Delta f_{max} = 480 \cdot 10^3 \ Hz, \quad N_f = 4096 \, , \quad \kappa = T_s/T_c = 64 \, , \quad T_s = 1/(\Delta f_{ref} \cdot N_{f,ref}) \, ,$$

$$\Delta f_{ref} = 15 \cdot 10^3 \text{ Hz}, \quad N_{f,ref} = 2048$$

are defined, respectively.

In the 5G or NR system, in case that the base station transmits control information including uplink scheduling approval, the UE may indicate a $K_2$ value corresponding to timing information for uplink data or PUSCH transmission.

The UE may transmit the PUSCH to the base station in case that the PUSCH having timing advance included therein is not indicated to be transmitted earlier than OFDM symbol L2. That is, with the timing advance included, the PUSCH may be transmitted from the UE to the base station at a time point identical to or later than that for symbol L2. In case that the PUSCH having timing advance included therein is indicated to be transmitted earlier than symbol L2, the UE may disregard uplink scheduling grant control information from the base station.

Symbol L2 may be a first symbol at which CP of a PUSCH symbol to be transmitted starts after $T_{proc,2}$ from the last time point of the PDCCH including a scheduling grant. $T_{proc,2}$ may be calculated as in Equation 4 below.

[Equation 4]

$$T_{proc,2} = \max((N_2 + d_{2,1})(2048 + 144) \cdot \kappa 2^{-\mu} \cdot T_c, d_{2,2})$$

In the aforementioned [Equation 4], $N_2$, $d_{2,1}$, k, $\mu$, and $T_C$ may be defined as follows.

- in case that a first symbol among symbols allocated to the PUSCH includes only a DMRS, $d_{2,1}=0$, otherwise, $d_{2,1}=1$.
- in case that the UE receives a configuration of multiple activated configuration carriers or carriers, a maximum timing difference between carriers may be reflected in the second signal transmission.
- $N_2$ is defined according to $\mu$ as in Table 21 below. Here, M=0, 1, 2, and 3 refer to subcarrier spacings of 15 kHz, 30 kHz, 60 kHz, and 120 kHz, respectively.

[Table 21]

| μ | PUSCH preparation time $N_2$ [symbols] |
|---|---|
| 0 | 10 |
| 1 | 12 |
| 2 | 23 |
| 3 | 36 |

**[0145]** - For the $N_2$ value provided in Table 21 above, a different value may be used according to UE capability.

$$T_c = 1/(\Delta f_{max} \cdot N_f), \quad \Delta f_{max} = 480 \cdot 10^3 \text{ Hz}, \quad N_f = 4096, \quad \kappa = T_s/T_c = 64, \quad T_s = 1/(\Delta f_{ref} \cdot N_{f,ref}),$$

$$\Delta f_{ref} = 15 \cdot 10^3 \text{ Hz}, \quad N_{f,ref} = 2048.$$

are defined, respectively.

The 5G or NR system may configure a frequency band part (BWP) within one carrier to allow a specific UE to transmit and receive within the configured BWP. This may be so intended to reduce power consumption of the UE. The base station may configure multiple BWPs and change activated BWPs in control information. A time available by the UE to change the BWPs may be defined as shown in Table 22 below.

[Table 22]

| Frequency range | Scenario | Type 1 delay (us) | Type 1 delay (us) |
|---|---|---|---|
| 1 | 1 | 600 | 2000 |
| | 2 | 600 | 2000 |
| | 3 | 600 | 2000 |
| | 4 | 400 | 950 |
| 2 | 1 | 600 | 2000 |
| | 2 | 600 | 2000 |
| | 3 | 600 | 2000 |
| | 4 | 400 | 950 |

In Table 22, frequency range FR 1 may indicate a frequency band equal to lower than 6 GHz, and frequency range FR 2 may indicate a frequency band higher than or equal to 6 GHz, or the frequency ranges may be distinguished as shown in Table 4. In general, FR 2 may refer to a high frequency band close to an mmWave band, and FR 1 may refer to a frequency band relatively lower than FR 2. In the above-described embodiment, type 1 and type 2 may be determined according to UE capability. In the above-described embodiment, scenarios 1, 2, 3, and 4 are configured as shown in Table 23 below.

[Table 23]

| | Central frequency change | Central frequency invariance |
|---|---|---|
| Bandwidth change | Scenario 3 | Scenario 2 |
| Bandwidth invariance | Scenario 1 | Scenario 4 if subcarrier spacing is changed |

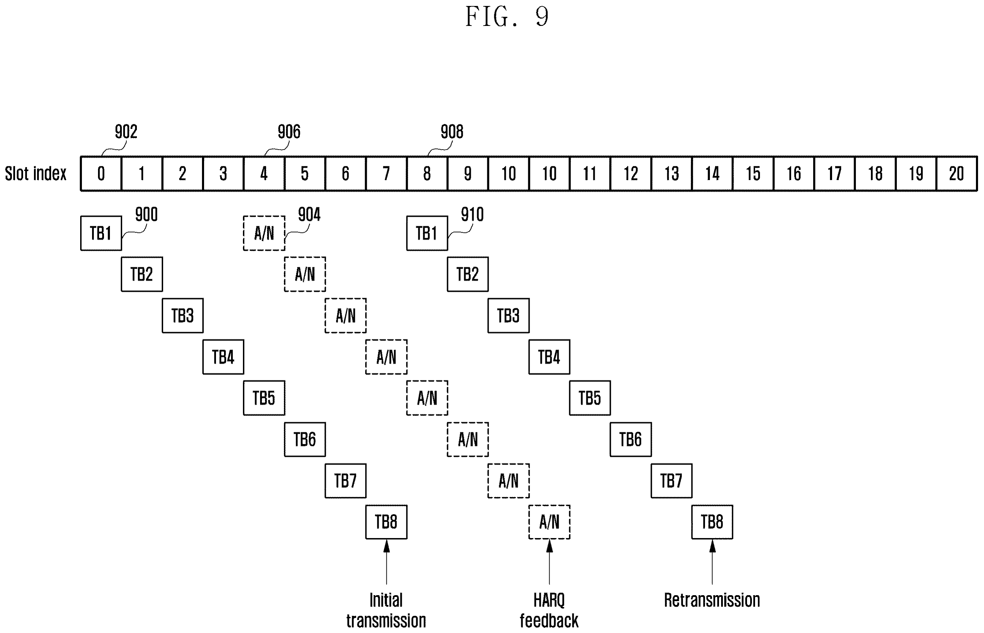

FIG. 9 is a diagram illustrating an example of scheduling multiple pieces of data (e.g., TBs) according to slots and transmitting the data, receiving a HARQ-ACK feedback with respect to the data, and performing retransmission according to the feedback, in a 5G system.

In FIG. 9, TB1 900 is initially transmitted in slot0 902, and an ACK/NACK feedback 904 therefor is transmitted in slot4 906. If the initial transmission of TB1 fails and a NACK is received, retransmission 910 for TB1 may be performed in slot 8 908. The time point at which the ACK/NACK feedback is transmitted and the time point at which the retransmission is performed may be predetermined or may be determined according to a value indicated by control information and/or higher layer signaling.

FIG. 9 illustrates an example in which TB1 to TB8 are sequentially scheduled and transmitted starting from slot 0. For example, TB1 to TB8 may be transmitted, with HARQ process ID 0 to HARQ process ID 7 assigned thereto, respectively. If only four HARQ process IDs may be used by the base station and the UE, it may be impossible to consecutively transmit eight different TBs.

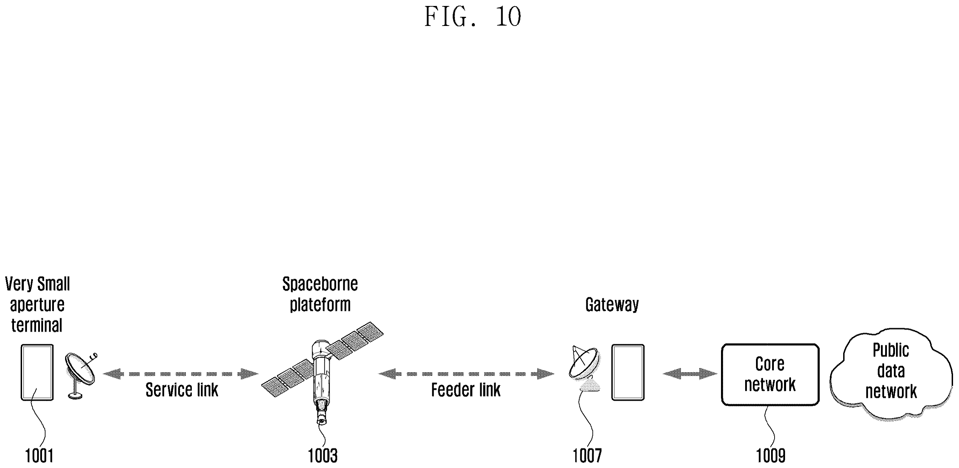

FIG. 10 is a diagram illustrating an example of a communication system using a satellite according to an embodiment of the disclosure.

For example, if the UE 1001 transmits a signal to the satellite 1003 through a service link, the satellite 1003 may transfer the signal to the base station 1005 through a feeder link, and the base station 1005 may process the received signal and transmit a signal including a requirement for a subsequent operation to the UE 1001, which may be transmitted through the satellite 1003 again. A distance between the UE 1001 and the satellite 1003 is long, and a distance between the satellite 1003 and the base station 1005 is also long, and thus a time required for data transmission and reception from the UE 1001 to the base station 1005 may become long.

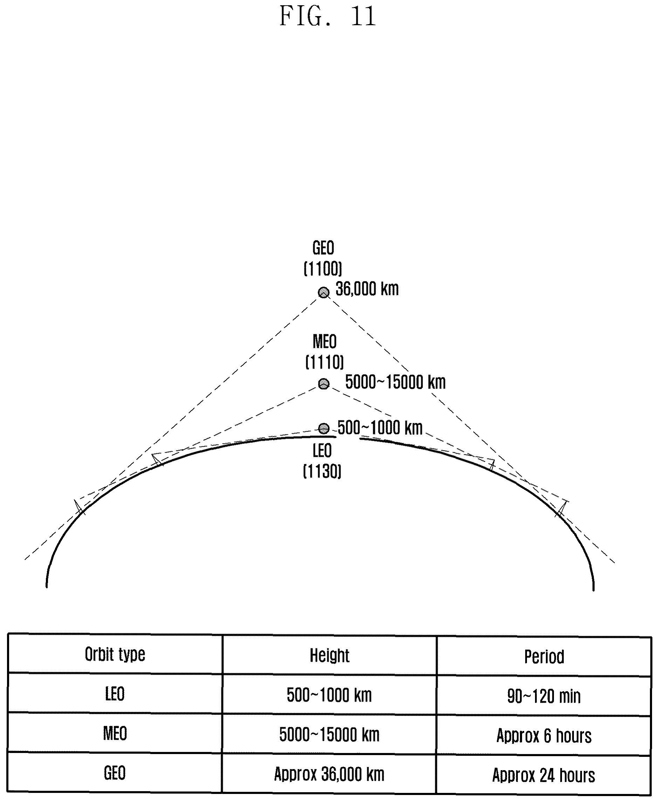

FIG. 11 is a diagram illustrating a revolution period of a communication satellite around the earth according to an altitude or height of the satellite according to an embodiment of the disclosure.

Satellites for communication may be divided into a low earth orbit (LEO), a middle earth orbit (MEO), a geostationary earth orbit (GEO), and the like according to orbits of the satellites. In general, the GEO 1100 may refer to a satellite having an altitude of 36000 km, the MEO 1110 may refer to a satellite having an altitude from 5000 to 15000 km, and the LEO may refer to a satellite having an altitude from 500 to 1000 km. Of course, the disclosure is not limited to the above-described examples.

According to an embodiment of the disclosure, the revolution period around the earth varies depending on the altitude, and the GEO 1100 has the revolution period around the earth of about 24 hours, the MEO 1110 has about 6 hours, and the LEO 1130 has about 90 to 120 minutes. A low orbit (up to ~2,000 km) satellite has a relatively low altitude, and may have an advantage over a geostationary orbit (36,000 km) satellite in terms of propagation delay time (which may be understood as time it takes for a signal transmitted from a transmitter to reach a receiver) and loss.

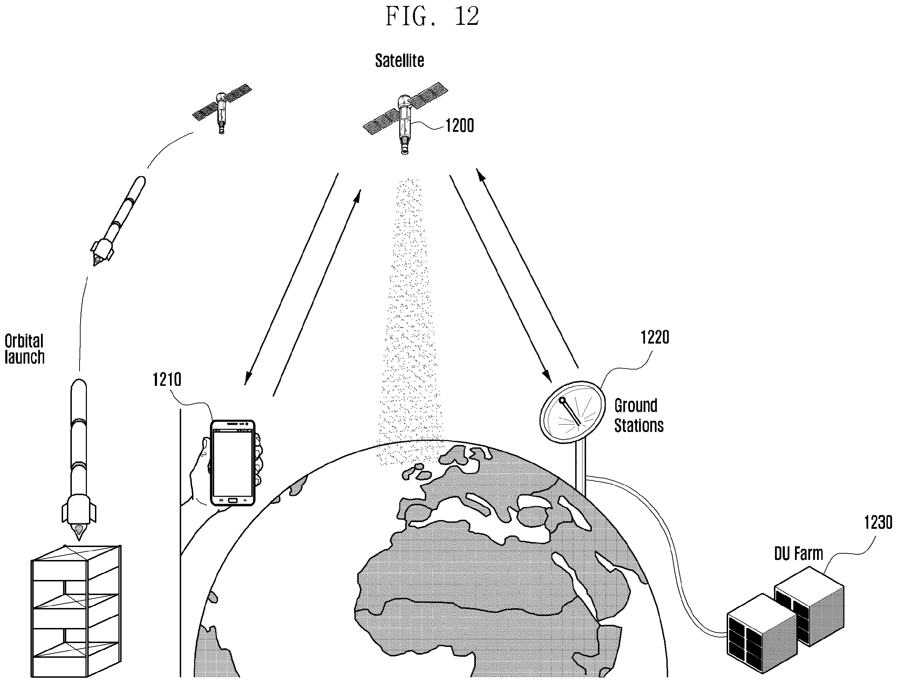

FIG. 12 is a a diagram illustrating a concept of satellite-UE direct communication according to an embodiment of the disclosure.

A satellite 1200 located at a place higher than or equal to altitude 100 km by a rocket transmits and receives a signal to and from the UE 1210 on the ground and also transmits and receives a signal to and from a ground station 1220 connected to a ground base station (DU farms) 1230.

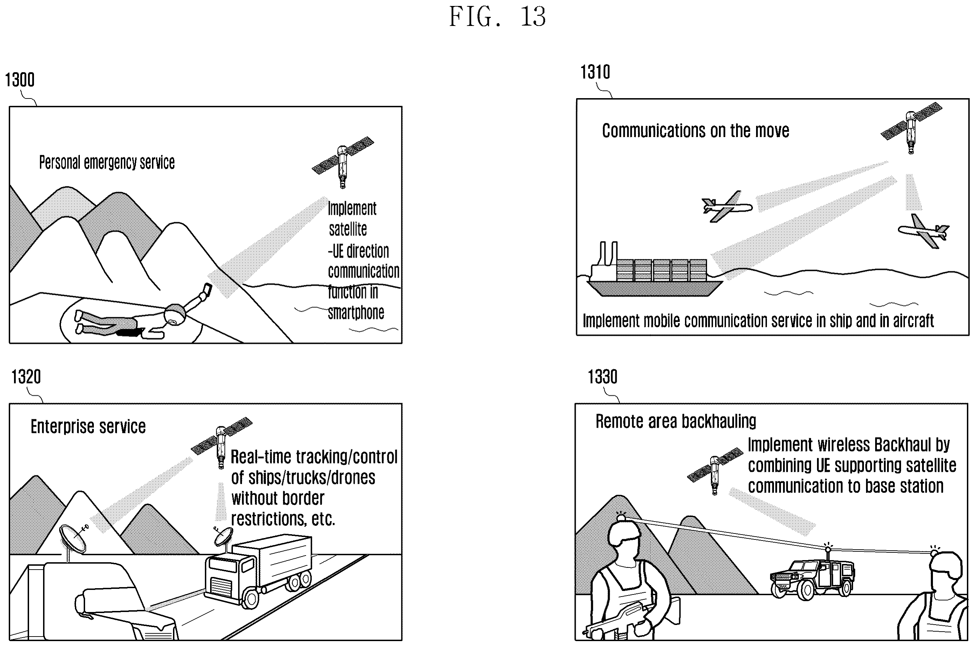

FIG. 13 is a a diagram illustrating a utilization scenario of satellite-UE direct communication according to an embodiment of the disclosure.

The satellite-UE direct communication may support a communication service with a specialized purpose in a form of supplementing a coverage limit of a terrestrial network. For example, by implementing a satellite-UE direct communication function in the UE, it is possible to transmit and receive an emergency rescue of a user and/or a disaster signal in a place which is not a terrestrial network coverage (1300), to provide a mobile communication service to the user at an area where a terrestrial network communication is impossible such as a ship and/or an air plane (1310), to track and control a location of a ship, a freight car, a drone, and/or the like in real time without border restrictions (1320), and to perform a backhaul function in a physically remote area by supporting a satellite communication function in the base station and functioning as a backhaul of the base station (1330).

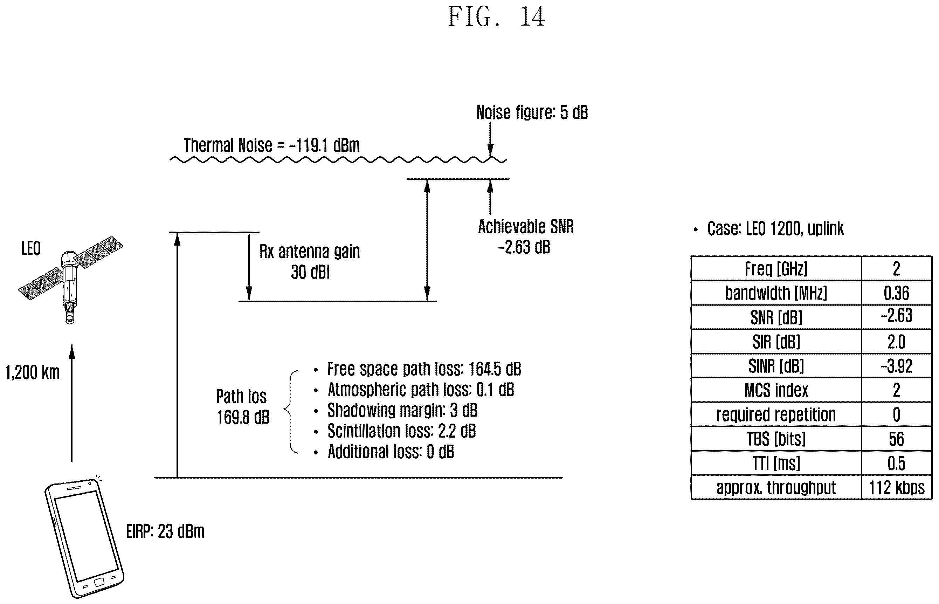

FIG. 14 is a diagram illustrating an example of calculating an expected data transfer rate (or throughput) in an uplink when a low earth orbit (LEO) satellite at an altitude of 1200 km and a UE on the ground perform direct communication according to an embodiment of the disclosure.

Assuming that effective isotropic radiated power (EIRP) of the ground UE in the uplink is 23 dBm, a path loss of a radio channel to the satellite is 169.8 dB, and a satellite reception antenna gain is 30 dBi, an achievable signal-to-noise ratio (SNR) is estimated as -2.63 dB. In this case, the path loss may include a path loss in the space, a path loss in the atmosphere, and the like. Assuming a signal-to-interference ratio (SIR) of 2 dB, a signal-to-interference and noise ratio (SINR) is calculated as -3.92 dB, and in this case, if 30 kHz subcarrier spacing and a frequency resource of one PRB are used, it may be possible to achieve a data rate of 112 kbps.

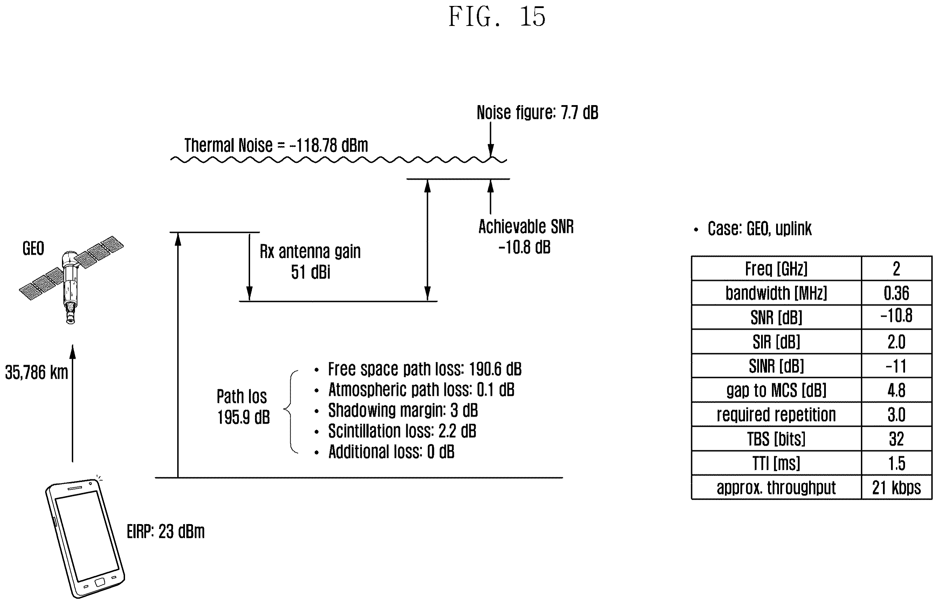

FIG. 15 is a diagram illustrating an example of calculating an expected data transfer rate (or throughput) in an uplink when an GEO satellite at an altitude of 35,786 km and a UE on the ground perform direct communication according to an embodiment of the disclosure.

Assuming that effective isotropic radiated power (EIRP) of the ground UE in the uplink is 23 dBm, a path loss of a radio channel to the satellite is 195.9 dB, and a satellite reception antenna gain is 51 dBi, an achievable signal-to-noise ratio (SNR) is estimated as -10.8 dB. In this case, the path loss may include a path loss in the space, a path loss in the atmosphere, and the like. Assuming that the SIR is 2 dB, the SINR is calculated as -11 dB, and in this case, a transmission rate of 21 kbps may be achieved when subcarrier spacing of 30 kHz and frequency resources of 1 PRB are used, which is the result of 3 repeated transmissions.

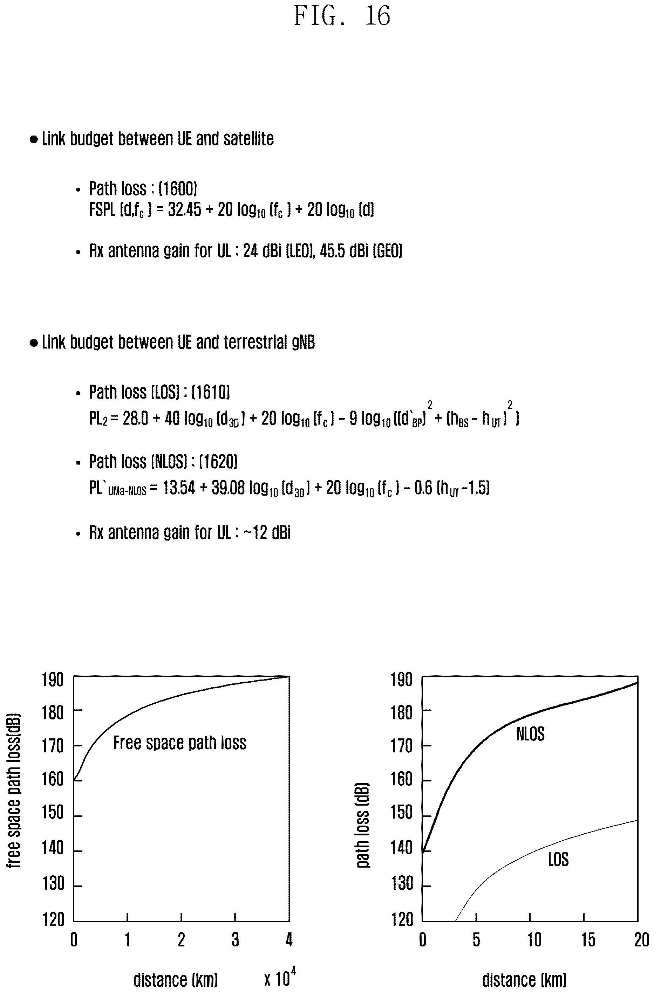

FIG. 16 is a diagram illustrating a path loss value according to a path loss model between a UE and a satellite, and a path loss according to a path loss model between the UE and a terrestrial network communication base station according to an embodiment of the disclosure.

In FIG. 16, d corresponds to a distance and $f_c$ corresponds to a frequency of a signal. A path loss (FSPL) 1600 in a free space in which communication between the UE and the satellite is performed is inversely proportional to the square of the distance, but path losses ($PL_2$, $PL'_{Uma-NLOS}$) 1610 and 1620 on the ground on which air exists and communication between the UE and a terrestrial network communication base station (terrestrial gNB) is performed may be inversely proportional almost to 4th power of the distance. Here, $d_{3D}$ indicates a straight-line distance between the UE and the base station, $h_{BS}$ indicates a height of the base station, and $h_{UT}$ indicates a height of the UE. It is calculated that $d'_{BP} = 4 \times h_{BS} \times h_{UT} \times f_c / c$. Here, fc indicates a central frequency in units of Hz and c indicates a speed of light in units of m/s.

In satellite communication (or non-terrestrial network (NTN)), Doppler shift, that is, frequency movement (offset) of a transmission signal is generated due to continuous fast movement of the satellite.

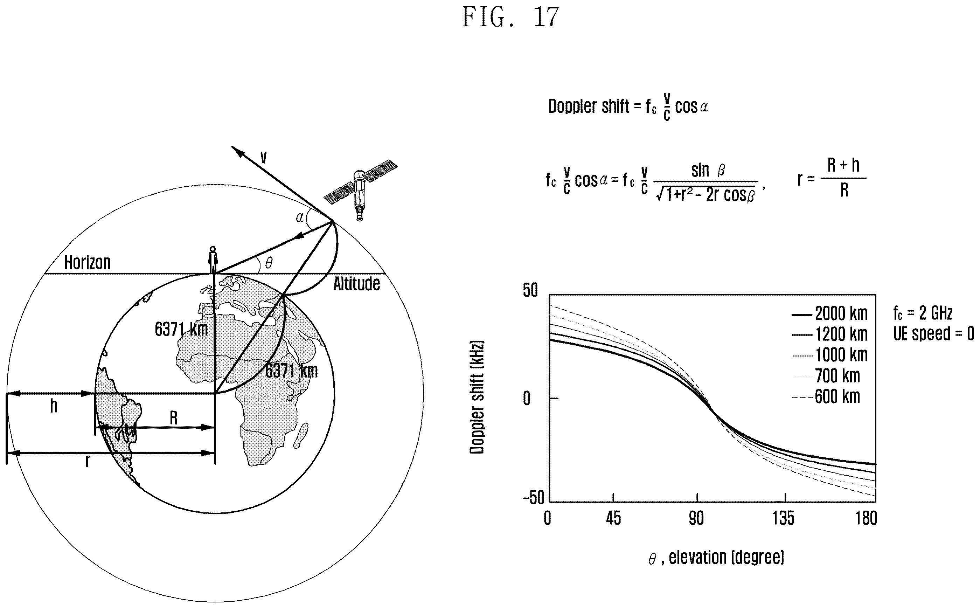

FIG. 17 is a diagram illustrating equations and results for calculating an amount of Doppler shift experienced by a signal which is transmitted from a satellite and received by a user of a UE on the ground according to an altitude and a location of the satellite, and a location of the user of the UE on the ground according to an embodiment of the disclosure.

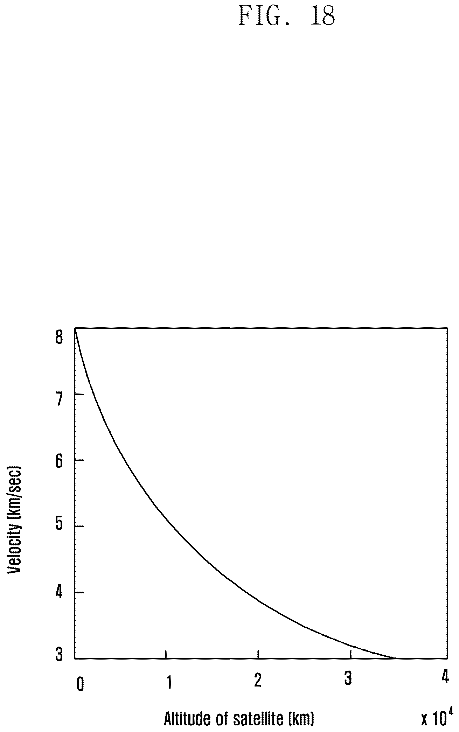

An earth radius is R, h is an altitude of the satellite, v is a speed of revolution of the satellite around the earth, and $f_c$ is a frequency of a signal. The speed of the satellite may be calculated from the altitude of the satellite, which corresponds to a speed making the gravity, which is the force that the earth pulls the satellite, the same as the centripetal force generated according to the revolution of the satellite, and may be calculated as shown in FIG. 18.

FIG. 18 is a diagram illustrating a speed of a satellite calculated at an altitude of the satellite.

As identified in FIG. 17, an angle $\alpha$ is determined by an elevation angle $\theta$, and thus a value of Doppler shift is determined according to the elevation angle $\theta$.

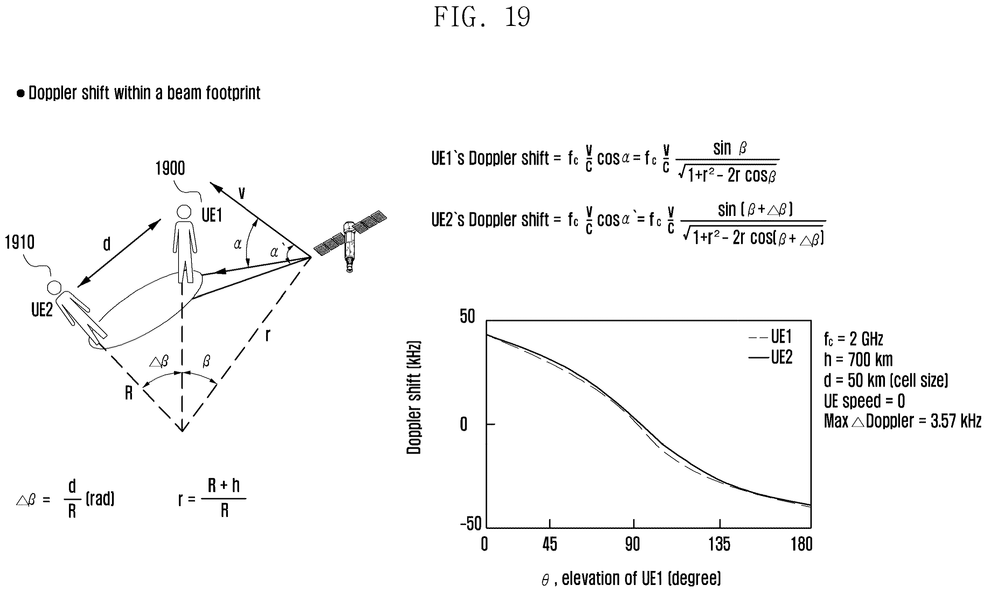

FIG. 19 is a diagram illustrating Doppler shift experienced by different UEs in one beam transmitted by a satellite to the ground according to an embodiment of the disclosure.

Referring to FIG. 19, Doppler shift experienced by a UE 1 1900 and Doppler shift experienced by a UE 2 1910 according to an elevation angle θ are calculated. Such Doppler shift is a result of an assumption that a center frequency is 2 GHz, a satellite altitude is 700 km, a diameter of one beam is 50 km on the ground, and a speed of a UE is 0. Further, the Doppler shift calculated in the disclosure ignores an effect according to a speed of Earth's rotation, which may be considered as small influence because the speed the Earth's rotation is slow compared to the speed of the satellite.

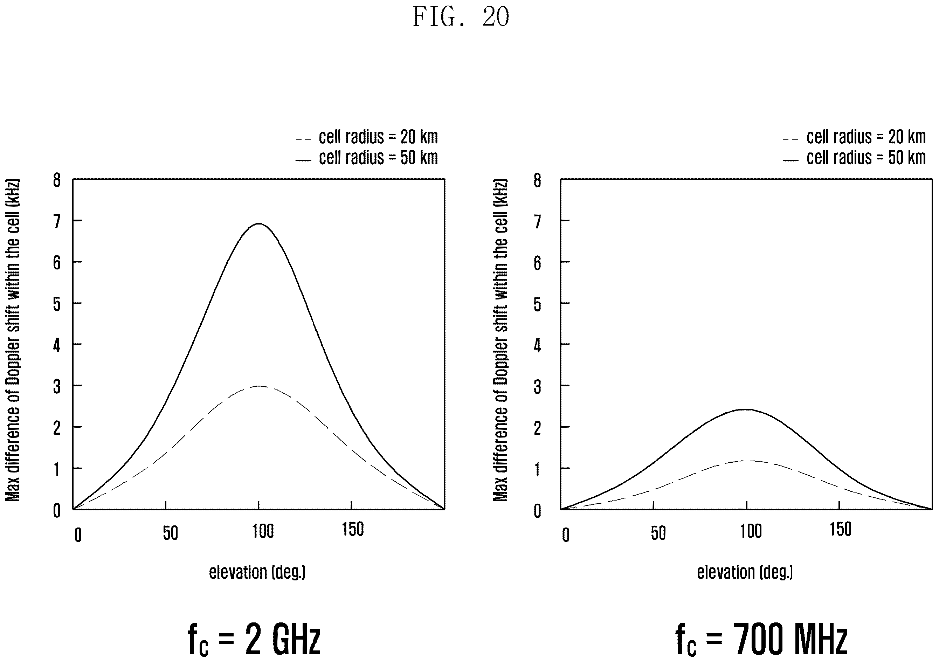

FIG. 20 is a diagram illustrating a difference in Doppler shift which occurs within one beam according to a location of a satellite determined by an elevation angle according to an embodiment of the disclosure.

When the satellite is located directly above a beam, that is, when an elevation angle is 90 degrees, the difference between Doppler shifts is the largest within the beam (or cell). This may be because when the satellite is above a center, Doppler shift values at one end of the beam and at the other end of the beam have positive and negative values, respectively.

Meanwhile, in a satellite communication, a satellite is far from a user on the ground, so a large delay time occurs compared to a terrestrial network communication.

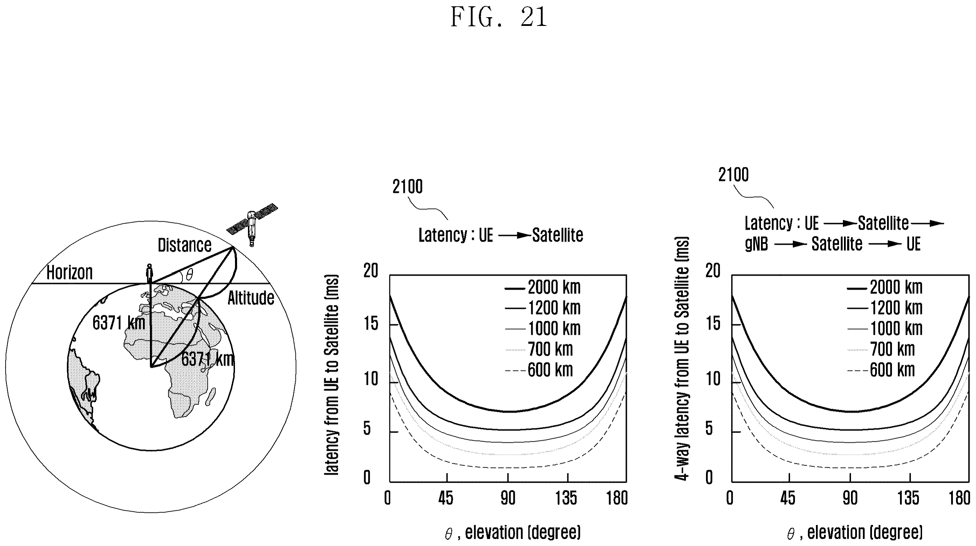

FIG. 21 is a diagram illustrating a delay time from a UE to a satellite and a round trip delay time among the UE, the satellite, and a base station according to a location of the satellite determined according to an elevation angle according to an embodiment of the disclosure.

A first graph 2100 illustrates a delay time from a UE to a satellite, and a second graph 2110 illustrates a round-trip delay time between the UE, the satellite, and a base station. Here, it is assumed that the delay time between the satellite and the base station and the delay time between the UE and the satellite are equal to each other.

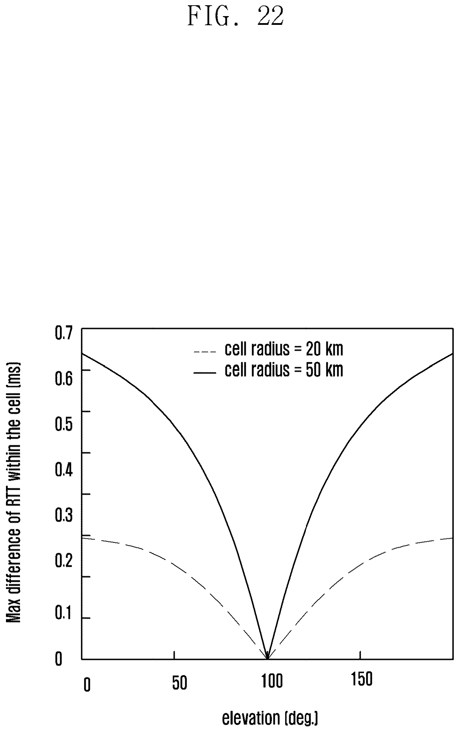

FIG. 22 is a diagram illustrating a maximum difference value of a round trip delay time which varies according to a location of a user within one beam according to an embodiment of the disclosure.

For example, if a beam radius (or a cell radius) is 20 km, it may be regarded that a difference in round trip times to a satellite which UEs whose locations are different within a beam differently experience may be equal to or less than about 0.28 ms.

In a satellite communication, a case that a UE transmits and receives a signal to and from a base station may be a case that the signal is delivered via a satellite. That is, the satellite may serve to receive a signal having been transmitted by the base station to the satellite, and then transmit the signal to the UE in the downlink, and may serve to receive a signal having been transmitted by the UE transmits to the satellite, and then transmit the signal to the BS in the uplink. The satellite may receive the signal and then transmit the signal after performing only frequency shift or may perform signal processing such as decoding and re-encoding, based on the received signal and then transmit the signal.

In a case of LTE or NR, a UE may access a base station according to the following procedure.

- Step 1: The UE receives a synchronization signal (or synchronization signal block (SSB) which may include a broadcasting signal) from the base station. The synchronization signal may include a primary synchronization signal (PSS), a secondary synchronization signal (SSS), and a physical broadcast channel (PBCH). The synchronization signal may include information such as a slot boundary of a signal transmitted by the base station, a frame number, downlink and uplink configuration, and the like. Further, through the synchronization signal, the UE may acquire a subcarrier offset, scheduling information for transmitting system information, and the like.
- Step 2: The UE receives system information (system information block (SIB)) from the base station. The SIB may include information for performing initial access and random access. Information for performing random access may include resource information for transmitting a random access preamble.
- Step 3: A random access preamble (or message 1 (msg1)) is transmitted in random access resources configured in step 2. The preamble may be a signal determined based on the information configured in step 2 using a predetermined progression. The base station receives the random access preamble transmitted by the UE. The base station may attempt to receive the random access preamble via a resource configured by the base station without knowing which UE transmits the random access preamble, and when the reception is successful, may know that at least one UE transmitted the preamble.
- Step 4: If the random access preamble is received in Step 3, the base station transmits a random access response (RAR) (or a message 2 (msg2)) in response to the random access preamble. The UE which has transmitted the random access preamble in Step 3 may attempt to receive the RAR transmitted by the base station in Step 4. The RAR is transmitted on a PDSCH, and a PDCCH scheduling the PDSCH is transmitted together or in advance. A CRC scrambled by an RA-RNTI value is added to DCI for scheduling the RAR, and the DCI (and CRC) is channel-coded and then mapped to the PDCCH and transmitted. The RA-RNTI may be determined based on time and frequency resources via which the preamble in Step 3 is transmitted.

A maximum limit time until the UE which transmits the random access preamble in Step 3 receives the RAR may be configured in the SIB transmitted in Step 2. The maximum limit time may be configured limitedly, for example, up to 10 ms, 40 ms, or the like. That is, if the UE which transmits the random access preamble in Step 3 does not receive the RAR within a time determined based on, for example, 10 ms which is the configured maximum limit time, the UE may retransmit the random access preamble. The RAR may include scheduling information for allocating a resource of a signal to be transmitted by the terminal in Step 5, which is the subsequent step.

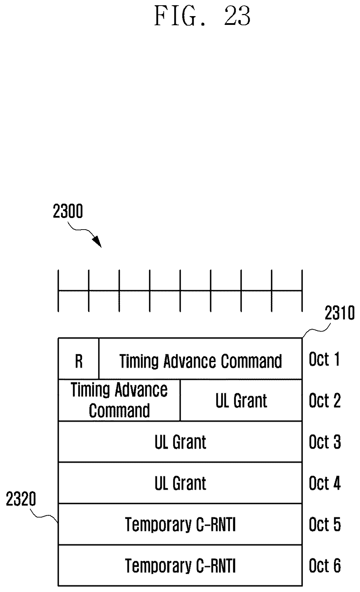

FIG. 23 is a diagram illustrating an example of an information structure (MAC payload) of an RAR according to an embodiment of the disclosure.

This may be a MAC payload format (fallback RAR) of Msg B. An RAR 2300 may be, for example, a MAC PDU, and may include information 2310 on timing advance (TA) to be applied by the UE and a temporary C-RNTI value 2320 to be used in the following step.

* R field: is a reserved bit and may be configured as, for example, "0".
* Timing advance command field 2310: indicates an index value $T_A$ used to control an amount of timing control which should be applied by the MAC entity. The size of the timing advance command field is, for example, 12 bits.
* UL grant field: the UL grant indicates resources to be used in the uplink, wherein the size of the UL grant field is, for example, 27 bits.
* Temporary C-RNTI field 2320: The temporary C-RNTI field may indicate a temporary identifier used by the MAC entity during random access, wherein the size of the temporary C-RNTI field is, for example, 16 bits.

- Step 5: The UE receiving the RAR in step 4 transmits message 3 (msg3) to the base station according to scheduling information included in the RAR. The UE may include a unique ID value of the terminal into the msg3 to transmit the msg3. The base station may attempt reception of msg3 according to the scheduling information which the base station transmitted in step 4.
- Step 6: after receiving msg3 and identifying ID information of the UE, the base station generates message 4 (msg4) including the ID information of the UE and transmits same to the UE. The UE transmitting msg3 in step 5 may attempt to receive msg4 to be transmitted in step 6 thereafter. The UE having received msg4 may compare the ID included in msg4 with the ID which the UE transmitted in step 5 and identify whether msg3 which the UE has transmitted is received by the base station. There may be a constraint on time from the time at which the UE transmits the msg3 in Step 5 to the time at which the UE receives the msg4 in Step 6, and a maximum time may be configured by the SIB in step 2.

When the initial access procedure using the steps is applied to satellite communication, a propagation delay time in the satellite communication may cause a problem. For example, an interval (random access window) from transmission of the random access preamble (or PRACH preamble) by the UE in step 3 to reception of the RAR in step 4, that is, a maximum time to the reception thereof may be configured through ra-ResponseWindow, and the maximum time in the conventional LTE or 5G NR system may be configured up to a maximum of 10 ms.

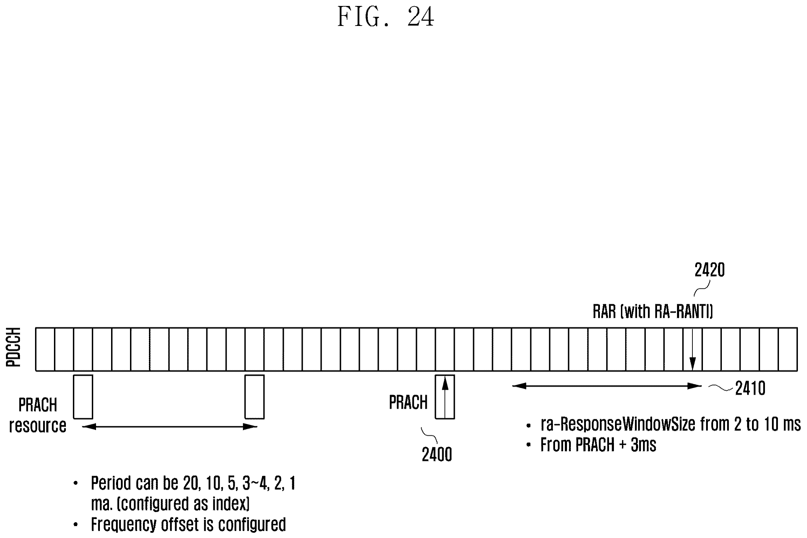

FIG. 24 is a diagram illustrating an example of a relationship between a PRACH preamble configuration resource and an RAR reception time point in an LTE system according to an embodiment of the disclosure.

Referring to FIG. 24, in the case of LTE, a random access window 2410 starts at a time point after 3 ms from transmission 2400 of a PRACH (random access preamble), and when the UE receives an RAR within the random access window (2420), it may be determined that transmission of the PRACH preamble is successful.

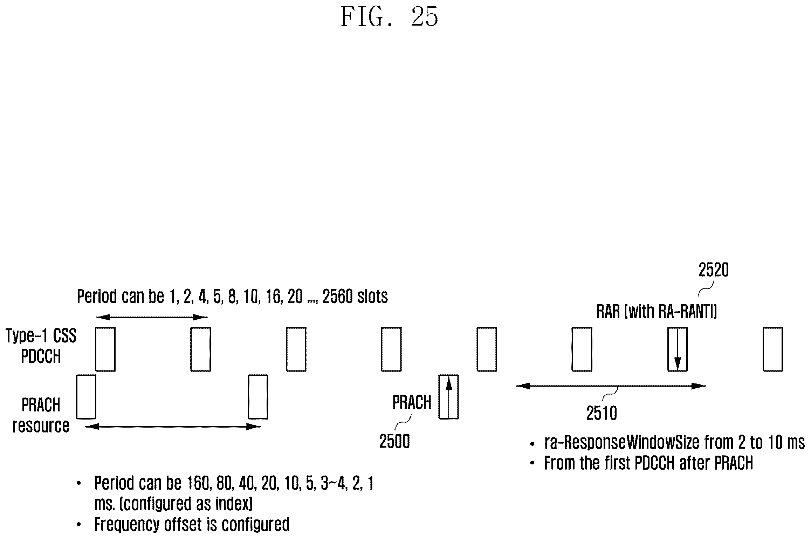

FIG. 25 is a diagram illustrating an example of a relationship between a PRACH preamble configuration resource and an RAR reception time point in a 5G NR system according to an embodiment of the disclosure.

Referring to FIG. 25, in the case of NR, a random access window 2510 starts from a control information area for RAR scheduling that first appears after transmission 2500 of the PRACH (random access preamble). When the UE receives the RAR within the random access window (2520), it may be determined that transmission of the PRACH preamble is successful.

By way of example, a TA for uplink transmission timing in a 5G NR system may be determined as follows. First, Tc is determined as $1/(\Delta f_{max} \cdot N_f)$, where $\Delta f_{max} = 480 \cdot 10^3$ Hz and $N_f = 4096$. In addition, k may be defined as $T_s/T_c = 64$, and Ts may be defined as $1/(\Delta f_{ref} \cdot N_{f,ref})$, and $\Delta f_{ref} = 15 \cdot 10^3$ Hz, $N_{f,ref}$ may be defined as 2048, respectively.

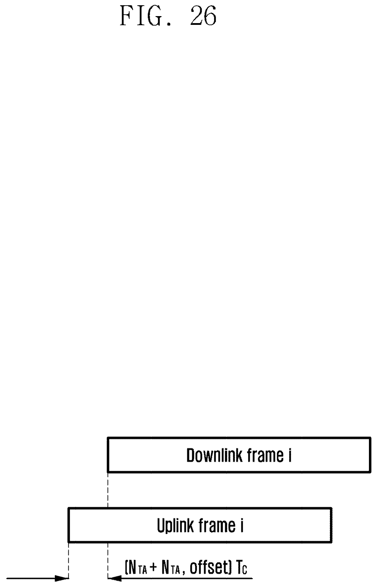

FIG. 26 is a diagram illustrating an example of downlink frame timing and uplink frame timing in a UE according to an embodiment of the disclosure.

The UE may perform uplink transmission by advancing the uplink frame by $T_{TA} = (N_{TA} + N_{TA,offset})T_C$ with reference to the downlink frame timing. In the above, a value of $N_{TA}$ may be transmitted through an RAR or may be determined based on a MAC CE, and $N_{TA,offset}$ may be a value configured in the UE or determined based on a predetermined value.

An RAR of a 5G NR system may indicate a $T_A$ value, and in this case, $T_A$ may indicate one of 0, 1, 2, . . . , 3846. In this case, when the subcarrier spacing (SCS) of the RAR is $2^\mu \cdot$ 15kHz, $N_{TA}$ may be determined by $N_{TA} = T_A \cdot 16 \cdot 64/2^\mu$. After the UE completes the random access process, a change value of TA may be indicated from the base station through a MAC CE or the like. $T_A$ information indicated through the MAC CE may indicate one of 0, 1, 2, ..., 63, which may be used to calculate a new TA value through addition to or subtraction from the existing TA value, and the resultant TA value may be newly calculated as $N_{TA\_new}=T_{A\_old}+(T_A-31)\cdot16\cdot64/2^\mu$. The indicated TA value may be applied to uplink transmission by the UE after a predetermined time.

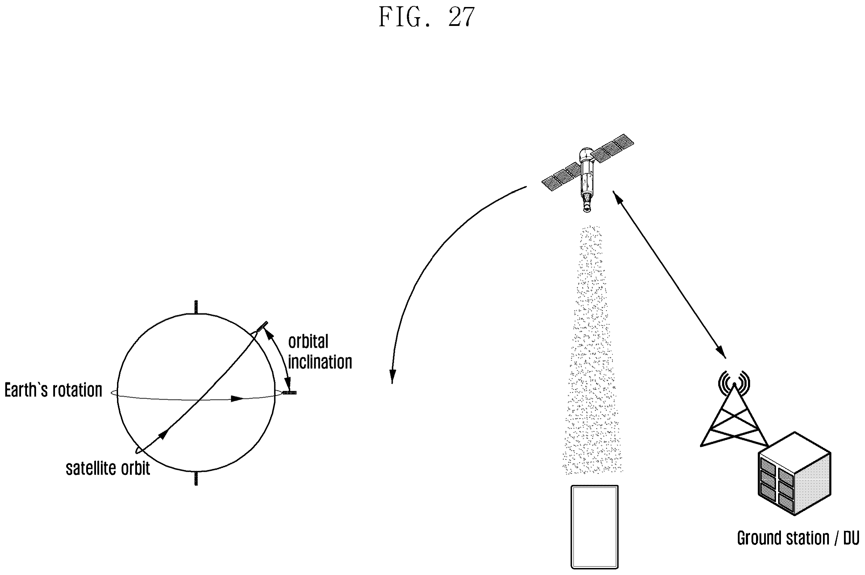

FIG. 27A is a diagram illustrating an example of continuous movement of a satellite with respect to a UE located on the ground or on the earth as the satellite revolves around the earth along a satellite orbit according to an embodiment of the disclosure.

Since the distance between the UE and the satellite varies depending on an elevation angle at which the UE views the satellite, the propagation delay between the UE, the satellite, and the base station may be different.

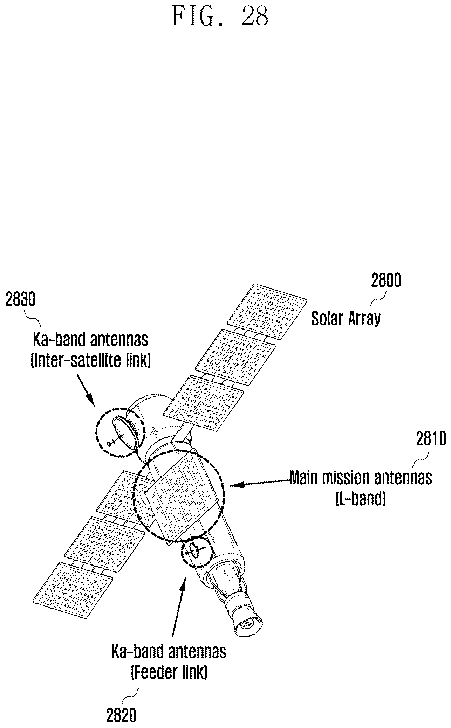

FIG. 28 is a diagram illustrating an example of a structure of a satellite according to an embodiment of the disclosure.

The satellite may include a solar panel or a solar array 2800 for photovoltaic or solar power generation, a transmission and reception antenna (main mission antenna) 2810 for communication with the UE, a transmission and reception antenna (feeder link antenna) 2820 for communication with the ground station, a transmission and reception antenna (inter-satellite link) 2830 for communication between satellites, and a processor for controlling transmission and reception and processing a signal. Of course, the above example is not limiting, and the artificial satellite may include more or fewer components than the components illustrated in FIG. 28. In addition, according to an embodiment of the disclosure, in the case where intersatellite communication is not supported according to the satellite, an antenna for intersatellite signal transmission and reception may not be deployed. Although FIG. 28 illustrates that an L band of 1 to 2 GHz is used for communication with the UE, a K band (18 to 26.5 GHz), a Ka band (26.5 to 40 GHz), and a Ku band (12 to 18 GHz) corresponding to high-frequency bands may be used.

Furthermore, in various embodiments of the disclosure, the term "base station (BS)" may refer to a predetermined component (or a set of components) configured to provide wireless access, such as a transmission point (TP), a transmit-receive point (TRP), an enhanced node B (eNodeB or eNB), a 5G base station (gNB), a macrocell, a femtocell, Wi-Fi access point (AP), or other wireless-enabled devices, based on the type of the wireless communication system. Base stations may provide wireless access according to one or more radio protocols, for example, 5G 3GPP new radio interface/access (NR), long-term evolution (LTE), LTE advanced (LTE-A), high-speed packet access (HSPA), or Wi-Fi 802.11a/b/g/n/ac.

Furthermore, in various embodiments of the disclosure, the term "terminal" may refer to a predetermined component, such as "user equipment (UE)," "mobile station," "subscriber station," "remote terminal," "wireless terminal," "receive point," or "user device." For convenience, the term "UE" is used to refer to a device that accesses a base station regardless of whether it needs to be considered as a mobile device (such as a mobile phone or a smart phone) or a stationary device (such as a desktop computer or vending machine).

In various embodiments of the disclosure, the term "TA" may be used interchangeably with "TA information", "TA value", "TA index", or the like.

In various embodiments of the disclosure, data or control information which the base station transmits to the UE may be referred to as a first signal, and an uplink signal associated with the first signal may be referred to as a second signal. For example, the first signal may include DCI, a UL grant, a PDCCH, a PDSCH, an RAR, and the like, and the second signal associated with the first signal may include a PUCCH, a PUSCH, msg 3, and the like.

Furthermore, there may be an association between the first signal and the second signal. By way of example, when the first signal is a PDCCH including a UL grant for uplink data scheduling, the second signal corresponding to the first signal may be a PUSCH including uplink data. Meanwhile, a difference (gap) between time points at which the first signal and the second signal are transmitted and received may be a predetermined value between the UE and the base station. Alternatively, a difference between time points at which the first signal and the second signal are transmitted and received may be determined by an indication of the BS or determined by a value transmitted through higher layer signaling.

Since the distance between the UE and the satellite and the distance between the satellite and the base station and are long and the satellite continuously moves, a time offset may be generated due to a delay time in direct communication when the UE or the base station receives a signal which the base station or the UE transmits. Accordingly, the disclosure provides a method and an apparatus in which in order to correct the time offset, the base station indicates time offset information and the UE corrects the time offset according to the time offset information. The following embodiments are described based on the assumption of communication between the UE, and the satellite and the ground base station, but do not exclude the case in which the satellite base station communicates with the UE. In the disclosure, the time offset may be interchangeably used with timing advance. The method and the apparatus provided by various embodiments of the disclosure may be applied not only to a satellite communication system but also to a grand communication system. In addition, the embodiments described below may be used in combination with each other.

[First embodiment]

A first embodiment of the disclosure provides a scheme in which a UE directly determines (e.g., calculates) a TA value when the UE transmits an uplink signal to a satellite or a base station, and applies the determined TA value. Further, the first embodiment of the disclosure provides a method and an apparatus in which the base station or the satellite indicates a TA value to be applied to the UE when the UE transmits an uplink signal to the satellite or the base station and the UE applies the indicated TA value to transmit the uplink signal. In addition, the first embodiment of the disclosure provides a method and an apparatus in which the UE adaptively determines the TA value to be applied when the UE transmits an uplink signal to the satellite or the base station. More specifically, the first embodiment of the disclosure provides a method by which the UE determines the TA value by itself and a method and an apparatus in which the BS or the satellite indicates the TA value to the UE as described above and the UE adaptively selects one of the methods of applying the indicated TA value and determines the TA value.

First, the UE may compare an uplink transmission time point with a downlink reception time point for uplink synchronization and advance the uplink transmission time point by $T_{TA}$ from the downlink reception time point, based on the comparison result. Here, $T_{TA}$ calculated for TA in satellite communication may be expressed as shown in Equation 5 below.

[Equation 5]

$$T_{TA} = (N_{TA} + N_{TA,\text{UE-specific}} + N_{TA,\text{common}} + N_{TA,\text{offset}}) \times T_c$$

In Equation 5, $T_c$ is given as $T_c = 1/(\Delta f_{max} \cdot N_f)$, where $\Delta f_{max} = 480 \cdot 10^3$ Hz and $N_f = 4096$. In [Equation 5] above, $N_{TA}$ may be a value determined based on a $T_A$ value or the like included in an RAR or a MAC CE received from the base station, and $N_{TA,\text{offset}}$ may be a pre-fixed or pre-agreed value. In Equation 5 above, $N_{TA,\text{UE-specific}}$ may be a TA correction value measured by the UE, based on locations of the UE and the satellite (or reference location), and $N_{TA,\text{common}}$ may be a TA correction value configured or indicated using higher signaling or a physical layer signal.

Equation 5 may be an equation to which parameters $N_{TA,\text{UE-specific}}$ and $N_{TA,\text{common}}$ are added compared to Equation 6 below that is the conventional TA application method.

[Equation 6]

$$T_{TA} = (N_{TA} + N_{TA,\text{offset}}) \times T_c$$

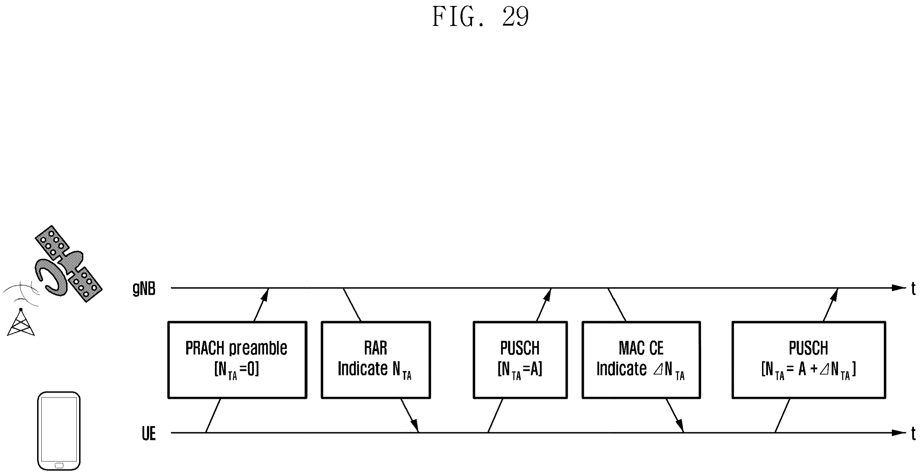

FIG. 29 is a diagram illustrating an example of a process in which a UE determines an $N_{TA}$ from an initial access according to an embodiment of the disclosure.

Referring to FIG. 29, the UE may transmit a PRACH preamble to the base station by applying $N_{TA}=0$, and the base station may transmit an RAR indicating $N_{TA}$ to the UE. Thereafter, the UE may transmit a PUSCH by applying $N_{TA}=A$, and the base station may transmit a MAC CE indicating $\Delta N_{TA}$ to the UE. The UE may then transmit the PUSCH with $N_{TA}=A+\Delta N_{TA}$ applied thereto.

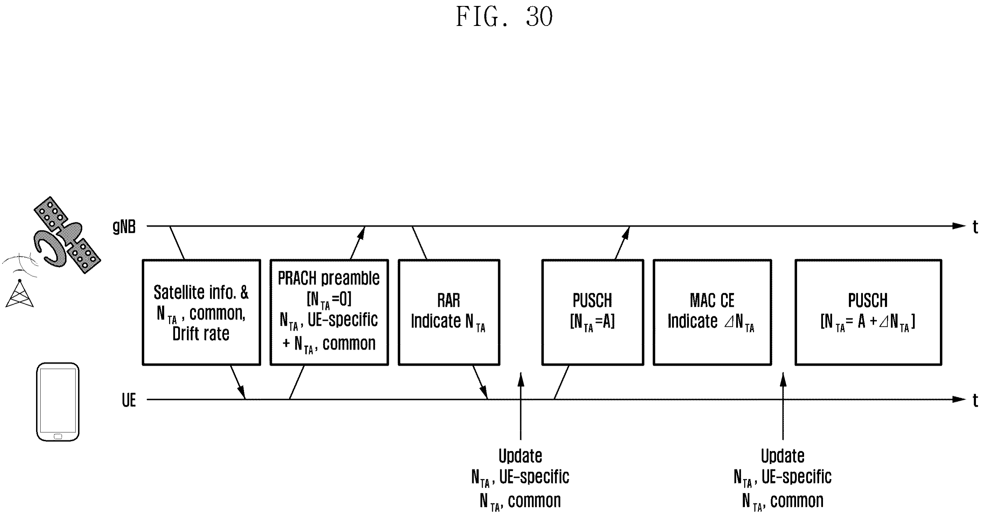

FIG. 30 is a diagram illustrating an example of a process in which a UE determines an $N_{TA}$, $N_{TA,\text{UE-specific}}$, $N_{TA,\text{common}}$ from an initial access according to an embodiment of the disclosure.

Referring to FIG. 30, the base station transmits, to the UE, configuration information including satellite information, $N_{TA,\text{common}}$, and a drift rate. Thereafter, the UE assumes $N_{TA}=0$ and applies $N_{TA,\text{UE-specific}}$ measured by itself and configured $N_{TA,\text{common}}$ to transmit a PRACH preamble to the base station. Thereafter, the base station may transmit an RAR indicating the $N_{TA}$ to the UE, and $N_{TA,\text{UE-specific}}$ and $N_{TA,\text{common}}$ may be updated. Thereafter, the UE may transmit a PUSCH according to $T_{TA}$ calculated according to Equation 5 under the assumption that $N_{TA}=A$, and the base station may transmit a MAC CE indicating $\Delta N_{TA}$ to the UE. Thereafter, $N_{TA,\text{UE-specific}}$ and $N_{TA,\text{common}}$ may be updated, and the UE may transmit a PUSCH according to $T_{TA}$ calculated according to Equation 5 by applying $N_{TA,\text{UE-specific}}$ and $N_{TA,\text{common}}$ updated by applying $N_{TA}=A+\Delta N_{TA}$.

$T_{TA}$ may be determined as $N_{TA}=T_A \cdot 16 \cdot 64/2^\mu$, based on $T_A = 0, 1, 2, ..., 3846$, which is transmitted on a RAR or msg B. In addition, $T_A=0, 1, 2, ..., 63$ may be transferred through a MAC CE, and $N_{TA\_new}=T_{A\_old}+(T_A-31)\cdot 16\cdot 64/2^\mu$ may be updated. In addition, $\Delta f_{max} \cdot N_f$, the $T_A$ transmitted in RAR or msg B, or a $T_A$ value transmitted from a MAC CE or the like may be changed according to a communication system. If the UE performs TA update based on $T_A$ received from the MAC CE as $N_{TA\_new}=T_{A\_old}+(T_A-M)\cdot 16\cdot 64/2^\mu$, when the maximum value of $T_A$ is larger than 63, the M value may be a value equal to or larger than 31, and when the maximum value of $T_A$ is smaller than 63, the M value may be a value equal to or smaller than 31, and the UE may determine an updated $N_{TA}$ value $N_{TA\_new}$ based thereon.

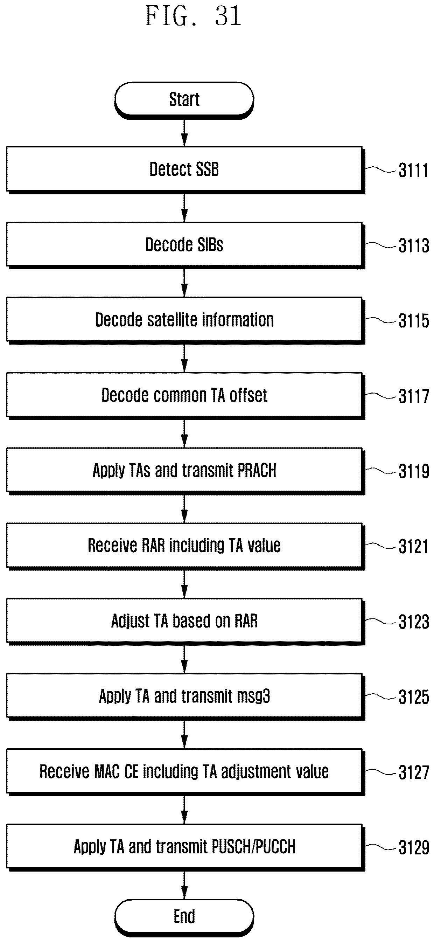

FIG. 31 is a diagram schematically illustrating another example of an operation process of a UE in a communication system according to an embodiment of the disclosure.

The UE may perform an initial access procedure according to a process described with reference to FIG. 31 and determine TA after performing the initial access procedure, which is described below in detail.

In operation 3111, the UE may detect a synchronization signal and PBCH block (SSB) received from the base station. In operation 3113, the UE may decode system information blocks (SIBs), based on the detected SSB. The UE may detect information on random access channel (RACH) resources by decoding the SIBs.

In operation 3115, the UE may acquire (or decode) satellite information by decoding the SIBs. According to an embodiment of the disclosure, the satellite information may include at least one of various parameters, such as location information of the satellite. In operation 3115, the UE may acquire a UE-specific TA correction value, for example, $N_{TA,UE\text{-}specific}$, based on the locations (or reference location) of the UE and the satellite, based on the acquired location information. In operation 3117, the UE may acquire (or decode) a common TA offset, for example, $N_{TA,common}$, by decoding the SIBs.

In operation 3119, the UE may calculate TAs based on $N_{TA,UE\text{-}specific}$ and $N_{TA,common}$ and transmit a PRACH to the base station by applying the calculated TAs. In operation 3121, the UE may receive an RAR including a TA value in response to transmission of the PRACH. In operation 3123, the UE may control TA, based on the received RAR.

In operation 3125, the UE may transmit msg3 to the base station by applying TA. Here, msg3 may refer to a message transmitted in an uplink shared channel (UL-SCH) and including a C-RNTI MAC CE or a common control channel (CCCH) SDU, and may be a first scheduled transmission message in a random access procedure. In operation 3127, the UE may receive a MAC CE including the TA control value form the base station. In operation 3129, the UE may apply TA, based on the TA control value included in the MAC CE and transmit a PUSCH and/or PUCCH.

The operation process of the UE as described with reference to FIG. 31, that is, the process of performing the initial access procedure and determining TA after performing the initial access procedure may be compared to an operation process of the UE according to another embodiment of the disclosure and summarized as shown in Table 24 below.

[Table 24]

| UE operation process | UE operation process based on FIG. 31 |
|---|---|
| 1. Detect SSB2. Decode SIBs (detect RACH resource information)3. Transmit PRACH4. Receive RAR including TA value<br>5. Control TA, based on RAR<br>6. Transmit msg3 by applying TA<br>7. Receive MAC CE including TA control value<br>8. Transmit PUSCH/PUCCH by applying TA, based on TA control value | 1. Detect SSB<br>2. Decode SIBs (detect RACH resource information)<br>3. Decode satellite information (location information or the like) and acquire $N_{TA,UE\text{-}specific}$<br><br>4. Decode common TA offset and acquire $N_{TA,common}$<br>5. Transmit PRACH by applying TAs<br>6. Receive RAR including TA value<br>7. Control TA, based on RAR<br>8. Transmit msg3 by applying TA<br>9. Receive MAC CE including TA control value |
| | 10. Transmit PUSCH/PUCCH by applying TA |

Further, the order of some operations in the operation process of the UE described with reference to FIG. 31 may be changed, and for example, the order of the operation of decoding satellite information and the operation of decoding the common TA offset may be changed.

Although the operation process of the UE in the communication system according to various embodiments of the disclosure has been described with reference to FIG. 31, it should be noted that various modifications may be made with respect to FIG. 31. For example, consecutive steps are illustrated in FIG. 31, but the steps of FIG. 31 may overlap each other or may be performed in parallel, the order thereof may be changed, or one or more steps may be performed several times.

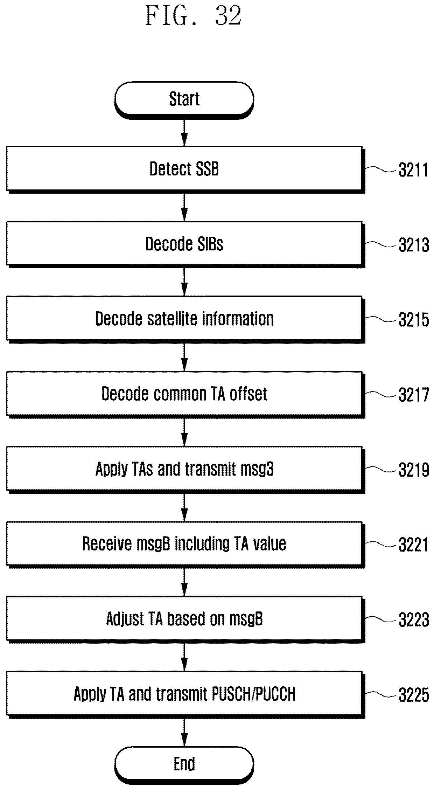

FIG. 32 is a diagram schematically illustrating still another example of an operation process of the UE in a communication system according to an embodiment of the disclosure.

The UE may perform an initial access procedure according to a process described with reference to FIG. 32 and determine TA after performing the initial access procedure, which is described below in detail. Particularly, FIG. 31 illustrates an operation of a UE based on a random access (RA) procedure for a 4-step RA type, and an operation of a UE illustrated in FIG. 32 may be an operation of the UE based on a random access procedure for a 2-step RA type.

First, in operation 3211, the UE detects an SSB received from the base station. In operation 3213, the UE decodes SIBs, based on the detected SSB. Here, the UE may acquire information on RACH resources by decoding the SIBs.

In operation 3215, the UE may acquire (or decode) satellite information by decoding the SIBs. According to an embodiment of the disclosure, the satellite information may include at least one of various parameters, such as location information of the satellite. In operation 3215, the UE may acquire a UE-specific TA correction value, for example, $N_{TA,UE\text{-}specific}$, based on the locations (or reference location) of the UE and the satellite, based on the decoded satellite information. In operation 3217, the UE may acquire (or decode) a common TA offset, for example, $N_{TA,common}$, by decoding the SIBs. In operation 3219, the UE calculates TAs based on $N_{TA,UE\text{-}specific}$ and $N_{TA,common}$ and transmits a PRACH to the base station by applying the calculated TAs. According to an embodiment of the disclosure, msgA may be transmission of a preamble and payload in the random access procedure for the 2-step random access (RA) type. In operation 3221, the UE may receive msgB including the TA value from the base station. According to an embodiment of the disclosure, msgB is a response to msgA in the random access procedure for the 2-step RA type and may include a response(responses) to contention resolution, fallback indication(s), and backoff indication. In operation 3223, the UE may adjust TA, based on the TA control value included in msgB. In operation 3225, the UE may transmit a PUSCH/PUCCH by applying the controlled TA.

The operation process of the UE as described with reference to FIG. 32, that is, the process of performing the initial access procedure and determining TA after performing the initial access procedure may be compared to an operation process of the UE according to another embodiment of the disclosure and summarized as shown in Table 25 below.

[Table 25]

| UE operation process | UE operation process based on FIG. 32 |
|---|---|
| 1. Detect SSB2. Decode SIBs (detect RACH resource information) | 1. Detect SSB<br>2. Decode SIBs (detect RACH resource<br><br>information) |
| 3. Transmit MsgA (PRACH+Msg3) | |
| 4. Receive MsgB including TA value | 3. Decode satellite information (location information or the like) and acquire $N_{TA,UE\text{-}specific}$ |
| 5. Control TA, based on MsgB | |
| 6. Transmit PUCCH/-PUSCH by applying TA | 4. Decode common TA offset and acquire $N_{TA,common}$<br>5. Transmit MsgA by applying TAs<br>6. Receive MsgB including TA value<br>7. Control TA, based on MsgB<br>8. Transmit PUCCH/PUSCH by applying TA |

Further, the order of some operations in the operation process of the UE described with reference to FIG. 32 may be changed, and for example, the order of the operation of decoding satellite information and the operation of decoding the common TA offset may be changed. Although the operation process of the UE in the communication system according to various embodiments of the disclosure has been described with reference to FIG. 32, it should be noted that various modifications may be made with respect to FIG. 32. For example, consecutive steps are illustrated in FIG. 32, but the steps of FIG. 32 may overlap each other or may be performed in parallel, the order thereof may be changed, or one or more steps may be performed several times.

Meanwhile, $N_{TA,UE\text{-}specific}$ used in embodiments of the disclosure is a value calculated and applied by the UE. Accordingly, the base station may not know the value of $N_{TA,UE\text{-}specific}$ calculated by the UE. Further, the value of $N_{TA,UE\text{-}specific}$ calculated by the UE may change over time due to movement of the UE or the satellite.

Therefore, in embodiments of the disclosure, the base station may need to control TA of the UE in consideration of the value of $N_{TA,UE\text{-}specific}$ which may change over time, and thus the UE may need to configure a time point to update the value of $N_{TA,UE\text{-}specific}$. The UE may update the value of $N_{TA,UE\text{-}specific}$, based on the following methods, for example, any one of methods 1-1 to 1-6, or a method of combining at least two of methods 1-1 to 1-6.

- Method 1-1: The UE always updates $N_{TA,UE\text{-}specific}$ at every time point at which the SIB including satellite information (e.g., including satellite information and the like) is received. Method 1-1 may be applied to the case in which the UE determines that the SIB is received from the base station or the case in which the UE determines that a paging signal indicating an SIB update is received from the base station.

- Method 1-2: The base station may separately indicate a change rate of TA, for example, $N_{TA,UE-specific}$, and configure a period for updating and an offset for calculating the TA value again according to the change rate of the TA, for example, updating the TA value. Here, the UE may update the TA, for example, $N_{TA,UE-specific}$ at a time point determined according to the period for updating and the offset, and an amount of the TA updated by the UE may be determined according to the change rate of the TA. In various embodiments of the disclosure, the base station may indicate the change rate of the TA, based on an explicit method or an implicit method.

- Method 1-3: The base station may configure the update period and the offset for the UE to update $N_{TA,UE-specific}$, based on the position of the satellite and the position of the UE. Here, the UE may update the TA at the corresponding time point determined according to the update period and offset configured by the base station. In various embodiments of the disclosure, the base station may indicate the update period and offset, based on an explicit method or an implicit method.

- Method 1-4: The UE may always update and apply $N_{TA,UE-specific}$ at a corresponding time point, for example, at a corresponding slot time point for each of at least some of cases in which uplink transmission (e.g., PUCCH/PUSCH, PRACH, and SRS transmission) is performed (for every case where the corresponding case is performed, according to a regular period, or at an irregular performance time point).

- Method 1-5: The UE updates $N_{TA,UE-specific}$, based on a time point at which a TA command transmitted by the base station through a MAC CE expires. For example, the UE updates $N_{TA,UE-specific}$ at the time point at which TA expires. The expiration of a TA command may mean that a time value reaches a specific time point, based on a timer for the TA command. The timer for the TA command may be configured as timeAlignmentTimer and may be a parameter indicating how long the uplink time is synchronized. When receiving a new TA command, the UE may start or restart timeAlignmentTimer. When timeAlignmentTimer expires, the UE may empty an HARQ buffer and newly make an RRC configuration or the like.

- Method 1-6: A new timer timeAlignmentTimer_UEspecific related to $N_{TA,UE-specific}$ is introduced, and the UE may update $N_{TA,UE-specific}$ based on the new timer timeAlignmentTimer_UEspecific. Here, timeAlignmentTimer_UEspecific may be started or restarted when the UE newly calculate $N_{TA,UE-specific}$ or information on $N_{TA,UE-specific}$ is transmitted to the base station. When timeAlignmentTimer_UEspecific expires, the UE may newly calculate $N_{TA,UE-specific}$ to update same, configure $N_{TA,UE-specific}$ as 0, or perform PRACH transmission.

[Second embodiment]

The second embodiment provides a method and an apparatus for transmitting (reporting) a timing advance (TA) value which the UE is applying or has applied, to the base station or the satellite. In the disclosure, the satellite may include an object located high above the ground and correspond to the concept including an aircraft, an airship, or the like.

The UE may perform an operation of transmitting, to the base station, the TA value which the UE is applying. This is to inform the base station of the applied TA value when the UE applies the TA value without any separate indication from the base station or to identify or determine how the UE applies the TA value indicated by the base station. For example, the operation may be performed to identify, when the satellite connected to the UE is changed, the TA value of the UE by the satellite newly connected to the UE. By way of example, the UE may apply the TA calculated by itself, based on the locations of the UE and the satellite by itself.

The UE may use one or a combination of at least two of the following methods in order to report the TA value to the base station.

- Method 2-1: The base station may trigger a TA value report of the UE through DCI. The base station may trigger the TA value report through some bit field values of DCI or a combination of the bit field values. When a field indicating triggering of the TA value report is included in DCI and the field of the received DCI is configured as a specific value, the UE may understand that the TA value report is triggered. Alternatively, when values of one or more fields (e.g., for another purpose) included in DCI are configured as predetermined values, the UE may understand that the TA value report is triggered. The UE may transmit the TA value at a specific time point based on the time point at which DCI is received to the base station.

- Method 2-2: The base station may trigger a TA value report of the UE through a MAC CE. The base station may trigger the TA value report by using some bit values of the MAC CE or a value of a bit field, and the UE may transmit a TA value at a time point at which the MAC CE is received or a time point after a predetermined time from the time point at which the MAC CE is received to the base station.

- Method 2-3: The base station may indicate, through an RRC configuration, which TA value should be reported by the UE. For example, the base station may configure a period and an offset value for the TA report through higher signaling or/and a specific condition for reporting the TA value by the UE and determine a time point when the UE reports the TA value, in which case a TA value application time which is a reference (that is, a time at which the TA value to be reported is applied, which may be referred to as a TA value reference time point) may be designated. The specific condition for reporting the TA value by the UE may correspond to, for example, a case in which the TA value is larger than or equal to a predetermined value or a case in which the distance between the UE and the satellite is longer than or equal to a predetermined value, and the predetermined values may be information or fixed values configured through higher signaling or transmitted through the SIB or the like.

- Method 2-4: the UE may report the TA value without a separate trigger from the base station. For example, method 2-4 may correspond to transmission of information indicating the TA value according to the specific condition from the UE to the base station, and the specific condition (without signaling such as DCI, MAC CE, or RRC for triggering from the base station) is a condition for a time at which the TA value report is performed or a comparison result between the TA value applied by the UE and a specific threshold value or the like and may be predetermined.

According to an embodiment of the disclosure, the UE may transmit the TA value to the base station by using a physical channel such as a PUCCH or a PUSCH, or may transfer TA value information to the base station by using higher signaling. In case that the UE transmits TA value information through the physical channel, resources to be used for reporting the TA value information may be configured through higher signaling.

According to an embodiment of the disclosure, reporting the TA value may mean reporting a $T_{TA}$ value or an $N_{TA,UE-specific}$ value in the equation above. Alternatively, which one of $T_{TA}$ and $N_{TA,UE-specific}$ is reported may be configured to the UE by the base station through the SIB or higher signaling.

The reference time point at which TA value reported by the UE is determined and the time point at which the TA value is reported may be determined based on a time point at which the UE performs the TA value report and a time point at which the TA value report is triggered. For example, when the TA value report is triggered in slot n through DCI, the UE may report a TA value applied or calculated in slot n-K or may report the TA value to the base station in slot n+N. K and N may be values determined according to subcarrier spacing or a UE capability, a DL/UL configuration of the slot, and a PUCCH resource configuration, etc.

According to an embodiment of the disclosure, K may be 0. K=0 may mean that the TA value is reported based on a time point at which a TA value report triggering signal is received. Further, K may be smaller than 0 and in this case, for example, report information may be generated and reported by pre-calculating the TA value at the time point at which the UE reports the TA value. In addition, K may be a value larger than 0. This may mean that the UE reports the TA value at a time point earlier than the time point at which the UE reports the TA value (for example, slot n+N), which may be considered that the TA value is reported at the earlier time point since a time is needed to encode information to be reported by the UE and prepare transmission.

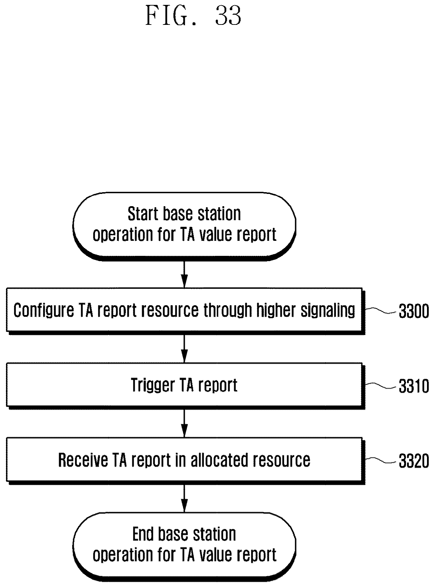

FIG. 33 is a diagram illustrating an example of an operation of a base station for TA value reporting of a UE according to an embodiment of the disclosure.

In the TA value report according to the disclosure, the TA value applied by the UE may be indicated in units of ms, slots, or symbols, or may be provided as information including a value after a decimal point rather than an integer. The TA value report according to the disclosure may include an absolute value of the TA, and may include a TA value previously indicated by the base station, a relative TA value except for a predetermined TA value, or a change in the TA value (e.g., a TA change for a predetermined time).

According to an embodiment of the disclosure, the base station may transmit configuration information related to the TA report through higher signaling (operation 3300). The configuration information related to the TA report may include, for example, at least one piece of information for configuring the TA report, such as a period and offset for performing the TA report, a TA report trigger condition, TA value reference time point information, a type of TA information to be reported, and resource configuration information for performing the TA report. The base station may trigger the UE to report TA (operation 3310). The trigger may be performed through, for example, higher signaling or DCI as the above-described specific content or may be omitted. The base station may receive the TA report transmitted by the UE according to transmitted configuration information (operation 3320).

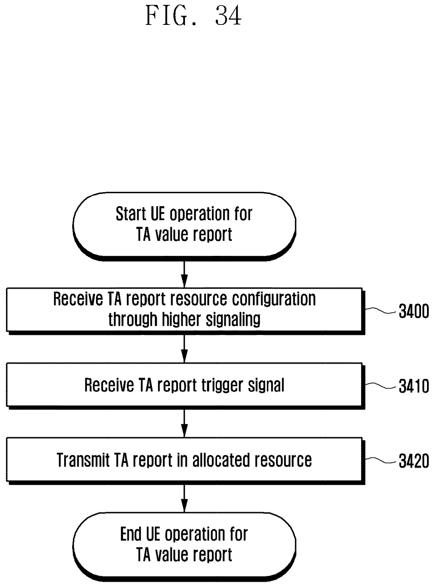

FIG. 34 is a diagram illustrating an example of an operation of a UE for TA value reporting of the UE according to an embodiment of the disclosure.

In the TA value report according to the disclosure, the TA value applied by the UE may be indicated in units of ms, slots, or symbols, or may be provided as information including a value after a decimal point rather than an integer. The TA value report according to the disclosure may include an absolute value of the TA, and may include a TA value previously indicated by the base station, a relative TA value except for a predetermined TA value, or a change in the TA value (e.g., a TA change for a predetermined time).

According to an embodiment, the UE may receive configuration information related to the TA report transmitted by the base station through higher signaling (operation 3400). The configuration information may include, for example, at least one piece of information for configuring the TA report, such as a period and offset for performing the TA report, a TA report trigger condition, TA value reference time point information, a type of TA information to be reported, and resource configuration information for performing the TA report. The UE may receive a signal for triggering the TA report transmitted by the base station (operation 3410). The trigger may be performed through, for example, higher signaling or DCI as the above-described specific content or may be omitted. The UE transmits the TA report according to the received configuration information (operation 3420). For example, when receiving TA report resource information, the UE transmits the TA report in the configuration resources.

The order of respective operations disclosed in FIGS. 33 and 34 may be changed and applied, or another operation may be added or omitted.


[Third embodiment]

The third embodiment provides a method by which the UE calculates, determines, and reports $N_{TA,UE\text{-specific}}$ described through the first embodiment and the second embodiment. A value of $N_{TA,UE\text{-specific}}$ may be calculated based on the distance between the UE and a non-terrestrial network (NTN) satellite. The UE may calculate its own location by receiving signals from navigation satellites in a satellite navigation system, and the navigation satellite may be different from the NTN satellite. Of course, a method for the UE to calculate its own position is not limited to the above method, and the UE's position may be transferred from another entity.

According to an embodiment, the UE may estimate a delay time between the satellite and the UE, based on the location of the UE and the location of the satellite, and correct the estimated delay time value by itself to perform uplink transmission. For example, the satellite may transmit information on the location of the satellite through broadcast information, and the UE may receive the information on the location of the satellite transmitted by the satellite and compare the information on the location with its own location. The location of the UE may be known using one of various types of global positioning systems (GPSs) or independently using information from the base station or a combination thereof. The UE may calculate an uplink transmission time by estimating a time required for a radio wave to be transferred to the satellite through the comparison.

For example, assuming that the UE receives a downlink signal in a slot n via a downlink at a specific time point and needs to transmit an uplink signal corresponding to the received downlink signal in a slot n+k, the uplink transmission may be transmitted earlier than the time point of slot n+k by 2*Td. According to an embodiment of the disclosure, the delay time Td may be a delay time from the UE to the satellite, calculated based on location information of the satellite and the UE or may be a value corresponding thereto. The delay time Td may be a value obtained by dividing the distance between the UE and the satellite or a value corresponding thereto by the speed of light or a value corresponding thereto. The location of the satellite may be a value calculated based on slot n+k in which the UE performs uplink transmission. This is because the location of the satellite in slot n and the location of the satellite in slot n+k may be different depending on movement of the satellite.

A propagation delay time equal to or less than 1 ms may be generated in the terrestrial network in consideration of the distance to the base station within a maximum of about 100 km, but the distance to the satellite may be thousands of km and the distance between the satellite and the base station may also be thousands of km in the satellite network and thus a delay time in the satellite network may be significantly longer than that of the terrestrial network.

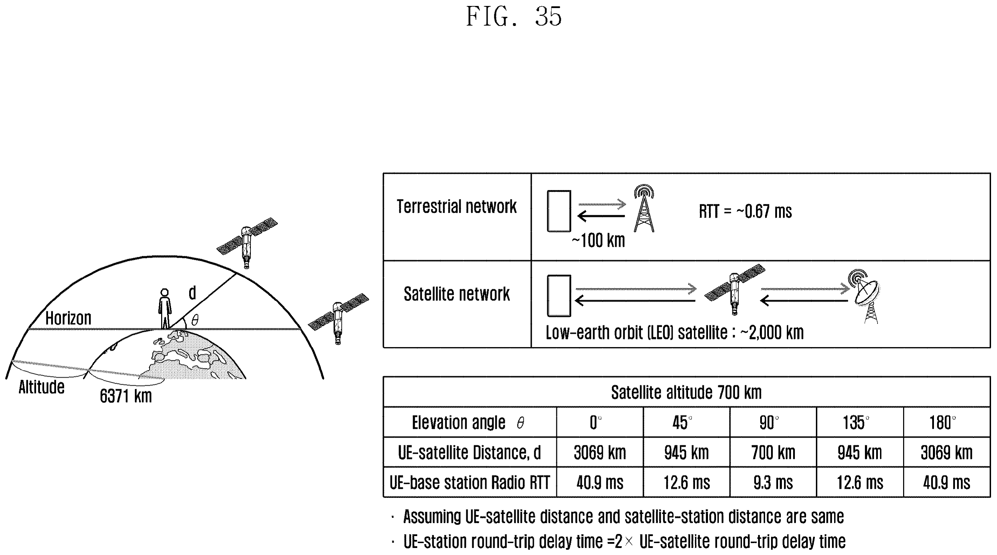

FIG. 35 is a diagram illustrating an example of a difference in a radio propagation delay time in a terrestrial network and a satellite network according to an embodiment of the disclosure.

The delay time may vary depending on altitude and an elevation angle of the satellite in satellite network communication, and FIG. 35 illustrates the distance between the UE and the satellite and a propagation round trip time according to the elevation angle when the altitude of the satellite is 700 km. In the case of the satellite network, a low earth orbit satellite is assumed, and a radio round trip time (radio RTT) (possibly including a round trip time spent for transmission of a signal between transceivers and a processing time in a counterpart node) may be from 40.9 ms to 9.3 ms when an elevation angle falls within 0 to 180 degrees. According to an embodiment, the delay time is only an example and may vary depending on altitude and orbit of the satellite, and, for example, the delay time may further increase averagely as altitude is higher.

In the terrestrial network, since a maximum delay time is within 1 or 2 ms, it is possible to match slot timing at which the base station performs downlink transmission and slot timing at which the base station performs uplink reception through timing advance provided in the LTE and 5G NT systems (i.e., indexes of the DL slot and the UL slot may match each other). That is, when the UE advances uplink transmission by a value of timing advance indicated by the base station from the downlink time point, a time point at which an uplink signal transmitted by the UE is received by the base station may become identical to the downlink time point of the base station. On the other hand, in the satellite network, it may be difficult to match slot timing at which the base station performs downlink transmission and slot timing at which the base station performs uplink reception through timing advance provided in the conventional LTE and 5G NR systems. This is because the propagation delay time generated in the satellite network is as large as tens of ms and thus is larger than a maximum value of timing advance provided in the conventional LTE and 5G NR systems.

A satellite navigation system may also be called a global navigation satellite system (GNSS), and the GNSS may include, for example, a GPS in the US, a GLONASS in Russia, Galileo in EU, Beidou in China, and the like. Of course, the disclosure is not limited to the above-described examples. The GNSS may include a regional navigation satellite system (RNSS), and the RNSS may include, for example, IRNSS in India, QZSS in Japan, KPS in Korea, and the like. A signal transmitted in the GNSS may include at least one of supplementary navigation information, a normal operation state of a satellite, a satellite time, satellite orbital power, a satellite altitude, a reference time, and information on various compensation data.

Meanwhile, in various embodiments of the disclosure, the NTN satellite may be a communication satellite serving to transmit a signal for the connection between the UE and the base station. Further, in various embodiments of the disclosure, the GNSS satellite may be a satellite for transmitting a signal of the satellite navigation system. Meanwhile, the UE may receive a signal from each of one or more GNSS satellites, calculate the location of the UE itself, based on the signal received from each of the one or more GNSS satellites, and identify a reference time in each of the one or more GNSS satellites. In case that the UE may calculate multiple locations of the UE, based on the signals received from multiple GNSS satellites, the UE may calculate the real location of the UE, based on an average of the multiple locations, a location corresponding to a received signal having the highest strength among the multiple locations, an average value of the multiple locations based on a signal strength (e.g., a method of applying a weighted value in the location corresponding to the signal having the highest signal strength), or the like. A scheme in which the UE calculates the location of the UE, based on the signals received from the multiple GNSS satellites may be implemented in various forms, and a detailed description thereof will be omitted.

In various embodiments of the disclosure, a time acquired from the GNSS or a time of the base station transferred by the base station may be, for example, based on a coordinated universal time (UTC), which is based on a time since 00:00:00 on January 1, 1900 of the Gregorian calendar. This may vary depending on a type of the GNSS system, and the reference time as shown in Table 26 below may be used.

[Table 26]

| |
|---|
| **- *gnss-DayNumber*** <br> - This field specifies the sequential number of days (with day count starting at 0) from the origin of the GNSS System Time as follows: <br> - GPS, QZSS, SBAS - Days from January 6th 1980 00:00:00 UTC (USNO); <br> - Galileo - Days from Galileo System Time (GST) start epoch, defined as 13 seconds before midnight between 21st August and 22nd August 1999; i.e., GST was equal to 13 seconds at August 22nd 1999 00:00:00 UTC; <br> - GLONASS - Days from December 31st 1995 21:00:00 UTC (SU), which is local UTC Moscow <br> - January 1st 1996 00:00:00, defined as UTC(SU) + 3 hours in [9]; <br> - BDS - Days from January 1st 2006 00:00:00 UTC (NTSC). <br> - NavIC - Days from NavIC System Time start epoch, defined as 13 seconds before midnight between 21st <br> - August and 22nd August 1999; i.e., NavIC System Time was equal to 00:00:00 at August 21st, 1999 <br> - 23:55:47 UTC (BIPM). |

In Table 26 above, NavIC may be NAVigation with Indian Constellation, QZS may be Quasi Zenith Satellite, QZSS may be Quasi-Zenith Satellite System, QZST may be Quasi-Zenith System Time, SBAS may be Space Based Augmentation System, and BDS may be BeiDou Navigation Satellite System.

Furthermore, the base station may indicate a type of the GNSS system which is a reference of the location or time information used by the base station itself through the satellite, and, for example, indications as shown in Table 27 below may be used.

[Table 27]

| Value of *gnss-TO-ID* | Indication |
|---|---|
| 1 | GPS |
| 2 | Galileo |
| 3 | QZSS |
| 4 | GLONASS |
| 5 | BDS |
| 6 | NavIC |
| 7-15 | reserved |

As described above, the UE may calculate required for a signal to be transmitted from the NTN satellite to the UE, based on the location of the UE calculated by the UE itself and the location of the NTN satellite received from the NTN satellite and determine a TA value based on the time. When the UE determines the TA value, the UE may also consider a distance from the NTN satellite to the base station on the ground, or a distance from the NTN satellite to another NTN satellite in case that the corresponding signal is transferred to the base station on the ground via another NTN satellite.

On the other hand, the UE may acquire reference time information from information transmitted by the GNSS satellite, compare time information transmitted by the NTN satellite with the reference time information acquired from the GNSS satellite, and calculate a time (propagation delay) required from the NTN satellite to the UE, based on the comparison result.

The location and time information of the NTN satellite may be transmitted by the base station to the UE through the SIB. The location and time information may be directly transmitted by the NTN satellite.

Assuming that the distance between the UE and the satellite or a value corresponding thereto is $d_{UE,sat}$ (the unit is km) and the speed of light is $v_c$ (the unit is km/sec), $N_{TA,UE\text{-}specific}$ may be determined based on $d_{UE,sat}/v_c$ (the unit is sec).

For example, $N_{TA,UE\text{-}specific}$ may be determined as $N_{TA,UE\text{-}specific} = \left\lfloor \dfrac{d_{UE,sat}}{v_c} \cdot \dfrac{1}{T_c} \right\rfloor$ and applied, which is a method of determining $N_{TA,UE\text{-}specific}$ by making a value of $\dfrac{d_{UE,sat}}{v_c} \cdot \dfrac{1}{T_c}$ into an integer. Alternatively/and additionally, the UE may determine $N_{TA,UE\text{-}specific}$ by one of the following methods or a combination of at least two of the following methods, and report information on $N_{TA,UE\text{-}specific}$ to the base station.

- Method 3-1: The UE may determine $N_{TA,UE\text{-}specific}=(D+a)/T_C$. Here, D is an integer, and a is a decimal larger than or equal to 0 and smaller than 1. Here, $D = \left\lfloor \dfrac{d_{UE,sat}}{v_c} \right\rfloor$ and $a = \dfrac{d_{UE,sat}}{v_c} - \left\lfloor \dfrac{d_{UE,sat}}{v_c} \right\rfloor$. That is, method

3-1 may be a method of separating a propagation delay between the UE and the satellite into an integer part and a decimal part and reporting only the integer or a value corresponding thereto or separately reporting the integer or the decimal or values corresponding thereto. By using the method, it is possible to reduce the number of bits used to report the propagation delay. Although it has been described above that the decimal part is determined to be an integer multiple of $T_c$, but may be determined to be a multiple of $16 \cdot 64/2^\mu$. Here, $\mu$ may refer to a subcarrier spacing of the current carrier or BWP or the related CORESET. Alternatively, $\mu$ may be a value used for a transmission/reception signal such as a PDSCH or PUSCH for transmission/reception. In this case, $\mu=0, 1, 2, 3, 4, 5$ may be values corresponding to subcarrier spacing 15 kHz, 30 kHz, 60 kHz, 120 kHz, 240 kHz, and 480 kHz, respectively. Alternatively, $\mu$ may be configured by the based station to determine $N_{TA,UE\text{-}specific}$ through higher signaling. Alternatively, $\mu$ may be used as a fixed value, and for example, may be fixed as one of 0, 1, 2, 3, 4, and 5 values, such as $\mu=5$.

- Method 3-2: The UE may determine $N_{TA,UE\text{-}specifi}$ to be a multiple of $16 \cdot 64/2^\mu$. It may be determined as

$N_{TA,UE\text{-}specific} = \left\lfloor \dfrac{d_{UE,sat}}{v_c} \cdot \dfrac{1}{16 \cdot 64 \cdot T_c/2^\mu} \right\rfloor \cdot 16 \cdot 64/2^\mu$. In the disclosure, $\lfloor X \rfloor$ may be a

maximum integer which is not larger than x and may round the number down at the integer unit, that is, drop the decimal value. Of course, the above example is not limiting, instead of rounding off using $\lfloor X \rfloor$, round up or round off from the decimal point may be used. Here, $\mu$ may refer to a subcarrier spacing of a current carrier or BWP, SIB, or a related CORESET. Alternatively, $\mu$ may be a value used for a transmission/reception signal such as a PDSCH or PUSCH for transmission/reception. In this case, $\mu=0, 1, 2, 3, 4, 5$ may be values corresponding to subcarrier spacing 15 kHz, 30 kHz, 60 kHz, 120 kHz, 240 kHz, and 480 kHz, respectively. Alternatively, $\mu$ may be configured by the based station to determine $N_{TA,UE\text{-}specific}$ through higher signaling. Alternatively, $\mu$ may be used as a fixed value, and for example, may be fixed as $\mu=5$. Alternatively, $\mu$ to be used for calculating $N_{TA,UE\text{-}specific}$ may be separately configured by the base station through the SIB or higher signaling.

- Method 3-3: $N_{TA,UE\text{-}specific}$ is determined as $N_{A,UE\text{-}specific} \cdot 16 \cdot 64/2^\mu$, wherein $N_{A,UE\text{-}specific}$ is an integer that makes

$N_{A,UE\text{-specific}}$ closest to $d_{UE,sat}/(V_c \cdot T_c)$. Alternatively, a minimum integer satisfying $N_{TA,UE\text{-specific}} \geq \dfrac{d_{UE,sat}}{v_c \cdot T_c}$

may be determined or a maximum integer satisfying $N_{TA,UE\text{-specific}} \leq \dfrac{d_{UE,sat}}{v_c \cdot T_c}$ may be determined.

Method 3-4: According to base station configuration, the UE may determine $N_{TA,UE\text{-specific}} = 0$. This may be because UEs within the coverage in a specific beam of the satellite have little difference in propagation delays generated in a link (which may be referred to as a service link) between the UEs and the satellite and thus uplink time synchronization may be performed by the conventional TA mechanism and $N_{TA,common}$. The base station may configure, through the SIB, whether the UE configures the value of $N_{TA,UE\text{-specific}}$ as $N_{TA,UE\text{-specific}} = 0$ or the UE uses the value of $N_{TA,UE\text{-specific}}$ calculated based on the locations of the satellite and the UE and the speed of light according to a GNSS signal. For another example, the base station may configure, through the SIB or separate RRC signaling, whether the UE continuously uses the value of $N_{TA,UE\text{-specific}}$ calculated based on a time point at which a PRACH preamble is transmitted based on the locations of the satellite and the UE and the speed of light according to the GNSS signal until there is a separate indication or configuration, or uses a newly calculated value of $N_{TA,UE\text{-specific}}$ at every uplink transmission time point. That is, the value of $N_{TA,UE\text{-specific}}$ may be determined as described below through Equation 5 above.

$N_{TA,UE\text{-specific}}$ is UE self-estimated TA to pre-compensate for the service link delay if configured, and $N_{TA,UE\text{-specific}}$ is 0 otherwise.

The methods of determining $N_{TA,UE\text{-specific}}$, based on the distance (or a corresponding value) between the UE and the satellite and the speed of light in methods 3-1 to 3-4 are merely examples, and there may be more various methods. For example, in case that the value of $N_{TA,UE\text{-specific}}$ is defined as an integer or an expression based on an integer is defined,

$$\left\lfloor \frac{h_{sat}}{v_c} \cdot \frac{1}{T_c} \cdot \frac{1}{K} \right\rfloor \cdot K \quad D = \left\lfloor \frac{d_{UE,satt}}{v_c} \cdot \frac{1}{K} \right\rfloor \cdot K$$

, or the like may be generally used to indicate the value as a multiple of a specific integer or rational number value K. Here, K may be a predetermined value or a value determined by signaling parameters. Method 2 corresponds to the case of $K = 16 \cdot 64/2^{\mu}$, and K may be determined according to at least one of the system parameters $\mu$ and $T_c$. The method has an advantage of expressing more various values through the same bit signaling, despite having a sparse feature in the granularity of $N_{TA,UE\text{-specific}}$ values.

Furthermore, in each of the methods, the values may be determined based on round up ( $\lceil X \rceil$ ) or round off Round(x) operations from the decimal place instead of using the round down operation such as $\lfloor X \rfloor$.

[Fourth embodiment]

The fourth embodiment provides a method by which the base station transmits $N_{TA,common}$ described through the first embodiment and the second embodiment to the UE and the UE performs calculations and application.

Hereinafter, methods by which the base station transfers $N_{TA,common}$ information to the UE by using configuration and indication will be described, and one or more of the methods may be combined and applied.

- Method 4-1: The base station may configure one offset value for the UE through RRC signaling. A value configured through RRC signaling is referred to as $T_{A,common}$, and $N_{TA,common}$ may be determined based thereon.
- Method 4-2: The base station may indicate one offset value to the UE through a MAC CE. A value configured through a MAC CE is referred to as $T_{A,common}$, and $N_{TA,common}$ may be determined based thereon. The method has an advantage compared to method 4-1 in that the base station and the UE may clearly identify a time point at which the base station and the UE apply $N_{TA,common}$. By way of example, $N_{TA,common}$ may be applied after a predetermined time based on a time point at which the MAC CE is received or a time point at which ACK is transmitted in response of reception of the MAC CE. For example, the base station may transfer $T_{A,common}$ in unit of msec through a 8-bit MAC CE and indicate 0 ms to 255 ms. Here, $N_{TA,common}$ is determined as $N_{TA,common} = T_{A,common}/(1000 \cdot T_c)$.
- Method 4-3: The base station may configure one or more offset values to the UE through higher-layer signaling. Alternatively, the values may be pre-configured. The configured values may become candidate values of $T_{A,common}$, and the base station may indicate one of the candidate values through a MAC CE.
- Method 4-4: The base station may configure one offset value for the UE through an SIB. A value configured through an SIB is referred to as $T_{A,common}$, and $N_{TA,common}$ may be determined based thereon. The UE calculates and applies TA by using the value of $N_{TA,common}$ when transmitting a PRACH preamble in an initial access process. Subsequently, $\Delta T_{A,common}$ may be indicated to the UE through a MAC CE, and the UE may use $\Delta T_{A,common}$ to calculate the change in $N_{TA,common}$, which may be calculated as $N_{TA,common(new)} = N_{TA,common(old)} + (\Delta T_{A,common} - x) \cdot y$. In the above, x and y may be determined according to the number of bits and the unit for transfer of $\Delta T_{A,common}$. For example, it may be determined as $N_{TA,common(new)} = N_{TA,common(old)} + (\Delta T_{A,common} - M) \cdot 16 \cdot 64/2^{\mu}$. Here, a value of M may be 31, in the case that the maximum value of $\Delta T_{A,common}$ which is indicated through the MAC CE is greater than 63, the M value may be greater than or equal to 31, and in the case that the maximum value of $\Delta T_{A,common}$ is smaller than 63, the M value may be smaller than or equal to 31.

- Method 4-5: The base station may indicate one offset value to the UE through a MAC CE. The configured value is referred to as $T_{A,common}$, and $N_{TA,common}$ may be determined based thereon. The method has an advantage compared to method 4-1 in that a time point at which apply $N_{TA,common}$ is applied between the base station and the UE may be clearly defined. By way of example, $N_{TA,common}$ may be applied after a predetermined time based on a time point at which the MAC CE is received or a time point at which ACK is transmitted in response of reception of the MAC CE. For example, the base station may transmit $T_{A,common}$ in units of $16 \cdot 64 \cdot T_c/2^{\mu}$ sec through a MAC CE of about 19 bits or 24 bits. Here, $N_{TA,common}$ is determined as $N_{TA,common} = T_{A,common} \cdot 16 \cdot 64/2^{\mu}$. The number of bits of the MAC CE is merely an example and another value may be applied.

- Method 4-6: The base station may indicate one offset value to the UE through a MAC CE. The configured value is $T_{A,common}$, and $N_{TA,common}$ may be determined based on an altitude of the satellite. The method has an advantage compared to method 4-5 in that the number of bits to be transmitted may be reduced. For example, the base station may transmit $T_{A,common}$ in units of $16 \cdot 64 \cdot T_c/2^{\mu}$ sec through a MAC CE of about 16 bits. Here, $N_{TA,common}$ is determined as $N_{TA,common} = \dfrac{h_{sat}}{v_c} \cdot \dfrac{1}{T'_c} + T_{A,common} \cdot 16 \cdot 64/2^{\mu}$ . In the above, $h_{sat}$ may be the altitude of the satellite. This may mean that when the satellite is at a specific altitude, the minimum distance between the UE and the satellite is the specific altitude and thus the base station signals only the remaining additional distance through $T_{A,common}$. The number of bits of the MAC CE is merely an example and another value may be applied.

In the above equation, a value of $\dfrac{h_{sat}}{v_c} \cdot \dfrac{1}{T'_c}$ may be defined to be an integer or a rational number through a method similar to the third embodiment. For example, in addition to the integer or rational conversion based on the round down operation as in $\left\lfloor \dfrac{h_{sat}}{v_c} \cdot \dfrac{1}{T'_c} \right\rfloor$ or $\left\lfloor \dfrac{h_{sat}}{v_c} \cdot \dfrac{1}{T'_c} \cdot \dfrac{1}{K} \right\rfloor \cdot K$ , various integer or rational conversion schemes may be applied to the third embodiment, based on the $h_{sat}$ value instead of the $d_{UE,sat}$ value. Of course, an integer or rational conversion scheme similar to the above description may be applied to a total value of

$$\dfrac{h_{sat}}{v_c} \cdot \dfrac{1}{T'_c} + T_{A,common} \cdot 16 \cdot 64/2^{\mu} .$$

For example, it may be defined that

$$N_{TA,common} = \left\{ \dfrac{h_{sat}}{v_c} \cdot \dfrac{1}{T_c \cdot 16 \cdot 64/2^{\mu}} + T_{A,common} \right\} \cdot 16 \cdot 64/2^{\mu} ,$$

and this case is the same scheme as the case considering $K = 16 \cdot 64/2^{\mu}$ in

$$\left\lfloor \frac{h_{sat}}{v_c} \cdot \frac{1}{T_c} \cdot \frac{1}{K} \right\rfloor \cdot K .$$

Further, for the operation used for the integer or rational conversion scheme, various other operations such as round up and round off as well as round down may be applied.

- Method 4-7: The base station may transmit the value of $N_{TA,common}$ at the time point of reception thereof through the SIB and information on a rate of the change in $N_{TA,common}$. The value of $N_{TA,common}$ and the information on the change rate of $N_{TA,common}$ may be transmitted to a specific UE through RRC signaling rather than the SIB, and the transmission method may vary depending on a state of the UE (RRC_idle, RRC_inactive, or RRC_connected).

The information on the change rate of $N_{TA,common}$ may be transmitted through one, two, or three parameters via the SIB. For example, if information on the change rate is transferred by a single parameter A, when the time point at which $N_{TA,common}$ is transferred through the SIB is t1 and the time point at which uplink transmission is performed is t2, $N_{TA,common(t2)}$ corresponding to $N_{TA,common}$ applied by the UE at t2 may be calculated as $N_{TA,common(t2)} = N_{TA,common(t1)}$ +(t2-t1)·A. Here, units of t1 and t2 may be msec, and the unit of A may be Tc/msec. That is, A may indicate how many Tcs per 1 msec the value of $N_{TA,common}$ has changed. For another example, if information on the change rate is transferred by two parameters A and B, when the time point at which $N_{TA,common}$ is transferred through the SIB is t2 - t1 and the time point at which uplink transmission is performed is t2, $N_{TA,common(t2)}$ corresponding to $N_{TA,common}$ applied by the UE at t2 may be calculated as $N_{TA,common(t2)} = NT_{A,common(t1)}$ +(t2-t1)$^2$·B+(t2-t1)·A. (When the information on the change rate is transmitted through n parameters, it is possible to express in the form of an nth order polynomial with respect to difference (t2-tl) between the two time points). Here, units of t1 and t2 may be msec, the unit of A may be Tc/msec, and the unit of B may be Tc/msec^2. That is, A may indicate how many Tcs per 1 msec the value of $N_{TA,common}$ has changed and B may indicate how many Tcs per 1 msec the change rate in $N_{TA,common}$ value has changed.

[Fifth embodiment]

The fifth embodiment provides a method and an apparatus in which the base station transmits $K_{offset}$ which is a parameter for determining timing for transmitting a second signal with regard to a first signal transmitted by the base station to the UE.

The base station may indicate a time point at which the UE transmits the second signal corresponding to the first signal while transmitting the first signal, by using higher signaling and DCI. For example, a PDSCH is transmitted and HARQ-ACK feedback therefor may be indicated by an HARQ-ACK timing-related indicator of bit fields of the DCI scheduling the PDSCH. However, in the satellite communication, a delay time between the UE and the base station is very large, and thus the offset value indicated by the conventional DCI cannot indicate correct timing. Accordingly, the base station may transmit a $K_{offset}$ value which is an additional timing offset to the UE through the SIB, and the UE may determine transmission timing of the second signal (uplink transmission) by adding the offset $K_{offset}$.

The base station may update the $K_{offset}$ value to the UE through RRC signaling in an RRC_connected state after initial access of the UE. However, when the update is performed only through RRC signaling, the base station and the UE may have different $K_{offset}$ during a time interval in which an RRC reconfiguration is performed. In this case, the transmission and reception of the second signal may not be correctly performed. In order to remove such an ambiguity time interval, the base station may configure multiple values of $K_{offset}$ in the UE and indicate one of the configured values of $K_{offset}$ through a MAC CE. Accordingly, the UE may apply the updated $K_{offset}$ value from a determined time point after the MAC CE is received.

For example, candidate values of $K_{offset}$ values may be configured according to indexes through RRC signaling as shown in Table 28 below.

[Table 28]

| index | K_offset |
|-------|----------|
| 0 | 100 |
| 1 | 120 |
| 2 | 140 |
| 3 | 160 |

(continued)

| index | K_offset |
|-------|----------|
| 4 | 180 |
| 5 | 200 |
| 6 | 220 |
| 7 | 240 |

Table 28 shows an example in which $K_{offset}$ is configured at regular intervals through eight indexes and various other configurations are possible. In case that the values of index i are 0, 1, 2, ..., $2^M$-1, which are $2^M$ (M is an integer such as 2, 3, 4, ...) in number, and in case that the $K_{offset}$ value of the case of index i is $K_{offset}(i)$, the values may be defined to have a uniform interval such as $K_{offset}(i) = K_{offset}(0) + (i - 1)*A$ (A is a positive constant) for the case of i > 0. Of course, a value of M may be variable according to a system configuration, and a value of A may also be variably configured according to the value of M. Further, some of the indexes may be defined as a reserved field. When the maximum value of $K_{offset}$ excluding the reserved field is $K_{offset}(imax)$, there may be a relation of $A = (K_{offset}(i_{max}) - K_{offset}(0))/i_{max}$.

This is merely an example configured of values having a uniform difference, and generally, may not be configured of values of uniform differences as a whole. For example, values having different differences may be configured according to an index range. (a value of $i_m$ may be simply configured as $2^{M-1}$ or generally configured as another integer value.)

$$1 \leq i < i_m,$$

$$K_{offset}(i) = K_{offset}(0) + (i - 1)*A1$$

$$i_m \leq i \leq i_{max},$$

$$K_{offset}(i) = K_{offset}(i_m) + (i - i_m)*A2$$

A1 and A2 are different positive constants, and $A1 = (K_{offset}(i_m) - K_{offset}(0))/i_m$, $A2 = (K_{offset}(i_{max}) - K_{offset}(i_m))/(i_{max} - i_m)$.

Thereafter, the base station may transmit an index to the UE in slot n through a MAC CE, and the UE may transmit the second signal by applying indicated $K_{offset}$ in slot n+k. According to an embodiment of the disclosure, a value of k may be configured or may be determined according to subcarrier spacing.

[Sixth embodiment]

The UE supporting an non-terrestrial network (NTN) may also operate in a terrestrial network (TN). In case that a wireless access scheme (e.g., 3GPP NR) operating in the terrestrial network and a wireless access scheme (e.g., 3GPP LTE NB-IoT) operating in the satellite network are different, the UE may operate by turning on only one of the wireless access schemes because it may be impossible to turn on the wireless access schemes between different types at the same time or it may be disadvantageous in terms of power consumption to turn on the different schemes at the same time. Turning on a wireless access may mean operating at least one of a chip or a hardware device or a software device supporting the wireless access. In such a situation, the UE may need a method to determine whether the network accessed is an NTN or a TN.

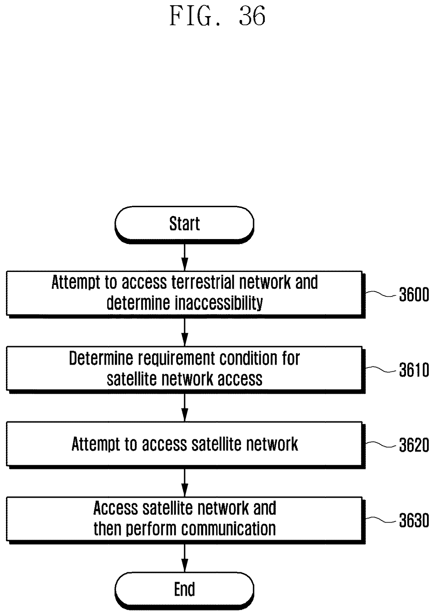

FIG. 36 is a flowchart for a UE to perform satellite network access according to an embodiment.

In operation 3600, the UE may attempt to access a terrestrial network, but may determine that the terrestrial network access is unavailable. For example, the UE may assume a situation in which a terrestrial network-related wireless access scheme is used first. In such a situation, if the synchronization signal and/or reference signal transmitted from the terrestrial network is not detected, the UE may turn off the wireless access scheme for the terrestrial network and attempt to access the wireless access scheme for the satellite network.

In operation 3610, the UE may determine requirements for satellite network access. For example, the UE may determine whether to turn on a wireless access method for the satellite network based on information related to the requirements for satellite network access.

For example, in a situation where the UE has hardware capable of receiving a GPS signal, the wireless access scheme for the satellite network is turned on only when the GPS signal is caught, and the wireless access scheme for the satellite network is not turned on when the GPS signal is not caught. For example, the UE may determine that a GPS signal is caught only in a case where a GPS signal reception intensity is equal to or higher than a predetermined threshold value and/or the UE's location information may be identified within a predetermined error range via the GPS signal.

As another example, the UE user may determine on his/her own whether to turn on or off a wireless access scheme for a satellite network through the UE, and a condition (conditions) for activating the UE to allow the UE user to determine whether to use the wireless access scheme for the satellite network may include, for example, that a terrestrial network signal is not caught with respect to the UE and/or a GPS signal is caught. If the condition(s) are not satisfied, it may be impossible for the UE user to turn on the wireless access scheme for the satellite network.

If the wireless access scheme for the satellite network is turned on, in operation 3620, the UE may perform satellite network access, and if initial access is completed and related higher information is received from the satellite network, in operation 3630, the UE may then transmit and receive control and data information with the satellite.

The above description was for the case in which the wireless access scheme for the terrestrial network and the wireless access scheme for the satellite network are different, but there may also be a situation in which the wireless access scheme for the terrestrial network and the wireless access scheme for the satellite network are the same. In this case, the operations and condition determinations described above may not be necessary.

One of the methods for the UE to distinguish the terrestrial network and the satellite network may be to determine whether satellite-related information is included through system information (or may be referred to as a system information block (SIB)) received by the UE. Examples of the satellite-related information may include the position and speed of the satellite and/or the validity time of the satellite information. If the satellite-related information is not included in the system information, the UE may determine that the wireless access method for the terrestrial network is used. A base station or a base station connected to a ground station may distinguish whether a UE accessing the corresponding network is a UE accessed via a terrestrial network or a UE accessed via a satellite network through at least one of a time resource, a frequency resource, a code, a preamble, or a sequence through which the UE performs an initial access. For example, when UE A performs initial access through resource 1 and UE B performs initial access through resource 2, the base station may determine that UE A has performed initial access through a terrestrial network and UE B has performed initial access through a satellite network. In this case, the base station may distinguish in advance the initial access resource for the terrestrial network and the initial access resource for the satellite network. In addition, the base station may distinguish UEs having different capabilities in a similar manner, even if the UEs access the same satellite network.

[Seventh embodiment]

In the seventh embodiment, a procedure for performing handover of a UE in a satellite network will be described below. Specifically, handover may occur in four scenarios. A first scenario may be a case in which a beam serviced by one satellite is changed in a situation in which the UE performs communication, based on the same satellite and the same gateway (or base station). This may be referred to as intra-satellite handover with the same feeder link (i.e., same gateway). A second scenario is a case in which the same satellite is used but a gateway (or base station) connected to the satellite is changed. This may be referred to as "intra-satellite handover with different feeder link" (i.e., gateway switch). A third scenario is a case in which a satellite connected to the UE through a service link is changed, but the gateway (or base station) to which the corresponding satellites are connected is the same. This may be referred to as intersatellite handover with the same gateway. A last scenario may be a case in which both a satellite connected to the UE through a service link and a gateway connected to the satellite are changed. This may be referred to as inter-satellite handover with gateway switch.

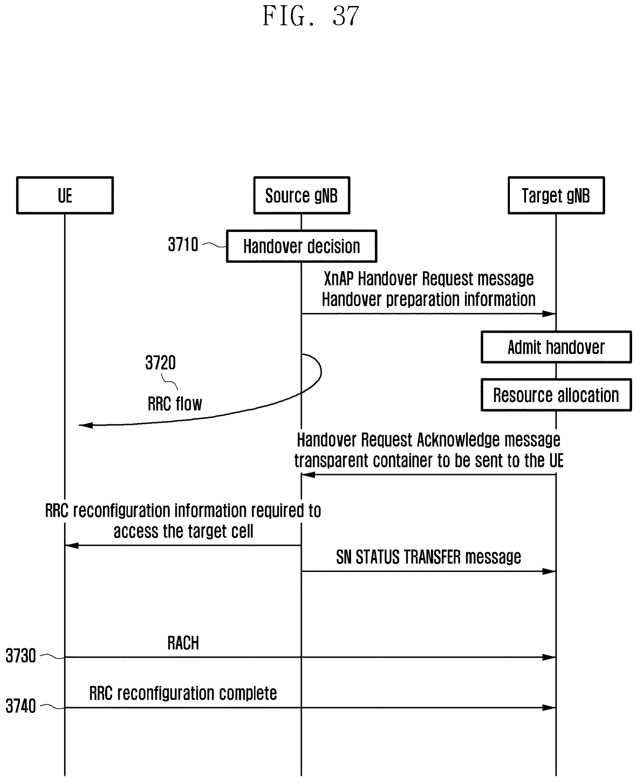

FIG. 37 is a diagram illustrating a handover procedure of a UE according to an embodiment of the disclosure. With regard to inter-gNB handover illustrated in FIG. 37, the term "cell" may be interpreted to have the same meaning as a base station, gNB, or satellite.

A source cell may receive an L3 measurement value that the UE reports for each cell as a cell-specific parameter, compare the L3 measurements for multiple cells, and determine whether to perform a handover and a target cell for the handover. In case that a handover is determined, the source cell may notify a target cell of the handover determination, and the target cell may determine whether to permit the handover in consideration of a cell traffic load and the like.

In case that the handover is approved, the target cell may transfer the approval of the handover to the source cell, and may transfer, to the UE that will perform the handover, information regarding wireless resources and other configurations that the UE should use to access the target cell, through the RRC. In this case, the target cell may not directly transfer, to the UE, information on wireless resources and other configurations that the UE should use to access the target cell, but may transfer the information to the source cell, and then transfer the information through the wireless link that the source cell uses for communication with the corresponding UE. The UE having received the information on the wireless resource and other configurations to be used in order to access the target cell may attempt to access the target cell through a RACH process, and, in case that the access is successful, the UE may modify all related configurations to contents necessary for communication with the target cell through RRC reconfiguration. The UE may release a connection with an existing source cell and establish a connection to make the target cell a new serving cell at the same time.

Referring to FIG. 37, the existing handover procedure may be composed of the following four steps.

Step 3710: A step in which a source cell determines a handover, based on L3 measurement

Step 3720: A step in which a target cell approves the start of the handover procedure and transfers the RRC basic configuration to the UE

Step 3730: A step in which the UE attempts to access the target cell through the RACH

Step 3740: A step or reconfiguring a wireless link of the UE to match the target cell, terminating the existing connection with the source cell, and selecting the target cell as a new serving cell

Steps 3710 to 3730 need to be sequentially performed after a handover is determined, and thus, in step 3740, a latency, an interruption time, a signaling overhead, and the like may occur.

In step 3730, a process of aligning a downlink or uplink between the target cell and the UE through the RACH has been considered. However, unlike terrestrial networks, in the case of low-earth-orbit (LEO) satellites in the satellite network, even if there is almost no movement of a UE, the satellite may move along a predetermined orbit over time, which may frequently cause the UE to handover to a different satellite or to a different beam inside the same satellite. Therefore, performing a RACH operation, such as step 3730, each time may cause an unnecessary signal transmission and reception process. A handover without step 3730 may be referred to as a RACH-less handover.

The RACH-less handover may be possible basically when the synchronization requirements of the first uplink signal such as PUCCH, PUSCH, SRS, PRACH, and msgA in the target cell are satisfied as shown in [Table 29]. Specifically, the RACH-less handover is possible when the initial transmission timing error of the UE is within $\pm T_{e\_NTN}$. Here, the $T_{e\_NTN}$ value is determined according to the SSB and uplink signal subcarrier spacing in [Table 29].

[Table 29]

| Frequency Range | SCS of SSB signals (kHz) | SCS of uplink signals (kHz) | $T_{e\_NTN}$ |
|---|---|---|---|
| 1 | 15 | 15 | $29*64*T_c$ |
| | | 30 | $24*64*T_c$ |
| | | 60 | N/A |
| | 30 | 15 | $24*64*T_c$ |
| | | 30 | $22*64*T_c$ |
| | | 60 | N/A |
| Note 1: $T_c = 1/(480 \cdot 10^3 \cdot 4096)$ (s) | | | |

As another example, the RACH-less handover may be possible when the UE has been provided with valid information (satellite orbit information, TA-related information, valid time, synchronization signal information, and beam information) of the target cell. For another example, the RACH-less handover be possible when the base station guarantees that uplink transmission is performed while satisfying a common TA information and a UE processing timing requirement.

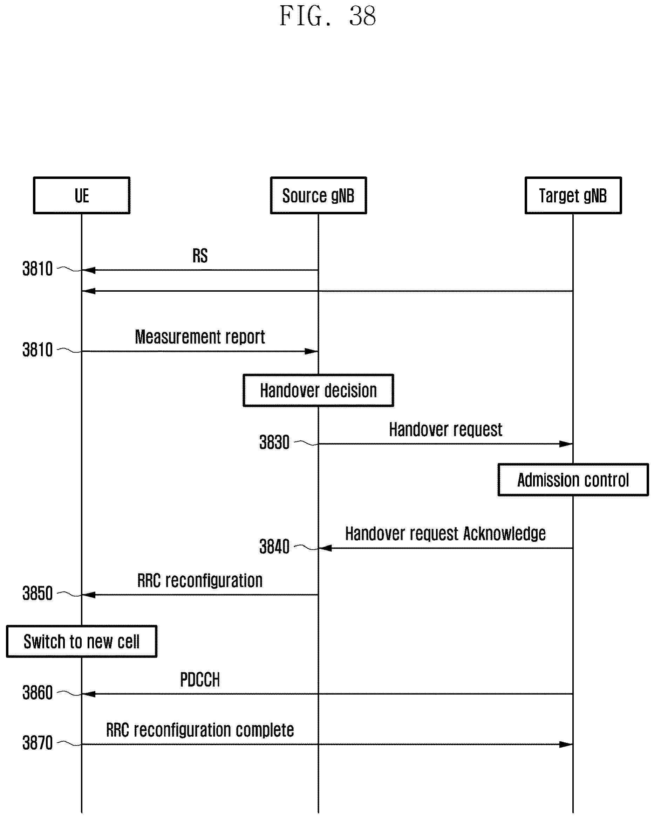

FIG. 38 is a diagram illustrating a handover procedure of a UE according to an embodiment.

The UE may measure 3810 a reference signal (RS) in a resource configured by a source gNB and a target gNB, respectively. In this case, the RS may be an SSB or a CSI-RS or a positioning RS (PRS). In addition, the UE reports 3820 the measured RS signal value to the source gNB. Here, the reported value may include at least one of a reference signal received power (RSRP), a reference signal received quality (RSRQ), or a reference signal strength indicator (RSSI) value based on an L1 or L3 index value for each RS. Thereafter, the source gNB determines whether to perform a handover of the UE, and transmits 3830 a handover request signal to the target gNB to which the UE performs the handover. If the target gNB transmits 3840 a handover request acceptance signal to the source gNB, the source gNB transfers 3850 handover-related information received from the target gNB to the UE. Whether to perform RACH-less handover may be determined in step 3830 and step 3850 described above. Alternatively, although not described above with reference to FIG. 38, it may be possible to determine the same in an intermediate process. In case that RACH-less handover is indicated, the UE does not transmit message 1 (PRACH or random access) and receive message 2 (random access response) separately from the target gNB, and transfers 3870 an RRC reconfiguration complete message to the target gNB via a PUSCH resource. The PUSCH resource may be provided by at least one of the following two methods.

Method A-1: First, when transferring, in step 3850, an RRC reconfiguration message including a handover command to a UE, it may be possible to provide PUSCH resource information to be used by the UE in step 3870. The corresponding PUSCH resource may be a periodically configured resource, and it is possible to provide configuration information such as a time and frequency resource, an MCS, and the like together. In addition, when the UE selects a PUSCH resource for transmission of an RRC reconfiguration complete message, the UE may select a PUSCH resource associated with an SSB resource having the largest received signal, based on a result value obtained by measuring candidate SSB resources of the target cell. It may be possible that information on association between the SSB resource and the PUSCH resource is transmitted together through the RRC reconfiguration message in advance. In this case, the UE may not perform PDCCH 3860 monitoring for determining a PUSCH resource for RRC reconfiguration complete transmission in FIG. 38. In addition, the periodically configured PUSCH resource may be released when the UE receives a confirmation message from the target gNB after transmitting the RRC reconfiguration complete message.

Method A-2: Second, the UE may receive DCI including scheduling information through PDCCH monitoring in step 3860, and then transmit 3870 an RRC reconfiguration complete through a PUSCH resource based on the DCI. In this case, when the UE is monitoring a PDCCH, the base station does not know the SS/PBCH block selected by the UE in the RACH procedure because the RACH procedure has been omitted, and thus, it is unclear which beam the base station should use to transmit the PDCCH to the UE. Specifically, in the RACH procedure, the UE basically selects a PRACH resource for RACH transmission to perform random access, and when selecting the PRACH resource, the UE selects the PRACH resource according to a result of SSB measurement transmitted by the corresponding base station. For reference, mapping between the corresponding PRACH resource and the SSB resource is transferred to the UE through a higher signal in advance. Therefore, when the base station receives the mapping from a UE through a specific PRACH resource, the base station may determine an SSB resource (or beam) preferred by the corresponding UE, and may utilize the same when transmitting a downlink signal in a subsequent RACH operation. From the UE's perspective, it may be possible to assume that a DM-RS antenna port for PDCCH reception within a CORESET is quasi-co-located (QCL) with the SS/PBCH block selected in the most recent random access procedure performed by the UE. This may be applied only when there is no indication of a MAC CE activation command indicating a TCI state for the corresponding CORESET after the random access procedure. Alternatively, the above may be applied only to a random access not indicated by a PDCCH command for indicating a contention-based random access procedure.

The methods described above may be combined, and for example, in case that method A-1 is not applied, the UE may determine that method A-2 is applied. For another example, in case that method A-2 is not applied, the UE may determine that method A-1 is applied.

For reference, in a wireless communication or satellite communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 30 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM)influenced by average gain, or 4) beam management (BM) influenced by a spatial parameter. Accordingly, four types of QCL relations are supported in NR as in Table 30 below.

[Table 30]

| QCL type | Large-scale characteristics |
|---|---|
| A | Doppler shift, Doppler spread, average delay, delay spread |
| B | Doppler shift, Doppler spread |
| c | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 31 below. Referring to Table 31, the base station may configure one or more TCI states for the UE, thereby informing of a maximum of two kinds of QCL relations (qcl-Typel, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a

47

QCL type as in Table 30 above.

[Table 31]

```
TCI-State ::=                        SEQUENCE {
    tci-StateId                      TCI-StateId,
    (ID of corresponding TCI state)
    qcl-Type1                        QCL-Info,
    (QCL information of first refernece RS of RS (target RS) referring to
corresponding TCI state ID)
    qcl-Type2                        QCL-Info              OPTIONAL,
    -- Need R
    (QCL information of second refernece RS of RS (target RS) referring to
corresponding TCI state ID)
    ...
}

QCL-Info ::=                         SEQUENCE {
    cell                             ServCellIndex              OPTIONAL,  -
- Need R
    (serving cell index of reference RS indicated by corresponding QCL
information)
    bwp-Id                           BWP-Id
    OPTIONAL, -- Cond CSI-RS-Indicated
    (BWP index of reference RS indicated by corresponding QCL information)
    referenceSignal                  CHOICE {
        csi-rs                           NZP-CSI-RS-ResourceId,
        ssb                              SSB-Index
        (one of CSI-RS ID or SSB ID indicated by corresponding QCL
information)
    },
```

```
    qcl-Type                         ENUMERATED {typeA, typeB, typeC,
typeD},
    ...
        }
```

Specific TCI state combinations applicable to a PDCCH DMRS antenna port may be given in Table 32 below. The fourth row in Table 32 corresponds to a combination assumed by the UE before RRC configuration, and no configuration is possible after the RRC.

[Table 32]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

With regard to a CORESET having a configured index of 0 (CORESET #0), if the UE has failed to receive a MAC CE activation command regarding the TCI state of CORESET #0, the UE may assume that the DMRS transmitted in CORESET #0has been QCL-ed with a SS/PBCH block identified in the initial access process,or in a noncontention-based random access process not triggered by a PDCCH command.

With regard to a CORESET having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

Therefore, usually, a UE transfers the preferred SSB beam information to the base station through a random access procedure, and the base station transmits a downlink signal to the UE by utilizing the same. However, in RACH-less, since the operation in which the UE selects an RPACH resource, transmits RACH (or random access) information to the base station, and the UE receives a response message (or RAR) information from the base station is omitted, the base station and the UE need to identify a preferred RS signal. In other words, in RACH-less handover, it is necessary to determine which RS or SS/PBCH block the DM-RS antenna port has a QCL relationship with, in order to perform downlink control channel search of the UE. To this end, at least one of the following methods or a combination of some of the following methods may be considered. In the case where a combination of the methods is considered, it is possible to select the same by a base station higher signal configuration in advance. Alternatively, one of the methods may be determined according to the satellite altitude or elevation angle.

Method 38-1: This is a method in which the UE directly determines an RS having a QCL relationship with a DM-RS antenna port. Specifically, when the UE transmits a measurement report to the source gNB based on the RS measured in FIG. 38, the UE selects a preferred RS (SS/PBCH block, CSI-RS, or the like) resource by the UE in the corresponding reporting information. In addition, in actual RACH-less handover, the UE may determine that the reported RS resource and the DM-RS antenna port for downlink control channel search are QCLed with each other. When the UE selects a resource, it is possible for the UE to explicitly report an RS resource value to be used for QCL together with a measurement result value. Alternatively, it may be possible for an RS resource value having a large reception signal quality or strength or size among the measurement result values reported by the UE to be implicitly selected as a resource used for QCL.

Method 38-2: This is a method in which the base station determines an RS having a QCL relationship with a DM-RS antenna port. In this case, the base station may be a source gNB or a target gNB. If the base station is a source gNB, when transmitting the RRC reconfiguration message 3850 including handover command information to the UE in FIG. 38, it may be possible to provide RS or SS/PBCH block configuration information to establish a QCL relationship with the DM-RS antenna port for downlink control channel search of the UE. Here, the format of the information may allow the entire or some of the parameters to be used, as described in Table 31. If the base station is a target gNB, when transmitting the handover request acceptance 3840 information to a source gNB in FIG. 38, it may be possible to provide RS or SS/PBCH block configuration information to establish a QCL relationship with the DM-RS antenna port for downlink control channel search of the UE. In addition, when transmitting an RRC reconfiguration 3850 message from the source gNB to the UE, it may be possible to transmit same to the UE based on information received from the target gNB.

Method 38-3: This is a method in which the base station determines an RS (SSB or CSI-RS) having a QCL relationship with a DM-RS port, as in method 38-2, and specifically, the base station may configure N TCI states for the UE through a higher signal and configure some of same as TCI states for a CORESET. The base station may indicate, to the UE through MAC CE signaling, one of TCI states for the CORESET. The UE receives a PDCCH based on beam information included in the TCI state indicated by the MAC CE signaling. Alternatively, the TCI state applied by the final UE may be applied by RRC signaling without a MAC CE. The base station may indicate one state in the TCI state list included in the CORSET configuration through a MAC CE. Thereafter, until another TCI state is indicated to the corresponding CORSET through another MAC CE, the UE considers that the same QCL information (e.g., beam #1) is applied to one or more search spaces connected to the CORESET. The PDCCH beam allocation method described above has a problem in that it is difficult to indicate a beam change faster than MAC CE signaling delay, and the same beam is applied to all CORESETs regardless of the search space characteristics, thereby making it difficult to flexibly use the PDCCH beam.

Method 38-4: This is a method of including, as in method 38-2 or 38-3, an RS (SSB or CSI-RS) having a QCL relation with the DM-RS of a PDDCH in a CORESET in a handover command information or an RRC reconfiguration message (or higher signal) and specifically, a method in which the base station may transmit N TCI states or a TCI state list for same to the UE through a higher signal. If multiple TCI state information is included in the corresponding higher signal, the UE may consider that a first value (or an n-th value or a last value) among the list is applied as QCL. If one TCI state information is included in the corresponding higher signal, the UE may consider that the corresponding value is applied as QCL. Alternatively, it is possible that a separate higher signal for configuring a separate default QCL value is transmitted to the UE, in addition to the higher signal message related to the TCI state. Therefore, if the UE does not receive MAC CE information regarding which TCI state to apply, among TCI states configured by a higher signal, it is possible to apply the default QCL value.

The methods described above may be usable before a DM-RS for PDCCH search within a CORESET is configured to have a QCL relation with a specific RS, through separate higher signal configuration, after the UE completes

49

handover to a target cell. Alternatively, the above-described methods may be methods applicable during the procedure in which the UE perform handover to the target cell within a serving cell or before the UE receives separate higher signal configuration information related to a separate PDCCH-related QCL after completing the handover. Alternatively, the above-described methods may be methods applicable until a random access procedure is performed in a separate target cell after the UE has completed handover to the target cell.

[Eighth embodiment]

Downlink synchronization may be performed using a synchronization signal of a primary synchronization signal/secondary synchronization signal (PSS/SSS) received from the base station. UEs having performed downlink synchronization may receive a master information block (MIB) and a system information block (SIB) from the base station, and acquire system information. Via a random-access procedure, the UE may perform uplink synchronization with the base station and establish a radio resource control (RRC) connection. In the random-access procedure, the UE may transmit a random-access preamble and message3 (msg3) to the base station via an uplink. In this case, when the random-access preamble and message3 are transmitted, uplink transmission power control may be performed. Specifically, the UE may receive parameters for the uplink transmission power control from the base station via the acquired system information (e.g., the SIB) or may perform the uplink transmission power control using a predetermined parameter. In another embodiment of the disclosure, the UE may measure reference signal received power (RSRP) from a path attenuation estimation signal transmitted by the base station, and may estimate a downlink path attenuation value as shown in Equation 7. In addition, based on the estimated path attenuation value, the UE may configure an uplink transmission power value for transmitting the random-access preamble and message3.

Downlink path attenuation = transmission power of base station signal - RSRP measured by UE        [Equation 7]

In Equation 7, the transmission power of the base station signal refers to transmission power of a downlink path attenuation estimation signal transmitted by the base station. The downlink path attenuation estimation signal transmitted by the base station may be a cell-specific reference signal (CRS) or a synchronization signal block (SSB). If the path attenuation estimation signal is a cell-specific reference signal (CRS), the transmission power of the base station signal may indicate transmission power of the CRS, and may be transmitted to the UE via a referenceSignalPower parameter of the system information. If the path attenuation estimation signal is a synchronization signal block (SSB), the transmission power of the base station signal may indicate transmission power of a secondary synchronization signal (SSS) and of a demodulation reference signal (DMRS) that is transmitted via a PBCH, and may be transmitted to the UE via an ss-PBCH-BlockPower parameter of the system information. The UE may receive, from the base station, RRC parameters for the uplink transmission power control via UE-specific RRC or common RRC. In this case, the received transmission power control parameters may be different from each other according to an uplink channel type and a signal type. That is, transmission power control parameters to be applied to transmission of a physical uplink control channel (PUCCH), a physical uplink shared channel (PUSCH), and a sounding reference signal (SRS) may be different from each other. In addition, as described above, a transmission power control parameter received by the UE from the base station via the SIB before RRC connection establishment or transmission power control parameters that the UE has used as predetermined values before the RRC connection establishment may be included in the RRC parameters transmitted from the base station after the RRC connection establishment. The UE may use an RRC parameter value, which is received from the base station after the RRC connection establishment, to control uplink transmission power. The UE may receive a path attenuation estimation signal from the base station. More specifically, after the RRC connection establishment of the UE, the base station may configure a channel state information-reference signal (CSI-RS) as the path attenuation estimation signal for the UE. In this case, the base station may transmit information on transmission power of the CSI-RS to the UE via a powerControlOffsetSS parameter of UE-dedicated RRC information. Here, powerControlOffsetSS may indicate a transmission power difference (offset) between the SSB and the CSI-RS. The UE may estimate the downlink path attenuation value and configure the uplink transmission power value. More specifically, the UE may measure a downlink RSRP by using the CSI-RS, and may estimate the downlink path attenuation value via Equation 7 by using the information on transmission power of the CSI-RS received from the base station. In addition, based on the estimated downlink path attenuation value, the UE may configure the uplink transmission power value for PUCCH, PUSCH, and SRS transmission. The UE may perform power headroom reporting (PHR) to the base station. A power headroom may indicate a difference between current transmission power of the UE and maximum output power of the UE. The UE may optimize system operation, based on the reported power headroom. For example, if a power headroom value reported to the base station by a specific UE is a positive value, the base station may allocate more resource blocks (RBs) to the UE, thereby increasing a system yield. The UE may receive, from the base station, a transmission power control command (TPC). If a power headroom value reported to the base station by a specific UE is a negative value, the base station may allocate fewer resources to the UE or may decrease transmission power of the UE via the TPC. Accordingly, the system throughput may be increased, or unnecessary power consumption of the UE may be decreased. In operation 18-50, the UE may update transmission power, based on the TPC command. In this case, the TPC command may be transmitted to the UE via UE-specific DCI or group common DCI. Therefore, the base station may dynamically control transmission power of the UE via the TPC command. The UE may perform uplink transmission based on the updated transmission power.

PUSCH transmission power may be determined by means of Equation 8 below.

[Equation 8]

$$P_{PUSCH}(i, j, q_d, l)$$

$$= \min \left\{ \begin{array}{c} P_{\text{CMAX,f,c}}(i), \\ P_{0_{\text{PUSCH,b,f,c}}}(j) + 10\log_{10}\left(2^\mu \cdot M_{RB,b,f,c}^{PUSCH}(i)\right) + \alpha_{\text{b,f,c}}(j) \cdot \text{PL}_{\text{b,f,c}}(q_d) + \Delta_{\text{TF,b,f,c}}(i) + f_{b,f,c}(i,l) \end{array} \right\} \text{[dBm]}$$

In Equation 8, $P_{\text{CMAX,f,c}}(i)$ denotes maximum transmission power configured for the UE with respect to carrier f of serving cell c at PUSCH transmission occasion i. $P_{0_{\text{PUSCH,b,f,c}}}(j)$ denotes a reference transmission power configuration value according to activated uplink bandwidth part (BWP) b of the carrier f of the serving cell c, and has different values according to various transmission types j. $P_{0_{\text{PUSCH,b,f,c}}}(j)$ may has various values according to a case where PUSCH transmission corresponds to a message3 PUSCH for random access or a case where the PUSCH is a configured grant PUSCH, or according to a scheduled PUSCH. $M_{RB,b,f,c}^{PUSCH}(i)$ denotes the magnitude of a frequency to which a PUSCH is allocated. $\alpha_{\text{b,f,c}}(j)$ denotes a compensation ratio value for path loss of UL BWP b of the carrier f of the serving cell c, and may be configured by a higher signal and may have different values according to j. $\text{PL}_{\text{b,f,c}}(q_d)$ denotes a downlink path loss estimation value of the UL BWP b of the carrier f of the serving cell c, and uses a value measured through a reference signal in an activated downlink bandwidth part. The reference signal may be an SS/PBCH block or a CSI-RS. The downlink path loss may be calculated as described above in Equation 7. In another embodiment of the disclosure, $\text{PL}_{\text{b,f,c}}(q_d)$ denotes a downlink path attenuation value and corresponds to path attenuation calculated by the UE as given in Equation 7. Depending on a higher signal configuration, the UE calculates the path attenuation, based on a reference signal resource associated with the SS/PBCH block or the CSI-RS. As the reference signal resource, one of various reference signal resource sets may be selected by a higher signal or an L1 signal, and the UE may calculate the path attenuation, based on the reference signal resource. $\Delta_{\text{TF,b,f,c}}(i)$ is a value determined by a modulation and coding scheme (MCS) value of a PUSCH at the PUSCH transmission occasion i of the UL BWP b of the carrier f of the serving cell c. $f_{b,f,c}(i, l)$ denotes a power control adaptation value and may dynamically control a power value by a TPC command.

The TPC command is divided into an accumulated mode and an absolute mode, and one of the two modes is determined by a higher signal. The accumulated mode is a mode in which a currently determined power control adaptation value is accumulated to a value indicated by the TPC command, and the power control adaptation value may be increased or decreased according to the TPC command and has a relationship of $f_{b,f,c}(i, l) = f_{b,f,c}(i - i_0, l) + \sum \delta_{PUSCH,b,f,c}$. $\delta_{PUSCH,b,f,c}$ is a value indicated by the TPC command. The absolute mode has a value determined by the TPC command regardless of the currently determined power control adaptation value and has a relationship of $f_{b,f,c}(i, l) = \delta_{PUSCH,b,f,c}$. Table 32 below shows values which may be indicated by the TPC command.

[Table 32] TPC command

| TPC Command Field | Accumulated $\delta_{PUSCH,b,f,c}$ or $\delta_{SRS,b,f,c}$ [dB] | Absolute $\delta_{PUSCH,b,f,c}$ or $\delta_{SRS,b,f,c}$ [dB] |
|---|---|---|
| 0 | -1 | -4 |
| 1 | 0 | -1 |
| 2 | 1 | 1 |
| 3 | 3 | 4 |

Equation 9 below is an equation for determining PUCCH transmission power.

[Equation 9]

$$P_{PUCCH,b,f,c}(i,q_u,q_d,l)$$

$$= \min \left\{ \begin{array}{c} P_{\text{CMAX,f,c}}(i), \\ P_{0_{\text{PUCCH}},b,f,c}(q_u) + 10\log_{10}\left(2^{\mu} \cdot M_{RB,b,f,c}^{PUCCH}(i)\right) + PL_{b,f,c}(q_d) + \Delta_{F_{\text{PUCCH}}}(i) + \Delta_{\text{TF},b,f,c}(i) + f_{b,f,c}(i,l) \end{array} \right\}$$

[dBm]

In Equation 9, $P_{0_{\text{PUCCH}},b,f,c}(q_u)$ denotes a reference transmission power configuration value, and may have different values according to various transmission types $q_u$ and may be changed by a higher signal such as an RRC or MAC CE. If the value is changed via an MAC CE, and HARQ-ACK for a PDSCH on which the MAC CE has been received is transmitted in slot k, the UE determines that the value is applied starting from slot k + $k_{\text{offset}}$. $k_{\text{offset}}$ has different values according to respective subcarrier spacings and mayhave, for example, 3ms. $M_{RB,b,f,c}^{PUCCH}(i)$ denotes the size of a frequency resource domain to which the PUCCH is allocated. $PL_{b,f,c}(q_d)$ denotes a path attenuation estimation value of the UE, and as described above in Equation 7, is calculated by the UE, based on a specific reference signal among various CSI-RSs or SS/PBCHs according to the higher signal configuration and according to the type. The same $q_q$ is applied to repetition transmission PUCCHs. The same $q_u$ is applied to repetition transmission PUCCHs.

In the case of RACH-less handover, a path loss needs to be calculated to determine transmission power for transmitting the PUSCH (or msg-3 PUSCH) for transmitting RRC reconfiguration complete information, which is described in FIG. 37 or FIG. 38. In Equation 7, which respect to $PL_{b,f,c}(q_d)$, the UE may calculate the path loss based on a reference signal resource associated with the SS/PBCH block or CSI-RS through higher signal configuration for the target cell in order to calculate the downlink path loss value. If the value is not provided, the UE may be able to calculate the path loss by using a reference signal resource from the SS/PBCH block used to receive MIB information from the target cell. Other parameters of [Equation 7] may also be transferred to the UE by the serving cell as a higher signal after receiving relevant information from the target cell in advance.

The UE may be able to determine a reference signal (RS) for path loss calculation differently depending on whether the method A-1 or the method A-2 is applied to determine a transmission power value of a PUSCH including the above-described RRC reconfiguration complete message information. For example, when the UE transmits a PUSCH using method A-1, the UE may be able to calculate a path loss, based on an SS/PBCH block (or SSB) that is associated with the corresponding PUSCH resource in advance through a higher signal. As another example, when the UE transmits a PUSCH using method A-2, the UE may be able to calculate a path loss, based on an SS/PBCH block (or SSB) having a QCL relationship, in advance, with the DM-RS of a PDCCH within a CORESET that the UE searches to schedule the corresponding PDCCH.

The first embodiment to the eighth embodiment of the disclosure have been separately described for convenience of description, but the respective embodiments include operations associated with each other, and thus two or more embodiments may be combined. Further, methods of the respective embodiments are not mutually exclusive, and one or more methods may be combined and performed.

The transmission and reception method of the base station, the satellite, and the UE or a transmission terminal or a reception terminal for performing the embodiments of the disclosure is described, and a receiver, a processor, and a transmitter of the base station, the satellite, and the UE should operate according to each embodiment.

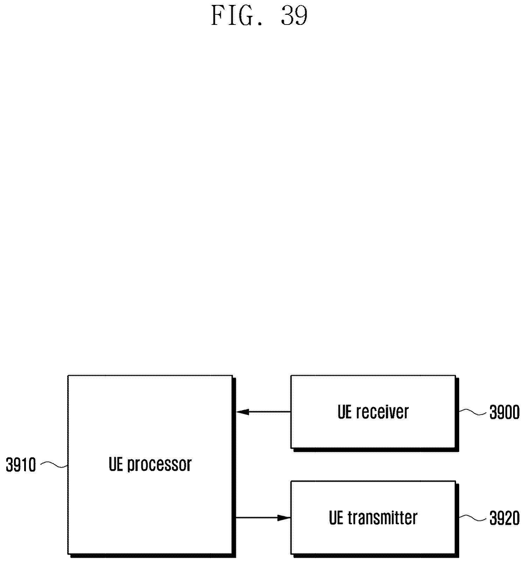

FIG. 39 is a block diagram illustrating an internal structure of a UE according to an embodiment of the disclosure.

As illustrated in FIG. 39, the UE of the disclosure may include a UE receiver 3900, a UE transmitter 3920, and a UE processor 3910. Obviously, the above example is not limiting, and the UE may include a larger or smaller number of components. In addition, the UE receiver 3900, the UE transmitter 3920, and the UE processor 3910 may be implemented in the form of a single chip.

The UE receiver 3900 and the UE transmitter 3920 as a whole may be referred to as a transceiver. The transceiver may transmit/receive signals with base stations or satellites. The signals transmitted/received by the UE may include control information and data. To this end, the transceiver may include an RF transmitter configured to up-convert and amplify the frequency of transmitted signals, an RF receiver configured to low-noise-amplify received signals and down-convert the frequency thereof, and the like. Of course, the elements of the transceiver are not limited to the RF transmitter and the RF receiver. In addition, the transceiver may receive signals through a radio channel, output the same to the UE processor 3910, and transmit signals output from the UE processor 3910 through the radio channel.

The UE processor 3910 may control a series of processes so that the UE can operate according to the above-described embodiments of the disclosure. For example, the UE receiver 3900 may receive signals from satellites or terrestrial base stations and receive signals from GNSSs, and the UE processor 3910 may transmit receive signals from base stations according to the methods set forth herein. Subsequently, the UE transmitter 3920 may transmit signals by using determined points in time. As used herein, the UE processor 3910 may be defined as a circuit, an application specific integrated circuit, or at least one processor. Obviously, the examples given below are not limiting.

According to an embodiment of the disclosure, the UE may include a memory (not illustrated). The memory may store programs and data necessary for the operation of the UE. In addition, the memory may store control information or data included in signals acquired by the UE. The memory may include storage media such as a ROM, a RAM, a hard disk, a CD-ROM, and a DVD, or a combination of storage media.

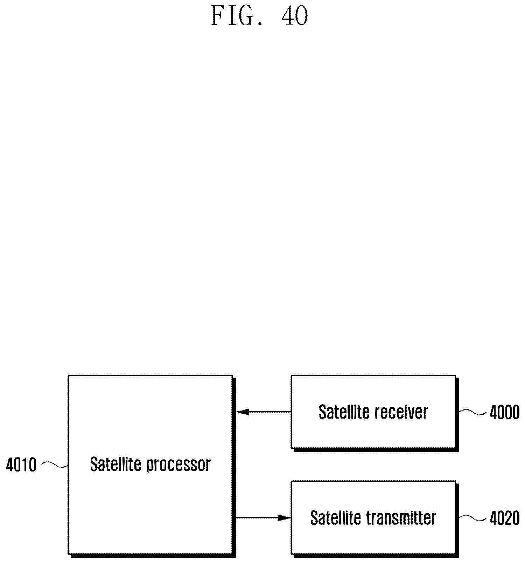

FIG. 40 is a block diagram illustrating an internal structure of a satellite according to an embodiment of the disclosure.

As shown in FIG. 40, the satellite of the disclosure may include a satellite receiver 4000, a satellite transmitter 4020, and a satellite processor 4010. A plurality of the receiver, the transmitter, and the processor may be provided. That is, a receiver and a transmitter for transmitting and receiving a signal to and from the UE and a transmitter and a receiver for transmitting and receiving a signal to and from the base station (and a receiver and a transmitter for transmitting and receiving a signal to and from another satellite) may be configured. Of course, the satellite is not limited to the above example, and the satellite may include more or fewer components. In addition, the satellite receiver 4000, the satellite transmitter 4020, and the satellite processor 4010 may be configured as a single chip.

The satellite receiver 4000 and the satellite transmitter 4020 may be collectively referred to as a satellite transceiver in an embodiment of the disclosure. The transceiver may transmit or receive a signal to or from the UE and the base station. Here, the signal may include control information and data. To this end, the transceiver may include an RF transmitter configured to up-convert and amplify the frequency of the transmitted signal, an RF receiver configured to amplify the received signal with low noise and down-convert the frequency, and the like. However, the components of the transceiver are not limited to the RF transmitter and the RF receiver. In addition, the transceiver may receive a signal through a wireless channel, output the signal to the satellite processor 4010, and transmit a signal output from the satellite processor 4010 through the wireless channel. The satellite processor 4010 may include a compensator (pre-compensator) for compensating for a frequency offset or Doppler shift and an apparatus capable of tracking locations through a GPS or the like. Further, the satellite processor 4010 may include a frequency shift function for moving a center frequency of the reception signal. The satellite processor 4010 may control a series of processes so that the satellite, the base station, and the UE operate according to the above-described embodiments of the disclosure. For example, the satellite receiver 4000 may receive a PRACH preamble from the UE and transmit an RAR according thereto to the UE again, thereby determining transmission of TA information to the base station. Thereafter, the satellite transmitter 4020 may transmit corresponding signals at a determined time point. In the disclosure, the satellite processor 4010 may be defined as a circuit or an application-specific integrated circuit or at least one processor. Of course, the disclosure is not limited to the above-described examples.

According to an embodiment of the disclosure, the satellite may include a memory (not illustrated). The memory may store programs and data necessary for the operation of the satellite. In addition, the memory may store control information or data included in signals obtained by the satellite. The memory may include a storage medium such as a ROM, a RAM, a hard disk, a CD-ROM, and a DVD, or a combination of storage media.

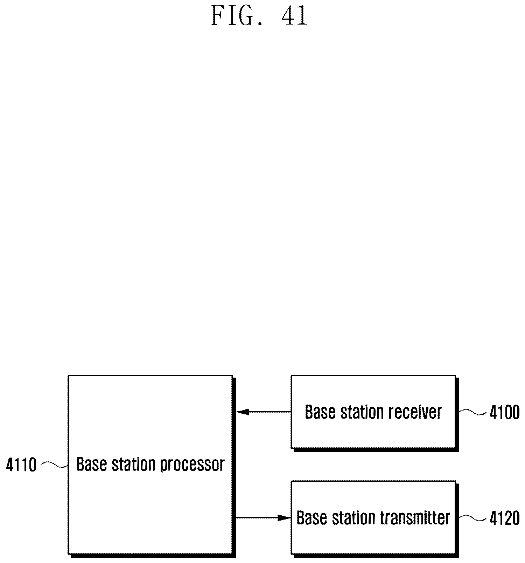

FIG. 41 is a block diagram illustrating an internal structure of a base station according to an embodiment of the disclosure.

As illustrated in FIG. 41, the base station of the disclosure may include a base station receiver 4100, a base station transmitter 4120, and a base station processor 4110. The base station may be a part of a terrestrial base station or satellite. The base station receiver 4100 and the base station transmitter 4120 as a whole may be referred to as a transceiver. The transceiver may transmit/receive signals with UEs. The signals transmitted/received with UEs, other base stations, or satellites may include control information and data. To this end, the transceiver may include an RF transmitter configured to up-convert and amplify the frequency of transmitted signals, an RF receiver configured to low-noise-amplify received signals and down-convert the frequency thereof, and the like. Of course, the elements of the transceiver are not limited to the RF transmitter and the RF receiver. In addition, the transceiver may receive signals through a radio channel, output the same to the base station processor 4110, and transmit signals output from the base station processor 4110 through the radio channel. The base station processor 4110 may control a series of processes so that the base station can operate according to the above-described embodiments of the disclosure. For example, the base station processor 4110 may transmit an RAR including TA information. As used herein, the base station processor 4110 may be defined as a circuit, an application specific integrated circuit, or at least one processor. Obviously, the above example is not limiting.

According to an embodiment of the disclosure, the base station may include a memory (not illustrated). The memory may store programs and data necessary for the operation of the base station. In addition, the memory may store control information or data included in signals acquired by the base station. The memory may include storage media such as a ROM, a RAM, a hard disk, a CD-ROM, and a DVD, or a combination of storage media.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. In addition, other variants based on the technical idea of the embodiments of the disclosure may be implemented in LTE, 5G, and other systems.

**Claims**

1. A method for a terminal in a wireless communication system, the method comprising:

   receiving, from a source base station, a radio resource control (RRC) message indicating a random access channel (RACH)-less (RACH-less) handover;
   identifying a resource for transmission of a physical uplink shared channel (PUSCH); and
   transmitting the PUSCH to a target base station in the resource for transmission of the PUSCH,
   wherein, in case that the resource for transmission of the PUSCH is allocated based on a physical downlink control channel (PDCCH), the RRC message comprises information indicating a first SS/PBCH block quasi co-located (QCLed) with a demodulation reference signal (DMRS) antenna port associated with the PDCCH.

2. The method of claim 1, wherein, in case that the resource for transmission of the PUSCH is allocated based on the PDCCH, a downlink path loss value related to PUSCH transmission power is identified based on a reference signal associated with the first SS/PBCH block.

3. The method of claim 1, wherein, in case that the resource for transmission of the PUSCH is allocated based on the RRC message, the RRC message comprises information indicating a second SS/PBCH block associated with the resource for transmission of the PUSCH.

4. The method of claim 3, wherein, in case that the resource for transmission of the PUSCH is allocated based on the RRC message, a downlink path loss value associated with PUSCH transmission power is identified based on a reference signal associated with the second SS/PBCH block.

5. A method for a source base station in a wireless communication system, the method comprising:

   transmitting a handover request message to a target base station;
   receiving a handover request accept message from the target base station; and
   transmitting a radio resource control (RRC) message indicating a random access channel (RACH)-less (RACH-less) handover to a terminal,
   wherein, in case that a resource for transmission of a physical uplink shared channel (PUSCH) of the terminal is allocated based on a physical downlink control channel (PDCCH), the RRC message comprises information indicating a first SS/PBCH block quasi co-located (QCLed) with a demodulation reference signal (DMRS) antenna port associated with the PDCCH.

6. The method of claim 5, wherein, in case that the resource for transmission of the PUSCH is allocated based on the PDCCH, a reference signal associated with the first SS/PBCH block is used for identifying a downlink path loss related to PUSCH transmission power.

7. The method of claim 5, wherein, in case that the resource for transmission of the PUSCH is allocated based on the RRC message, the RRC message comprises information indicating a second SS/PBCH block associated with the resource for transmission of the PUSCH.

8. The method of claim 5, wherein, in case that the resource for transmission of the PUSCH is allocated based on the RRC message, a reference signal associated with the second SS/PBCH block is used for identifying a downlink path loss related to PUSCH transmission power.

9. A method for a target base station in a wireless communication system, the method comprising:

   receiving a handover request message from a source base station; and
   transmitting, to the source base station, a handover request accept message related to a radio resource control (RRC) message indicating a random access channel (RACH)-less (RACH-less) handover,
   wherein, in case that a resource for transmission of a physical uplink shared channel (PUSCH) of a terminal is allocated based on a physical downlink control channel (PDCCH), the RRC message comprises information indicating a first SS/PBCH block quasi co-located (QCLed) with a demodulation reference signal (DMRS) antenna port associated with the PDCCH.

10. The method of claim 9, wherein, in case that the resource for transmission of the PUSCH is allocated based on the PDCCH, a reference signal associated with the first SS/PBCH block is used for identifying a downlink path loss related to PUSCH transmission power.

11. The method of claim 9, wherein, in case that the resource for transmission of the PUSCH is allocated based on the RRC message, the RRC message comprises information indicating a second SS/PBCH block associated with the resource for transmission of the PUSCH.

12. The method of claim 10, wherein, in case that the resource for transmission of the PUSCH is allocated based on the RRC message, a reference signal associated with the second SS/PBCH block is used for identifying a downlink path loss related to PUSCH transmission power.

13. A terminal in a wireless communication system, the terminal comprising:

a transceiver; and
a controller configured to
receive, from a source base station, a radio resource control (RRC) message indicating a random access channel (RACH)-less (RACH-less) handover,
identify a resource for transmission of a physical uplink shared channel (PUSCH), and
transmit the PUSCH to a target base station in the resource for transmission of the PUSCH,
wherein, in case that the resource for transmission of the PUSCH is allocated based on a physical downlink control channel (PDCCH), the RRC message comprises information indicating a first SS/PBCH block quasi co-located (QCLef) with a demodulation reference signal (DMRS) antenna port associated with the PDCCH.

14. A source base station in a wireless communication system, the source base station comprising:

a transceiver; and
a controller configured to
transmit a handover request message to a target base station,
receive a handover request accept message from the target base station, and
transmit a radio resource control (RRC) message indicating a random access channel (RACH)-less (RACH-less) handover to a terminal,
wherein, in case that a resource for transmission of a physical uplink shared channel (PUSCH) of the terminal is allocated based on a physical downlink control channel (PDCCH), the RRC message comprises information indicating a first SS/PBCH block quasi co-located (QCLef) with a demodulation reference signal (DMRS) antenna port associated with the PDCCH.

15. A target base station in a wireless communication system, the target base station comprising:

a transceiver; and
a controller configured to
receive a handover request message from a source base station, and
transmit, to the source base station, a handover request accept message related to a radio resource control (RRC) message indicating a random access channel (RACH)-less (RACH-less) handover,
wherein, in case that a resource for transmission of a physical uplink shared channel (PUSCH) of a terminal is allocated based on a physical downlink control channel (PDCCH), the RRC message comprises information indicating a first SS/PBCH block quasi co-located (QCLed) with a demodulation reference signal (DMRS) antenna port associated with the PDCCH.

FIG. 1

RADIO FRAME (114)

SLOT
(106)

RESOURCE ELEMENT
(112)

$N_{BW}$
SUBCARRIERS
(104)

$N_{RB}$
SUBCARRIERS
(110)

RESOURCE BLOCK
(108)

$N_{SYMB}$ OFDM SYMBOLS
(102)

# FIG. 2

| SCS | Bandwidth |
|---|---|
| 15 kHz | 3.6 MHz |
| 30 kHz | 7.2 MHz |
| 120 kHz | 28.8 MHz |
| 240 kHz | 57.6 MHz |

# FIG. 3

EP 4 723 738 A1

EP 4 723 738 A1

# FIG. 4

59

FIG. 5

EP 4 723 738 A1

# FIG. 6

# FIG. 7

EP 4 723 738 A1

701

703

705

| Transport block (TB) | CRC |

Add CRC to TB and then
divide same into multiple CBs

707    709    711    713    715

| Code block (CB) 1 | Code block (CB) 2 | ... | Code block (CB) N-1 | Code block (CB) N |

Add CRC to each CB
(717)

| Code block (CB) 1 | CRC | | Code block (CB) 2 | CRC | ... | Code block (CB) N-1 | CRC | | Code block (CB) N | CRC |

717    719    721    723

# FIG. 8

First signal
(802)

Second signal
(808)

gNB Tx/Rx

| n | n+1 | n+2 | n+3 | n+4 | n+5 | n+6 | n+7 |

UE Rx

| n | n+1 | n+2 | n+3 | n+4 | n+5 | n+6 | n+7 |

propagation delay = $T_P$
(810)

806

UE Tx

| n | n+1 | n+2 | n+3 | n+4 | n+5 | n+6 | n+7 |

Timing advance = $T_A$
(812)

UE processing time for
second signal transmission preparation
(814)

# FIG. 9

Slot index: 0 1 2 3 4 5 6 7 8 9 10 10 11 12 13 14 15 16 17 18 19 20

Initial transmission

HARQ feedback

Retransmission

FIG. 10

# FIG. 11

GEO
(1100)

36,000 km

MEO
(1110)

5000~15000 km

500~1000 km

LEO
(1130)

| Orbit type | Height | Period |
|------------|--------|--------|
| LEO | 500~1000 km | 90~120 min |
| MEO | 5000~15000 km | Approx 6 hours |
| GEO | Approx 36,000 km | Approx 24 hours |

# FIG. 12

Satellite

1200

Orbital launch

1210

1220

Ground Stations

1230

DU Farm

EP 4 723 738 A1

# FIG. 13

1300

Personal emergency service

Implement satellite -UE direction communication function in smartphone

1310

Communications on the move

Implement mobile communication service in ship and in aircraft

1320

Enterprise service

Real-time tracking/control of ships/trucks/drones without border restrictions, etc.

1330

Remote area backhauling

Implement wireless Backhaul by combining UE supporting satellite communication to base station

EP 4 723 738 A1

# FIG. 14

Noise figure: 5 dB

Thermal Noise = -119.1 dBm

Achievable SNR
-2.63 dB

LEO

Rx antenna gain
30 dBi

1,200 km

Path los
169.8 dB

- Free space path loss: 164.5 dB
- Atmospheric path loss: 0.1 dB
- Shadowing margin: 3 dB
- Scintillation loss: 2.2 dB
- Additional loss: 0 dB

EIRP: 23 dBm

- Case: LEO 1200, uplink

| Freq [GHz] | 2 |
|---|---|
| bandwidth [MHz] | 0.36 |
| SNR [dB] | -2.63 |
| SIR [dB] | 2.0 |
| SINR [dB] | -3.92 |
| MCS index | 2 |
| required repetition | 0 |
| TBS [bits] | 56 |
| TTI [ms] | 0.5 |
| approx. throughput | 112 kbps |

EP 4 723 738 A1

# FIG. 15

Noise figure: 7.7 dB

Thermal Noise = −118.78 dBm

Achievable SNR
−10.8 dB

GEO

Rx antenna gain
51 dBi

35,786 km

Path los
195.9 dB
- Free space path loss: 190.6 dB
- Atmospheric path loss: 0.1 dB
- Shadowing margin: 3 dB
- Scintillation loss: 2.2 dB
- Additional loss: 0 dB

EIRP: 23 dBm

- Case: GEO, uplink

| | |
|---|---|
| Freq [GHz] | 2 |
| bandwidth [MHz] | 0.36 |
| SNR [dB] | −10.8 |
| SIR [dB] | 2.0 |
| SINR [dB] | −11 |
| gap to MCS [dB] | 4.8 |
| required repetition | 3.0 |
| TBS [bits] | 32 |
| TTI [ms] | 1.5 |
| approx. throughput | 21 kbps |

EP 4 723 738 A1

# FIG. 16

- Link budget between UE and satellite

  - Path loss : [1600]
    $FSPL (d,f_c) = 32.45 + 20 \log_{10} (f_c) + 20 \log_{10} (d)$

  - Rx antenna gain for UL : 24 dBi (LEO), 45.5 dBi (GEO)

- Link budget between UE and terrestrial gNB

  - Path loss (LOS) : [1610]
    $PL_2 = 28.0 + 40 \log_{10} (d_{3D}) + 20 \log_{10} (f_c) - 9 \log_{10} ((d'_{BP})^2 + (h_{BS} - h_{UT})^2)$

  - Path loss (NLOS) : [1620]
    $PL'_{UMa-NLOS} = 13.54 + 39.08 \log_{10} (d_{3D}) + 20 \log_{10} (f_c) - 0.6 (h_{UT} - 1.5)$

  - Rx antenna gain for UL : ~12 dBi

FIG. 17

Doppler shift $= f_c \dfrac{v}{c} \cos \alpha$

$$f_c \frac{v}{c} \cos \alpha = f_c \frac{v}{c} \frac{\sin \beta}{\sqrt{1+r^2 - 2r \cos\beta}} \; , \qquad r = \frac{R+h}{R}$$

$f_c = 2$ GHz
UE speed $= 0$

2000 km
1200 km
1000 km
700 km
600 km

Doppler shift [kHz]

$\theta$ , elevation (degree)

# FIG. 18

# FIG. 19

• Doppler shift within a beam footprint

1900

UE1

1910

UE2

d

R

$\triangle\beta$   $\beta$

$\alpha$   $\alpha$`

r

v

$\triangle\beta = \dfrac{d}{R}$ (rad)     $r = \dfrac{R+h}{R}$

UE1`s Doppler shift $= f_c \dfrac{v}{c} \cos\alpha = f_c \dfrac{v}{c} \dfrac{\sin\beta}{\sqrt{1+r^2 - 2r\cos\beta}}$

UE2`s Doppler shift $= f_c \dfrac{v}{c} \cos\alpha` = f_c \dfrac{v}{c} \dfrac{\sin[\beta+\triangle\beta]}{\sqrt{1+r^2 - 2r\cos[\beta+\triangle\beta]}}$

Doppler shift [kHz]

50

0

-50

0   45   90   135   180

$\theta$, elevation of UE1 (degree)

--- UE1
— UE2

$f_c$ = 2 GHz
h = 700 km
d = 50 km (cell size)
UE speed = 0
Max $\triangle$Doppler = 3.57 kHz

EP 4 723 738 A1

FIG. 20

$f_C = 2 \text{ GHz}$

$f_C = 700 \text{ MHz}$

EP 4 723 738 A1

FIG. 21

EP 4 723 738 A1

FIG. 22

# FIG. 23

2300

2310

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |

2320

FIG. 24

EP 4 723 738 A1

- Period can be 20, 10, 5, 3~4, 2, 1 ma. (configured as index)
- Frequency offset is configured

- ra-ResponseWindowSize from 2 to 10 ms
- From PRACH + 3ms

# FIG. 25

Period can be 1, 2, 4, 5, 8, 10, 16, 20 ..., 2560 slots

Type-1 CSS
PDCCH

PRACH
resource

RAR (with RA-RANTI)    2520

PRACH    2500

2510

- ra-ResponseWindowSize from 2 to 10 ms
- From the first PDCCH after PRACH

- Period can be 160, 80, 40, 20, 10, 5, 3~4, 2, 1
  ms. (configured as index)
- Frequency offset is configured

FIG. 26

| Downlink frame i |
|---|

| Uplink frame i |
|---|

$(N_{TA} + N_{TA, offset}) T_C$

# FIG. 27

orbital inclination

Earth's rotation

satellite orbit

Ground station / DU

EP 4 723 738 A1

FIG. 28

2830
Ka-band antennas
(Inter-satellite link)

2800
Solar Array

2810
Main mission antennas
(L-band)

Ka-band antennas
(Feeder link)

2820

FIG. 29

EP 4 723 738 A1

gNB ————————————————————————————→ t

| PRACH preamble $[N_{TA}=0]$ | RAR Indicate $N_{TA}$ | PUSCH $[N_{TA}=A]$ | MAC CE Indicate $\triangle N_{TA}$ | PUSCH $[N_{TA}= A +\triangle N_{TA}]$ |

UE ————————————————————————————→ t

# FIG. 30

| Satellite info. & $N_{TA}$, common, Drift rate | PRACH preamble [$N_{TA}=0$] $N_{TA}$, UE-specific + $N_{TA}$, common | RAR Indicate $N_{TA}$ | PUSCH [$N_{TA}=A$] | MAC CE Indicate $\triangle N_{TA}$ | PUSCH [$N_{TA}= A +\triangle N_{TA}$] |

gNB   → t

UE   → t

Update
$N_{TA}$, UE-specific
$N_{TA}$, common

Update
$N_{TA}$, UE-specific
$N_{TA}$, common

# FIG. 31

```
              Start
                │
                ▼
          Detect SSB                    ── 3111
                │
                ▼
          Decode SIBs                   ── 3113
                │
                ▼
     Decode satellite information       ── 3115
                │
                ▼
      Decode common TA offset           ── 3117
                │
                ▼
    Apply TAs and transmit PRACH        ── 3119
                │
                ▼
   Receive RAR including TA value        ── 3121
                │
                ▼
     Adjust TA based on RAR             ── 3123
                │
                ▼
    Apply TA and transmit msg3          ── 3125
                │
                ▼
 Receive MAC CE including TA adjustment value  ── 3127
                │
                ▼
 Apply TA and transmit PUSCH/PUCCH      ── 3129
                │
                ▼
              End
```

# FIG. 32

```
              ┌─────────────┐
              │    Start    │
              └──────┬──────┘
                     │
                     ▼
      ┌────────────────────────────┐
      │         Detect SSB         │ ～3211
      └──────────────┬─────────────┘
                     │
                     ▼
      ┌────────────────────────────┐
      │        Decode SIBs         │ ～3213
      └──────────────┬─────────────┘
                     │
                     ▼
      ┌────────────────────────────┐
      │  Decode satellite information │ ～3215
      └──────────────┬─────────────┘
                     │
                     ▼
      ┌────────────────────────────┐
      │    Decode common TA offset  │ ～3217
      └──────────────┬─────────────┘
                     │
                     ▼
      ┌────────────────────────────┐
      │   Apply TAs and transmit msg3 │ ～3219
      └──────────────┬─────────────┘
                     │
                     ▼
      ┌────────────────────────────┐
      │ Receive msgB including TA value │ ～3221
      └──────────────┬─────────────┘
                     │
                     ▼
      ┌────────────────────────────┐
      │   Adjust TA based on msgB   │ ～3223
      └──────────────┬─────────────┘
                     │
                     ▼
      ┌────────────────────────────┐
      │ Apply TA and transmit PUSCH/PUCCH │ ～3225
      └──────────────┬─────────────┘
                     │
                     ▼
              ┌─────────────┐
              │     End     │
              └─────────────┘
```

# FIG. 33

```
        ╭─────────────────────────╮
        │      Start base station     │
        │ operation for TA value report │
        ╰─────────────────────────╯
                     │
                     ▼
┌─────────────────────────────────────────┐
│ Configure TA report resource through higher signaling │── 3300
└─────────────────────────────────────────┘
                     │
                     ▼
┌─────────────────────────────────────────┐
│              Trigger TA report              │── 3310
└─────────────────────────────────────────┘
                     │
                     ▼
┌─────────────────────────────────────────┐
│       Receive TA report in allocated resource      │── 3320
└─────────────────────────────────────────┘
                     │
                     ▼
        ╭─────────────────────────╮
        │       End base station       │
        │ operation for TA value report │
        ╰─────────────────────────╯
```

FIG. 34

Start UE operation for
TA value report

↓

Receive TA report resource configuration
through higher signaling — 3400

↓

Receive TA report trigger signal — 3410

↓

Transmit TA report in allocated resource — 3420

↓

End UE operation for
TA value report

# FIG. 35

Horizon

d

θ

Altitude  6371 km

| Terrestrial network | ▢ ⇄ 📡  ~100 km | RTT = ~0.67 ms |
| Satellite network | ▢ → 🛰 → 📡  Low-earth orbit (LEO) satellite : ~2,000 km | |

| Satellite altitude 700 km | | | | | |
|---|---|---|---|---|---|
| Elevation angle  θ | 0° | 45° | 90° | 135° | 180° |
| UE-satellite Distance, d | 3069 km | 945 km | 700 km | 945 km | 3069 km |
| UE-base station Radio RTT | 40.9 ms | 12.6 ms | 9.3 ms | 12.6 ms | 40.9 ms |

· Assuming UE-satellite distance and satellite-station distance are same
· UE-station round-trip delay time =2× UE-satellite round-trip delay time

FIG. 36

```
            ┌─────────────┐
            │    Start     │
            └──────┬──────┘
                   │
                   ▼
   ┌──────────────────────────────────────┐
   │ Attempt to access terrestrial network and │ ── 3600
   │      determine inaccessibility           │
   └──────────────────┬───────────────────┘
                      │
                      ▼
   ┌──────────────────────────────────────┐
   │  Determine requirement condition for     │ ── 3610
   │       satellite network access           │
   └──────────────────┬───────────────────┘
                      │
                      ▼
   ┌──────────────────────────────────────┐
   │     Attempt to access satellite network  │ ── 3620
   └──────────────────┬───────────────────┘
                      │
                      ▼
   ┌──────────────────────────────────────┐
   │      Access satellite network and        │ ── 3630
   │       then perform communication         │
   └──────────────────┬───────────────────┘
                      │
                      ▼
            ┌─────────────┐
            │     End      │
            └─────────────┘
```

# FIG. 37

| UE | Source gNB | Target gNB |
|---|---|---|

3710 — Handover decision

XnAP Handover Request message
Handover preparation information

Admit handover

Resource allocation

3720
RRC flow

Handover Request Acknowledge message
transparent container to be sent to the UE

RRC reconfiguration information required to
access the target cell

SN STATUS TRANSFER message

3730 — RACH

3740 — RRC reconfiguration complete

# FIG. 38

# FIG. 39

3910 — UE processor

UE receiver — 3900

UE transmitter — 3920

FIG. 40

Satellite receiver — 4000

4010 — Satellite processor

Satellite transmitter — 4020

FIG. 41

4110 — Base station processor

Base station receiver — 4100

Base station transmitter — 4120

## INTERNATIONAL SEARCH REPORT

| International application No. |
| --- |
| **PCT/KR2024/006319** |

**A. CLASSIFICATION OF SUBJECT MATTER**

**H04W 36/08**(2009.01)i; **H04W 36/00**(2009.01)i; **H04W 84/04**(2009.01)i

According to International Patent Classification (IPC) or to both national classification and IPC

**B. FIELDS SEARCHED**

Minimum documentation searched (classification system followed by classification symbols)

H04W 36/08(2009.01); H04B 7/06(2006.01); H04W 52/24(2009.01); H04W 52/40(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN(non-terrestrial network), RACH-less, handover, request, accept, RRC, PUSCH, PDCCH, DMRS, QCL, SS/PBCH, SSB

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2017-196125 A2 (LG ELECTRONICS INC.) 16 November 2017 (2017-11-16)<br>See paragraphs [0041]-[0131]; and figures 5a and 7. | 1,5,9,13-15 |
| A | | 2-4,6-8,10-12 |
| Y | KR 10-2018-0089901 A (LG ELECTRONICS INC.) 09 August 2018 (2018-08-09)<br>See paragraphs [0009]-[0489]. | 1,5,9,13-15 |
| A | APPLE. NTN specific handover enhancement. R2-2303418, 3GPP TSG-RAN WG2 Meeting #121bis-e, E-meeting. 07 April 2023.<br>See section 2. | 1-15 |
| A | QUALCOMM INCORPORATED. RACH-less handover for NTN. R2-2303038, 3GPP TSG-RAN WG2 Meeting #121-bis, E-Meeting. 07 April 2023.<br>See section 2. | 1-15 |
| A | APPLE. RACH-less handover in mobile IAB. R2-2303380, 3GPP TSG RAN WG2 Meeting #121b-e, E-Conference. 07 April 2023.<br>See section 2. | 1-15 |

☐ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 August 2024** | **20 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006319**

| Patent document cited in search report | | | Publication date (day/month/year) | Patent family member(s) | | | Publication date (day/month/year) |
|---|---|---|---|---|---|---|---|
| WO | 2017-196125 | A2 | 16 November 2017 | WO | 2017-196125 | A3 | 09 August 2018 |
| KR | 10-2018-0089901 | A | 09 August 2018 | CN | 109565432 | A | 02 April 2019 |
| | | | | CN | 109565432 | B | 03 December 2021 |
| | | | | EP | 3471318 | A1 | 17 April 2019 |
| | | | | EP | 3471318 | B1 | 27 October 2021 |
| | | | | EP | 3944549 | A1 | 26 January 2022 |
| | | | | EP | 3944549 | B1 | 07 December 2022 |
| | | | | EP | 4149043 | A1 | 15 March 2023 |
| | | | | EP | 4210269 | A1 | 12 July 2023 |
| | | | | JP | 2020-506585 | A | 27 February 2020 |
| | | | | JP | 6844006 | B2 | 17 March 2021 |
| | | | | KR | 10-1921710 | B1 | 13 February 2019 |
| | | | | US | 10944450 | B2 | 09 March 2021 |
| | | | | US | 11509358 | B2 | 22 November 2022 |
| | | | | US | 2019-0379431 | A1 | 12 December 2019 |
| | | | | US | 2021-0126677 | A1 | 29 April 2021 |
| | | | | US | 2023-0048837 | A1 | 16 February 2023 |
| | | | | WO | 2018-128410 | A1 | 12 July 2018 |

Form PCT/ISA/210 (patent family annex) (July 2022)